# EUROPÄISCHE PATENTSCHRIFT

(11) **EP 4 486 580 B1**
(45) Veröffentlichungstag und Bekanntmachung des Hinweises auf die Patenterteilung: **26.08.2026**
(21) Anmeldenummer: 23707026.3
(22) Anmeldetag: 20.02.2023
(51) Int. Cl.: B60G 17/052

(54) **VERFAHREN ZUM BETREIBEN EINES PNEUMATIKSYSTEMS**
METHOD FOR OPERATING A PNEUMATIC SYSTEM
PROCÉDÉ DE FONCTIONNEMENT D'UN SYSTÈME PNEUMATIQUE

(30) Priorität: 01.03.2022 DE 102022104826
(43) Veröffentlichungstag der Anmeldung: 08.01.2025
(73) Patentinhaber: ZF CV Systems Europe BV, 1170 Brüssel (BE)
(72) Erfinder: BORMANN, Dirk, 31139 Hildesheim (DE); SEEGER, Marco, 30855 Langenhagen (DE); STABENOW, Uwe, 30880 Laatzen (DE)
(74) Vertreter: Rabe, Dirk-Heinrich
(86) Internationale Anmeldenummer: PCT/EP2023/054165
(87) Internationale Veröffentlichungsnummer: WO 2023/165832

(56) Entgegenhaltungen:
- EP-B1- 3 863 870
- DE-A1- 10 004 880
- DE-A1- 10 120 220
- DE-A1- 102012 006 382
- DE-A1- 102016 123 201
- DE-A1- 102017 010 772
- JP-A- 2009 046 027
- US-A- 4 799 707
- US-A1- 2008 290 617

## Beschreibung

Die Erfindung betrifft ein Verfahren gemäß dem Oberbegriff des Anspruchs 1 zum Betreiben eines Pneumatiksystems aufweisend eine Druckluftversorgungsanlage und eine mit der Druckluftversorgungsanlage pneumatisch verbundene Luftfederanlage mit Luftfedern, für ein Fahrzeug.

Die Komponenten einer Druckluftversorgungsanlage stehen so miteinander in Verbindung, dass durch Steuern der Druckluftversorgungsanlage mit einem Steuergerät Luft von einem Verdichter, insbesondere einem Kompressor, aus der Umgebung angesaugt, die angesaugte Luft von einem Lufttrockner getrocknet und die trockene Druckluft über ein Luftverteilermodul in ein Druckluftreservoir und/oder in die Luftfedern geleitet werden kann. Ein Drucksensor ist angeordnet und ausgebildet, die Höhe des Druckes in dem Luftverteilermodul zu messen und ein die Höhe des gemessenen Druckes repräsentierendes Drucksensorsignal an das Steuergerät bereitzustellen. Das Steuergerät kann eine Regelung der Druckluftversorgungsanlage auf Basis des gemessenen Druckes anpassen.

Durch Befüllen der Luftfedern kann ein Fahrzeug relativ zu dem Untergrund angehoben werden. Wenn Druckluft aus den Luftfedern in die umgebende Atmosphäre oder in das Druckluftreservoir geleitet wird, kann das Fahrzeug relativ zu dem Untergrund abgesenkt werden.

Es ist oftmals gewünscht, dass ein Fahrzeug relativ schnell angehoben und wieder gesenkt werden kann. Insbesondere bei Geländefahrzeugen und Sport Utility Vehicles (SUV) ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Dafür sind entsprechend hohe Drücke in der Druckluftversorgungsanlage notwendig. Die Anforderungen an eine elektronisch geregelte Luftfederung (*Electronically Controlled Air Suspension,* kurz ECAS) für ein Fahrzeug umfasst daher regelmäßig hohe Einlass- und Auslassluftströme verbunden mit hohe Drücken in der Druckluftversorgungsanlage.

Hohe Drücke in der Druckluftversorgungsanlage bringen jedoch mit sich, dass es beim Entlüften der Druckluftversorgungsanlage zu einem hohen Geräuschpegel kommen kann, was auch als Ablassknall bezeichnet wird. Diese Geräusche sind von einem Nutzer eines Fahrzeugs in der Regel nicht gewünscht und werden daher herstellerseitig, z.B. durch Verwenden von Schalldämpfern (engl. *silencers*)*,* reduziert. In Fahrzeugen werden somit regelmäßig zusätzliche Komponenten verbaut, die dazu dienen, einen Geräuschpegel beim Entlüften der Druckluftversorgungsanlage möglichst gering zu halten.

Unter anderem um den Einsatz weiterer Komponenten wie Schalldämpfern in dem Fahrzeug zu reduzieren, wurde vorgeschlagen, einen Geräuschpegel zu reduzieren beim Entlüften der Druckluftversorgungsanlage durch eine geeignete Regelung der Druckluftversorgungsanlage zum Entlüften.

Eine Regelung einer Druckluftversorgungsanlage zum Entlüften aus einem Luftfedersystem ist beispielsweise in WO 2008/147850 A1 beschrieben. Demgemäß soll zur Geräuschreduzierung beim Entlüften eines Gasfederungssystems zunächst die Luftfederventile geöffnet und somit die Luftfedern mit Druckluft beaufschlagt werden. Es soll dann gewartet werden, bis sich ein Gleichgewichtsdruck in dem System einstellt, der vergleichsweise geringer ist. Erst wenn sich der Gleichgewichtsdruck in dem System eingestellt hat, wird das Auslassventil geöffnet und das Gasfederungssystem entlüftet. Das Entlüften soll dann bei einem reduzierten Druck erfolgen.

In DE 10 2016 123 201 A1 ist beschrieben, dass zum Entlüften eines Kompressors in zumindest zwei Verfahrensschritten komprimierte Luft des Kompressors in zumindest eine Luftfeder einer Luftfederanlage geleitet und nachfolgend in die Umgebung entlüftet wird. Es wird hierzu vorgeschlagen, dass das Entlüften insbesondere bei Anliegen eines Maximaldrucks beginnt. Vorgeblich kann dann beim Entlüften in die Umgebung eine reduzierte Druckdifferenz, beispielsweise ca. 8 bar statt ca. 18 bar, anliegen. Dies soll den Vorteil haben, dass ein Entlüften in die Umgebung mit einem deutlich geringeren Geräusch verursacht durch den reduzierten Ablassschlag möglich ist.

Die DE 100 04 880 A1 betrifft ein Luftfedersystem für ein Kraftfahrzeug mit einer Kompressoreinheit, einer Speichereinheit sowie Schaltventilen, über die die einzelnen Luftfedern der einzelnen Fahrzeugräder mit Druckluft versorgt werden, wobei zwischen der Kompressoreinheit und den Schaltventilen eine in der Atmosphäre mündende, durch ein Sperrventil absperrbare oder freischaltbare Entlüftungsleitung vorgesehen ist, wobei durch Maßnahmen, mit Hilfe derer der über die freigeschaltete Entlüftungsleitung in einem gewissen Zeitintervall austretende Luftmassenstrom gegenüber einem unbegrenzten Zustand beschränkbar ist.

Die JP2009046027A betrifft die Bereitstellung eines energiesparenden und kostengünstigen Luftkreislaufs in einem Fahrzeug, der in der Lage ist, die Montageleistung eines Fahrzeugs zu verbessern. Bei dem Luftkreis zum Zu- und Abführen von Druckluft zu einer Luftfeder, die zwischen einem Fahrzeugaufbau und einer Achse angeordnet ist, ist eine Schleifleitung, die einen Kompressor, eine Ablassleitung und eine Saugseite des Kompressors verbindet.

Die US4799707A betrifft eine Gasfederung zur Steuerung einer Aufbaulage eines Fahrzeugs, wobei ein Regler einen Kompressor und Steuerventile zur Versorgung eines Hochdruckvorratsbehälters mit Druckluft ansteuert. Nachdem dem Hochdruckreservebehälter genügend Luft zugeführt wurde, wird der Kompressor stillgesetzt und die Steuerventile werden geschlossen, wodurch Hochdruckluft am Druckanschluss des Kompressors verbleibt. Dann wird ein speziell vorgesehenes Verbindungssteuerventil für eine vorbestimmte Zeitdauer geöffnet, um die Förderöffnung des Kompressors mit einem Niederdruckreservebehälter in Verbindung zu bringen. Der Druck am Druckanschluss kann somit reduziert werden, wodurch weniger Drehmoment erforderlich ist, um den Kompressor zu starten.

Die EP 3 863 870 A1 offenbart ein Verfahren zum Entlüften eines pneumatischen Systems eines Fahrzeugs, eines pneumatischen Systems und eines Fahrzeugs, wobei das pneumatische System einen Luftkompressor, eine pneumatische Schaltung, ein Luftdruckmanagementsystem in Verbindung mit dem Luftkompressor und der pneumatischen Schaltung, und eine Steuereinheit umfasst, wobei wenn ein Druck im pneumatischen Kreis den Abschaltdruck erreicht, der Druck im pneumatischen Kreis auf einen Zieldruck abgesenkt wird und wobei der Luftkompressor bei mindestens einer Entleerungsgeschwindigkeit betrieben wird.

Die DE 101 20 220 A1 beschreibt eine Luftversorgungsanlage für ein Fahrzeug-Luftfedersystem, wobei die Luft beim System-Entlüften nach dem Durchströmen des Trockners ohne wesentliche Umlenkung in die Umgebung oder das Gehäuse des Kompressors geführt wird.

Die DE 10 2017 010 772 A1 betrifft eine Druckluftversorgungsanlage mit einem Niederdruckspeicher und einem Hochdruckspeicher zum Betreiben einer Pneumatikanlage eines Fahrzeugs, insbesondere zur Versorgung einer Luftfederanlage eines Fahrzeugs mit Druckluft.

Diese Ansätze sind noch verbesserungsfähig. Insbesondere ist es wünschenswert, beim Entlüften ein vergleichsweise geringes Entlüftungsgeräusch ohne Beeinträchtigung der Funktionalität des Pneumatiksystems beim Entlüften zu gewährleisten.

Der Erfindung liegt die Aufgabe zugrunde, ein verbessertes oder zumindest alternatives Verfahren zum Betreiben eines Pneumatiksystems bereitzustellen. Der Erfindung liegt insbesondere die Aufgabe zugrunde, ein Verfahren zum Betreiben eines Pneumatiksystems bereitzustellen, das die Probleme des Standes der Technik vermeidet oder wenigstens mindert.

Vorzugsweise soll mit der Erfindung ein Verfahren zum Betreiben eines Pneumatiksystem bereitgestellt werden, bei dem ein vergleichsweise geringes Entlüftungsgeräusch ohne eine übermäßige Beeinträchtigung der Funktionalität des Pneumatiksystems beim Entlüften gewährleistet ist. Vorzugsweise soll beim Entlüften ein zu großer Überdruck in dem Lufttrockner effizient vermieden und bevorzugt innerhalb kurzer Zeit reduziert werden. Dies betrifft insbesondere einen Überdruck oberhalb 12 bar oder zwischen 12 bar und 18 bar oder darüber.

Der Erfindung liegt insbesondere die Aufgabe zugrunde, ein Verfahren anzugeben, mit dem ein effizientes Druckmanagement von hohen Drücken insbesondere im Lufttrockner bereitgestellt bzw. ermöglicht ist. Das bevorzugte Druckmanagement sollte sich dabei möglichst nicht oder nur begrenzt oder zumutbar bis kaum auf die Fahreigenschaften eines Fahrzeugs auswirken.

Diese Aufgabe wird durch ein Verfahren des Anspruchs 1 gelöst.

Es wird ein Verfahren zum Betreiben eines Pneumatiksystems umfassend eine Druckluftversorgungsanlage und eine mit der Druckluftversorgungsanlage pneumatisch verbundene Luftfederanlage mit Luftfedern für ein Fahrzeug, insbesondere für einen Personenkraftwagen, vorgeschlagen.

Die Druckluftversorgungsanlage weist eine Pneumatikhauptleitung und einen Lufttrockner in der Pneumatikhauptleitung, auf und die Pneumatikhauptleitung weist einen Verdichteranschluss zu einem Verdichter, und einen Druckluftversorgungsanschluss zu einem Luftverteilermodul auf.

Die Luftfederanlage des Pneumatiksystems weist eine Anzahl Luftfedern auf, die über eine Gallerie der Luftfederanlage pneumatisch verbunden sind.

Die Luftfederanlage des Pneumatiksystems weist in einer ersten erfindungsgemäßen Variante das Luftverteilermodul auf**.** In einer alternativen erfindungsgemäßen Variante ist das Luftverteilermodul Bestandteil der Druckluftversorgungsanlage.

Der Verdichter der Druckluftversorgungsanlage kann beispielsweise als Kompressor ausgeführt sein.

Das Pneumatiksystem weist ein Steuergerät zum Steuern der Druckluftversorgungsanlage und der Luftfederanlage auf.

In dem Verfahren stellt der Lufttrockner und das Luftverteilermodul ein Überdruckvolumen dar.

In dem Verfahren weist das Überdruckvolumen zunächst einen Druck auf, insbesondere nach einem Befüllschritt der Druckluftversorgungsanlage, der größer ist, als ein Druck in einem übrigen Teil der Druckluftversorgungsanlage, insbesondere als ein Druck in einem Ausgleichsvolumen, nämlich in einem Ausgleichsvolumen, aufweisend wenigstens eine Luftfeder und einen Zwischenspeicher.

Dabei ist erfindungsgemäß vorgesehen, dass in dem Verfahren zur Druckreduzierung in dem Überdruckvolumen, nämlich in dem Lufttrockner und/oder dem Luftverteilermodul, Druckluft aus dem Überdruckvolumen in das Ausgleichsvolumen abgeführt wird unter Druckreduzierung in dem Überdruckvolumen, nämlich unter Druckreduzierung in dem Lufttrockner und unter Druckreduzierung in dem Luftverteilermodul, wobei Druckluft in eine erste Luftfeder der Luftfederanlage und in den Zwischenspeicher abgeführt wird.

Wenn der Zwischenspeicher in einem letzten Verfahrensschritt insbesondere nach einem Befüllen der Luftfedern mit Druckluft aus dem Überdruckvolumen befüllt wird, kann das Druckniveau für den Entlüftungsvorgang vergleichsweise weiter abgesenkt werden, insbesondere unter das Druckniveau der Luftfedern. Dadurch kann die Druckluftversorgungsanlage bei einem vergleichsweise geringeren Ablassgeräuschpegel entlüftet werden.

Der Zwischenspeicher kann aber auch in einem ersten Verfahrensschritt insbesondere vor einem Befüllen der Luftfedern mit Druckluft aus dem Überdruckvolumen befüllt werden. Dies hat den Vorteil, dass eine Auswirkung auf mögliche Niveau-Höhenänderungen eines Fahrzeugs durch Befüllen der Luftfedern mit Druckluft aus dem Überdruckvolumen vergleichsweise reduziert werden kann.

Die Erfindung beruht auf der Erkenntnis, dass hohe Drücke innerhalb einer Druckluftversorgungsanlage notwendig sind, um die Anforderungen nach kurzen Reaktionszeiten der Druckluftversorgungsanlage zu erfüllen. Jedoch gilt in der Regel: je höher der Druck desto höher der Geräuschpegel beim Entlüften der Druckluftversorgungsanlage. Ein hoher Geräuschpegel wird zudem zusätzlich durch einen vergleichsweise großen Querschnitt des Auslasses begünstigt, der notwendig ist, um eine hohe Effizient des Lufttrockners sicherzustellen.

Die Erfindung beruht weiterhin auf den Überlegungen, dass Schalldämpfer oftmals vergleichsweise groß ausgelegt sein müssen, um effektiv den Geräuschpegel am Auslass zu senken. Große Schalldämpfer sind aufgrund ihrer Größe aber oftmals nur schwer in ein Fahrzeug zu integrieren und verursachen zudem zusätzliche Kosten. Auch eine Lösung, die die Verwendung von zwei Auslässen mit jeweils vergleichsweise kleineren Querschnitten umfasst, ist denkbar um den Geräuschpegel am Auslass zu senken. Jedoch ist diese Lösung vergleichsweise aufwendig und kostenintensiv.

Die Erfindung beruht auf der weiteren Erkenntnis, dass insbesondere die Drücke in dem Lufttrockner und/oder dem Luftverteilermodul kritisch für den Geräuschpegel am Auslass sind und oftmals bis zu 18 bar betragen können. Dagegen ist der Druck im Druckluftreservoir oftmals nicht kritisch und kann währen des Betriebs eines Fahrzeugs z.B. bei hoher Geschwindigkeit und ohnehin entsprechend hohem Geräuschpegel in der Umgebung reduziert werden.

Insbesondere die Drücke in dem Lufttrockner und/oder dem Luftverteilermodul sind für den Geräuschpegel am Auslass kritisch, die zwischen 12 bar und 18 bar liegen. Insbesondere bei Drücken unterhalb von 12 bar kann es unter Umständen ausreichen die Druckluftversorgungsanlage zu entlüften, ohne dass vorher der Druck in der Druckluftversorgungsanlage z.B. durch beaufschlagen der Luftfedern mit Druckluft, reduziert wird. Beispielweise können zum Entlüften von Drücken unterhalb von 12 bar herkömmliche Schalldämpfer vorgesehen sein, die vergleichsweise klein sind aber ausreichen, um den Geräuschpegel am Auslass bei diesem Druck ausreichend zu senken.

Die Erfindung beruht außerdem auf der Überlegung, dass ein Senken des Druckes in der Druckluftversorgungsanlage durch Anpassen der Regelung der Druckluftversorgungsanlage so erzielt werden kann, dass ein Geräuschpegel am Auslass beim Entlüften der Druckluftversorgungsanlage deutlich reduziert wird. Durch eine geeignete Regelung der Druckluftversorgungsanlage ist es daher nicht notwendig zusätzliche, vergleichsweise groß-dimensionierte Schalldämpfer in dem Fahrzeug einzusetzen.

Wenn jedoch die Druckluftversorgungsanlage so geregelt wird, dass eine oder mehrere Luftfedern mit einem Mal mit so viel Druckluft beaufschlagt werden, dass der Druck an dem Auslass und damit der Geräuschpegel beim Entlüften ausreichend reduziert wird, kann sich dies negativ auf die Fahreigenschaften auswirken und für einen Fahrer spürbar sein. Zum Beispiel kann das Fahrzeug durch beaufschlagen der Luftfedern mit einem Mal mit so viel Druckluft beaufschlagt werden, dass ein Fahrer merkt wie das Fahrzeug relativ zu einem Untergrund angehoben wird. Auch während einer Fahrt mit einem Fahrzeug kann ein Befüllen oder Entlüften der Luftfedern mit einer vergleichsweise großen Druckluftmenge für einen Fahrer spürbar sein und beim Fahren z.B. zu Verunsicherung sorgen. Ein spürbares Ändern Fahreigenschaften eines Fahrzeugs kann somit auch ein Sicherheitsrisiko darstellen.

Deshalb ist in dem erfindungsgemäßen Verfahren vorgesehen, dass Druckluft abgeführt wird entweder in eine erste Luftfeder der Luftfederanlage und zusätzlich in den Zwischenspeicher, um den Druck in dem Überdruckvolumen zu reduzieren.

Wenn zusätzlich zu den Luftfedern Druckluft in den Zwischenspeicher abgeführt wird, kann der Druck in dem Überdruckvolumen vergleichsweise noch weiter abgesenkt werden. Insbesondere ist es so möglich, den Druck in dem Überdruckvolumen unter das Druckniveau der Luftfedern abzusenken.

Ein Abführen von Druckluft in den Zwischenspeicher kann insbesondere als letzter Verfahrensschritt unmittelbar vor einem Entlüften von Druckluft aus dem Überdruckvolumen in die umgebende Atmosphäre durchgeführt werden. In diesem Fall werden bevorzugt zunächst die Luftfedern und anschließend der Zwischenspeicher mit Druckluft beaufschlagt. Dies ermöglich es, das Druckniveau am Auslass noch weiter zu reduzieren und die Druckluftversorgungsanlage bei einem noch geringeren Geräuschpegel zu entlüften.

In dem Verfahren kann Druckluft aber auch zunächst in den Zwischenspeicher abgeführt werden. Das Befüllen des Zwischenspeicher findet also vor dem Befüllen der Luftfedern statt. Nach dem Befüllen des Zwischenspeichers kann die verbleibende Druckluft aus dem Überdruckvolumen auf eine oder mehrere der Luftfedern verteilt werden. Dies hat den Vorteil, dass sich die Druckreduzierung in dem Überdruckvolumen nicht oder nur kaum auf die Fahreigenschaften eines Fahrzeugs auswirken kann. Insbesondere kann so ein Anheben des Fahrzeugs aufgrund der Beaufschlagung der Luftfedern mit Druckluft verringert werden. Dies ist möglich, da der Druck in dem Überdruckvolumen bereits durch Befüllen des Zwischenspeichers reduziert wurde. Es muss dann nur noch die restliche Druckluft auf die Luftfedern verteilt werden.

In einer bevorzugten Variante des Verfahrens umfasst das Ausgleichsvolumen die erste Luftfeder und der Zwischenspeicher eine zweite Luftfeder . In dieser Variante wird Druckluft vorzugsweise zeitlich nacheinander einzeln in die erste Luftfeder und anschließend in die zweite Luftfeder abgeführt.

Der Ausdruck "zeitlich nacheinander" meint, dass die Luftfedern unmittelbar nacheinander einzeln oder unmittelbar nacheinander in Gruppen von zwei Luftfedern, d.h. ohne weitere Zwischenschritte, wie z.B. ein weiteres Entlüften oder Befüllen, mit Druckluft aus dem Lufttrockner und/oder dem Luftverteilermodul beaufschlagt werden. Dabei wird beispielsweise das Luftfederventil einer ersten Luftfeder geöffnet, um diese mit Druckluft aus dem Lufttrockner und/oder dem Luftverteilermodul zu beaufschlagen. Anschließend wird das Luftfederventil dieser Luftfeder wieder geschlossen. Wenn das Luftfederventil dieser Luftfeder geschlossen ist wird das Luftfederventil der nächsten Luftfeder geöffnet, um diese mit Druckluft zu beaufschlagen. Die Vorgehensweise wird nacheinander für jede der Luftfedern angewendet, um die zeitlich nacheinander einzeln mit Druckluft aus dem Lufttrockner und/oder dem Luftverteilermodul zu beaufschlagen. Wenn also in dem Verfahrensschritt Luftfedern zeitlich nacheinander einzeln mit Druckluft aus dem Lufttrockner und/oder dem Luftverteilermodul beaufschlagt werden, wird immer nur eine der Luftfedern mit Druckluft beaufschlagt und die Luftfederventile der übrigen Luftfedern sind während dieser Zeit geschlossen.

Wenn in dem Verfahrensschritt jedoch Luftfedern zeitlich nacheinander in Gruppen von zwei Luftfedern mit Druckluft aus dem Lufttrockner und/oder dem Luftverteilermodul beaufschlagt werden, werden jeweils zwei der entsprechenden Luftfederventile der Luftfedern geöffnet und die übrigen Luftfederventile der anderen Luftfedern sind geschlossen. Erst wenn die zwei Luftfedern mit Druckluft aus dem Lufttrockner und/oder dem Luftverteilermodul beaufschlagt wurden und die Luftfederventile dieser beiden Luftfedern geschlossen sind, werden die zwei der übrigen Luftfedern mit Druckluft aus dem Lufttrockner und/oder dem Luftverteilermodul beaufschlagt. In diesem Verfahrensschritt werden entsprechend immer nur zwei Luftfedern mit Druckluft beaufschlagt und die Luftfederventile der übrigen Luftfedern sind während dieser Zeit geschlossen.

Die erste Luftfeder kann zu einer ersten Gruppe von Luftfedern gehören. Die zweite Luftfeder kann zu einer zweiten Gruppe von Luftfedern gehören. Mehrere Luftfedern einer dieser Gruppen können auch gemeinsam, also zeitgleich mit Druckluft befüllt werden. Eine erste Gruppe könnte zum Beispiel die Luftfedern der Vorderachse und eine zweite Gruppe könnte zum Beispiel die Luftfedern der Hinterachse eines Fahrzeugs umfassen. Beispielsweise könnte sich die erste Luftfeder an der Vorderachse des Fahrzeugs und die zweite Luftfeder an der Hinterachse des Fahrzeugs befinden.

In dem Verfahren könnten alternativ auch Gruppen von mindestens zwei Luftfedern zeitlich nacheinander mit Druckluft aus dem Lufttrockner und/oder dem Luftverteilermodul beaufschlagt werden. Beispielweise Gruppen von drei oder vier Luftfedern. Es ist jedoch bevorzugt, dass z.B. die Luftfedern einer Vorderachse eines Fahrzeugs eine erste Gruppe von Luftfedern bilden und die Luftfedern einer Hinterachse eines Fahrzeugs eine zweite Gruppe von Luftfedern bilden. Die erste Gruppe von Luftfedern wird nicht gleichzeitig, sondern zeitlich danach oder vor der zweiten Gruppe von Luftfedern mit Druckluft aus dem Lufttrockner und/oder dem Luftverteilermodul beaufschlagt.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Erfindungsgemäß umfasst der Zwischenspeicher den Verdichter und ein Verbindungsvolumen. Das Verbindungsvolumen weist eine pneumatische Rückflussleitung auf, die über ein Rückflussventil die Gallerie mit dem Verdichter verbindet. Die pneumatische Rückflüssleitung des Verbindungsvolumens, die über ein Rückflussventil die Gallerie mit dem Verdichter verbindet, ist insbesondere eine weitere pneumatische Leitung zusätzlich zu der Pneumatikhauptleitung. Beispielweise kann Druckluft über die Pneumatikhauptleitung in die Luftfedern geleitet werden. Um den Druck in den Luftfedern zu reduzieren, kann das Rückflussventil geöffnet und die Druckluft aus den Luftfedern über die Rückflussleitung zum Auslass oder in ein anderes Volumen der Druckluftversorgungsanlage gefördert werden.

Die Gallerie kann auch als Bestandteil des Luftverteilermoduls ausgebildet sein.

Alternativ oder zusätzlich zu einem Befüllen der Luftfedern mit Druckluft aus dem Überdruckvolumen kann Druckluft aus dem Überdruckvolumen in den Verdichter abgeführt werden.

Wiederum alternativ oder zusätzlich zu einem Befüllen der Luftfedern und/oder des Verdichters mit Druckluft kann Druckluft aus dem Überdruckvolumen in das Verbindungsvolumen abgeführt werden.

Bereits durch Abführen von Druckluft nur in den Verdichter oder nur in das Verbindungsvolumen kann der Druck in dem Überdruckvolumen reduziert werden.

Sollte ein Abführen von Druckluft in den Verdichter und/oder in das Verbindungsvolumen nicht ausreichen, um den Druck in dem Überdruckvolumen um den gewünschten Betrag zu reduzieren, kann in dem Verfahren weiterhin vorgesehen sein, dass Druckluft zusätzlich in wenigstens eine der Luftfedern abgeführt wird. Es kann also zusätzlich auch nur in genau eine Luftfeder Druckluft abgeführt werden. Diese Luftfeder kann diejenige sein, deren Druck die geringste Druckdifferenz zu dem Druck in dem Lufttrockner aufweist. Sollte ein Abführen von Druckluft in nur eine der Luftfeder wiederum nicht ausreichen, um den Druck in dem Überdruckvolumen um den gewünschten Betrag zu reduzieren, kann weiterhin vorgesehen sein, dass Druckluft in die übrigen Luftfedern zeitlich nacheinander einzeln oder zeitlich nacheinander in wenigstens zwei Gruppen von mindestens zwei Luftfedern abgeführt wird.

Wenn das Ausgleichsvolumen die Volumina von mehr als einer Komponente des Pneumatiksystems umfasst, z.B. die erste Luftfeder und den Verdichter oder die erste Luftfeder und das Verbindungsvolumen oder den Verdichter und das Verbindungsvolumen kann der Druck in dem Überdruckvolumen noch weiter reduziert werden.

Wenn das Ausgleichsvolumen die Volumina von der ersten Luftfeder, dem Verdichter und dem Verbindungsvolumen umfasst, kann der Druck in dem Überdruckvolumen wiederum noch weiter reduziert werden.

Ein Volumen der Luftfedern meint hierbei insbesondere ein Volumen der Bälge der Luftfedern.

Insbesondere dann, wenn die Luftfedern zeitlich nacheinander einzeln oder zeitlich nacheinander in Gruppen von zwei Luftfedern mit Druckluft aus dem Überdruckvolumen beaufschlagt werden, kann der Druck in dem Überdruckvolumen über einen vergleichsweise längeren Zeitraum portionsweise reduziert werden. Die Druckluftmenge, um die der Druck in dem Lufttrockner und/oder dem Luftverteilermodul reduziert werden soll, wird auch auf die Luftfedern der mit der Druckluftversorgungsanlage verbundenen Luftfederanlage aufgeteilt, so dass nicht nur eine Luftfeder die gesamte Druckluftmenge aufnehmen muss. Die Druckluftmenge pro Luftfeder ist damit vergleichsweise gering. Das Verfahren ermöglicht somit ein Reduzieren des Druckes dem Lufttrockner und/oder dem Luftverteilermodul derart, dass sich das Reduzieren des Druckes nicht oder wenigstens kaum auf die Fahreigenschaften eines Fahrzeugs auswirkt. Die Sicherheit für einen Fahrer kann somit erhöht werden. Auch ein Abführen von Druckluft in den Verdichter und/oder das Verbindungsvolumen wirkt sich nicht auf die Fahreigenschaften des Fahrzeugs aus, da dadurch das Fahrzeug weder angehoben noch gesenkt wird. Ein Abführen von Druckluft in den Verdichter und/oder das Verbindungsvolumen zusätzlich zu den Luftfedern kann insbesondere dann sinnvoll sein, wenn kurzfristig eine vergleichsweise große Druckreduzierung in dem Überdruckvolumen stattfinden soll, ohne, dass sich dies wesentlich auf die Fahreigenschaften des Fahrzeugs auswirkt.

Der Druck in dem Lufttrockner und/oder dem Luftverteilermodul kann beispielsweise reduziert werden, damit der Druck nicht eine kritische Obergrenze übersteigt. Dadurch können das Lufttrockner und/oder das Luftverteilermodul vor einer Beschädigung geschützt werden.

Der Druck in dem Lufttrockner und/oder dem Luftverteilermodul kann auch deshalb reduziert werden, weil anschließend die Druckluftversorgungsanlage entlüftet werden soll. Das Entlüften der Druckluftversorgungsanlage passiert dann bei einem vergleichsweise geringeren Druck am Auslass, so dass der Geräuschpegel vergleichsweise geringer ist. Auch dadurch können die Sicherheit und auch der Komfort für einen Fahrer erhöht werden.

Bei der nach dem Verfahren betriebenen Druckluftversorgungsanlage kann es sich um ein offenes System oder ein geschlossenes System handeln.

Ein offenes System zeichnet sich dadurch aus, dass Luft durch den Verdichter aus der umgebenen Atmosphäre angesaugt und in Luftfedern des Fahrzeugs gefördert wird, z.B. um das Fahrzeug anzuheben. Bei einem offenen System saugt der Verdichter Luft insbesondere nur aus der Umgebung an bzw. lässt Luft in die Umgebung ab. Allerdings kann auch bei einem offenen System ein Druckluftreservoir vorgesehen sein, zwischen dem Druckluft mit einer oder mehreren Luftfedern und/oder dem Verdichter zur Druckregulierung in der Druckluftversorgungsanlage ausgetauscht werden kann.

Bei einem geschlossenen System wird Druckluft zwischen einem Druckluftreservoir und den Luftfedern hin und her gefördert, um das Fahrzeug anzuheben oder abzusenken. Es kann erforderlich sein, dass auch in einem geschlossenen System Luft von außen nachgefüllt wird. Auch eine Druckluftversorgungsanlage, die ein geschlossenes System ist oder als ein geschlossenes System betrieben wird, weist daher regelmäßig einen Einlass mit einem Einlassventil auf.

Sowohl bei einem offenen System als auch bei einem geschlossenen System strömt Luft beim Befüllen der Druckluftversorgungsanlage unter Druck durch einen Lufttrockner.

In dem Verfahren kann weiterhin vorgesehen sein, dass, nachdem mindestens zwei der Luftfedern zeitlich nacheinander einzeln oder zeitlich nacheinander in wenigstens zwei Gruppen von mindestens zwei Luftfedern und/oder der Verdichter und/oder das Verbindungsvolumen mit Druckluft beaufschlagt wurden, die verbliebene Druckluft aus dem Lufttrockner und/oder dem Luftverteilermodul wenigstens teilweise durch den Auslass an die umgebende Atmosphäre abgegeben wird. Insbesondere werden die Luftfederventile vor dem Entlüften geschlossen. Außerdem ist bevorzugt, dass der Verdichter vor dem Entlüften in den Leerlauf gebracht wird. An dem Auslass liegt dann ein vergleichsweise geringer Druck an, so dass das Entlüften in die umgebende Atmosphäre bei einem vergleichsweise geringeren Druck passiert. Ein durch das Entlüften erzeugter Geräuschpegel kann dabei vergleichsweise geringer sein.

In einigen Varianten des Verfahrens ist es vorgesehen, dass Druckluft aus dem Überdruckvolumen zeitlich nacheinander in die erste Luftfeder und den Zwischenspeicher beginnend mit dem Zwischenspeicher abgeführt wird. Dies hat den Vorteil, dass der Druck in dem Überdruckvolumen vor einem Befüllen der Luftfedern bereits reduziert ist. Ein sich anschließendes Befüllen der Luftfedern mit der restlichen Druckluft aus dem Überdruckvolumen kann sich dann vergleichsweise geringer auf die Fahreigenschaften eines Fahrzeugs auswirken. Ein Einfluss auf die Fahreigenschaften des Fahrzeugs durch das Befüllen der Luftfedern mit Druckluft kann dann weiter reduziert werden, indem die Luftfedern zeitlich nacheinander einzeln mit Druckluft beaufschlagt werden.

Es ist auch möglich, dass der Zwischenspeicher erst dann mit der restlichen Druckluft aus dem Überdruckvolumen beaufschlagt wird, wenn ein Befüllen der Luftfedern der Luftfederanlage mit Druckluft aus dem Überdruckvolumen abgeschlossen ist. Es werden also zunächst die Luftfedern mit Druckluft befüllt und erst nachdem das Befüllen der Luftfedern abgeschlossen ist, wird der Zwischenspeicher mit der restlichen Druckluft aus dem Überdruckvolumen befüllt. Dadurch kann das Druckniveau in dem Überdruckvolumen sogar unter das Druckniveau der Luftfedern gesenkt werden. Ein sich anschließendes Entlüften der Druckluftversorgungsanlage in die Umgebung kann dann bei einem vergleichsweise geringeren Druck am Auslass durchgeführt werden. Ein beim Entlüften entstehender Geräuschpegel kann dann vergleichsweise noch weiter verringert werden.

Optional kann der Verdichter ein zweistufiger Verdichter sein, und das Verbindungsvolumen weiterhin eine Verdichterleitung umfassen, die eine erste Verdichtungsstufe des Verdichters mit einer zweiten Verdichtungsstufe des Verdichters pneumatisch verbindet. Die Verdichterleitung und auch das übrige Verbindungsvolumen weisen dann den Druck auf, der durch die erste Verdichtungsstufe erzeugt wird. In der übrigen Druckluftversorgungsanlage und insbesondere nach der zweiten Verdichterstufe weist die Druckluftversorgungsanlage einen vergleichsweise höheren Druck auf. Durch Befüllen des Verbindungsvolumens mit Druckluft aus dem Überdruckvolumen kann somit der Druck in dem Überdruckvolumen reduziert werden.

Alternativ oder zusätzlich kann das Verbindungsvolumen einen Zusatzspeicher umfassen, der pneumatisch mit der Rückflüssleitung verbunden ist. Ein Zusatzspeicher stellt ein zusätzliches Volumen dar, in das Druckluft aus dem Überdruckvolumen abgeführt werden kann, um den Druck in dem Überdruckvolumen zu reduzieren. Durch einen Zusatzspeicher wird somit die Kapazität des Verbindungsvolumens erhöht.

Der Verdichter kann ein Kolbenverdichter sein und in dem Verfahren ein Abführen von Druckluft aus dem Überdruckvolumen in den Verdichter ein Abführen von Druckluft aus dem Überdruckvolumen in wenigstens ein Kolbenvolumen eines Verdichterkolbens und/oder in ein Volumen des Kurbelgehäuses und/oder in ein Motorgehäuse des Verdichters umfassen.

Falls Druckluft aus dem Überdruckvolumen in das Verbindungsvolumen und in wenigstens eine der Luftfedern oder in den Verdichter und in wenigstens eine der Luftfedern abgeführt werden soll, ist es bevorzugt, wenn zunächst Druckluft in das Verbindungsvolumen und/oder in den Verdichter abgeführt wird und anschließend die übrige Druckluft aus dem Überdruckvolumen in wenigstens eine der Luftfedern abgeführt wird. Sollte der Druck in dem Überdruckvolumen danach noch nicht um den gewünschten Betrag reduziert worden sein, ist es bevorzugt, wenn anschließend die übrigen Luftfedern zeitlich nacheinander einzeln oder zeitlich nacheinander in Gruppen von mindestens zwei Luftfedern mit Druckluft beaufschlagt werden. Vorzugsweise werden die Luftfedern zeitlich nacheinander einzeln oder zeitlich nacheinander in Gruppen von mindestens zwei Luftfedern solange mit Druckluft beaufschlagt, bis der Druck in dem Überdruckvolumen um den gewünschten Betrag gesenkt wurde.

In dem Verfahren ist es bevorzugt, dass die Luftfedern mit Druckluft aus dem Überdruckvolumen beaufschlagt werden, falls zunächst mit dem Drucksensor eine Höhe des Druckes in dem Luftverteilermodul gemessen wird, die höher als 10 bar ist, insbesondere höher als 11 bar ist, bevorzugt höher als 12 bar ist, und besonders bevorzugt zwischen 12 bar und 18 bar beträgt. Insbesondere wenn der Druck im Überdruckvolumen 10 bar oder höher beträgt, ist der Druck am Auslass regelmäßig so hoch, dass beim Entlüften der Druckluftversorgungsanlage ein vergleichsweise hoher Geräuschpegel erzeugt wird. Es ist daher vorteilhaft, dass insbesondere bei Drücken von 10 bar oder mehr gemäß dem Verfahren die Luftfedern zeitlich nacheinander einzeln oder zeitlich nacheinander in Gruppen von zwei Luftfedern mit Druckluft aus dem Lufttrockner und/oder dem Luftverteilermodul beaufschlagt werden. Der Druck kann dann am Auslass soweit gesenkt werden, dass der Geräuschpegel beim Entlüften vergleichsweise gering ist. Gemäß dem Verfahren kann bei einem Druck von 10 bar oder mehr durch ein Beaufschlagen der Luftfedern zeitlich nacheinander einzeln oder in Gruppen von zwei Luftfedern mit Druckluft aus dem Lufttrockner und/oder dem Luftverteilermodul verhindert werden, dass der Druck in dem Lufttrockner und/oder dem Luftverteilermodul einen kritischen Wert übersteigt, ohne dass das Reduzieren des Druckes sich spürbar auf die Fahreigenschaften des Fahrzeugs auswirkt.

In dem Verfahren kann weiterhin vorgesehen sein, dass erste und die zweite Luftfeder zeitlich nacheinander einzeln oder zeitlich nacheinander in mindestens zwei Gruppen von wenigstens zwei Luftfedern jeweils mit einer vorgegebenen Druckluftmenge und/oder jeweils für eine vordefinierte Zeitdauer und/oder um einen vordefinierten Druckabfall in dem Luftverteilermodul mit Druckluft aus dem Lufttrockner und/oder dem Luftverteilermodul beaufschlagt werden.

Die vorgegebene Druckluftmenge kann beispielweise aus dem gemessenen Drücken des Drucksensors und dem bekannten Lufttrockner- und Luftverteilermodulvolumen sowie den Luftfedervolumen errechnet werden.

Ein Abführen von Druckluft aus dem Überdruckvolumen gemäß einen vordefinierten Druckabfall in dem Luftverteilermodul kann beispielweise so umgesetzt werden, dass ein bestimmter Druckabfall im Luftverteilermodul jeweils in eine Luftfeder abgeführt wird. Beispielsweise kann im Luftverteilermodul der Druck mit dem Drucksensor gemessen werden und jeweils für die Zeitdauer eines vordefinierten Druckabfalls eine der Luftfedern mit Druckluft gefüllt werden. Beispielweise kann jede der Luftfedern über einen Druckabfall von 1 bar in dem Luftverteilermodul mit Druckluft aus dem Überdruckvolumen befüllt werden.

Eine vordefinierte Zeitdauer, über die eine Luftfeder mit Druckluft befüllt wird kann beispielsweise zwischen 50 ms und 400 ms betragen, z.B. 100 ms. Die vorgegebene Druckluftmenge kann gerade so gewählt sein, dass beim Beaufschlagen der Luftfedern mit Druckluft das Fahrzeug zu stark angehoben wird. Die Druckluftmenge kann so gewählt sein, dass das Fahrzeug jeweils durch das zeitlich aufeinanderfolgende Beaufschlagen der Luftfedern mit Druckluft nur um eine vergleichsweise geringe Höhe angehoben wird, so dass das Anheben die Fahreigenschaften nicht oder wenigstens kaum spürbar beeinflusst. Durch ein Befüllen der Luftfedern mit einer vorgegebenen Druckluftmenge kann auch verhindert werden, dass das Fahrzeug abrupt in eine Schieflage relativ zu dem Untergrund gebracht wird. Stattdessen wird das Fahrzeug Stück für Stück bzw. Luftfeder für Luftfeder angehoben. Die Luftfedern können so oft mit der vorgegebenen Druckluftmenge beaufschlagt werden, bis der Druck in dem Lufttrockner und/oder dem Luftverteilermodul um einen bestimmten, insbesondere vorgegebenen Betrag bzw. Druckabfall gesenkt wurde. Die Reihenfolge, in der Luftfedern mit der vorgegebenen Druckluftmenge mit Druckluft beaufschlagt werden, kann dabei unterschiedlich sein. Die Luftfedern können der Reihe nach, z.B. ein Fahrzeug umlaufend, mit der vorgegebenen Druckluftmenge befüllt werden. Luftfedern können auch einzeln abwechselnd mit Druckluft beaufschlagt werden. Beispielsweise können abwechselnd die beiden Luftfedern der Vorderachse mit der vorgegebenen Druckluftmenge befüllt werden, um das Fahrzeug an seiner Vorderachse Stück für Stück anzuheben. Genauso können abwechselnd die beiden Luftfedern der Hinterachse mit der vorgegebenen Druckluftmenge befüllt werden, um das Fahrzeug an seiner Hinterachse Stück für Stück anzuheben.

Anstelle von oder zusätzlich zu der vorgegebenen Druckluftmenge kann auch eine vordefinierte Zeitdauer verwendet werden, für die die Luftfedern einzeln oder in Gruppen von zwei Luftfedern mit Druckluft beaufschlagt werden. Durch die vorgegebene Zeitdauer für die ein Luftfederventil einer Luftfeder geöffnet und die Luftfeder entsprechend befüllt wird, kann ebenfalls die Druckluftmenge bestimmt werden, mit der eine Luftfeder befüllt werden soll. Die Regelung der Druckluftmenge anhand der vordefinierte Zeitdauer stellt dabei eine besonders einfache Art der Begrenzung der Druckluftmenge für eine bestimme Luftfeder dar.

Optional können die erste und die zweite Luftfeder zeitlich nacheinander einzeln oder zeitlich nacheinander in wenigstens zwei Gruppen von mindestens zwei Luftfedern jeweils auf Basis eines gemessenen Druckabfalls in dem Luftverteilermodul, eines bekannten Lufttrocknervolumens, Luftverteilermodulvolumens sowie eines Luftfedervolumens der Luftfedern und/oder eines adaptiv festgelegten Zeitintervalls mit Druckluft aus dem Überdruckvolumen beaufschlagt werden. Ein Beaufschlagen der Luftfedern mit Druckluft aus dem Überdruckvolumen gemäß eines adaptiv festgelegten Zeitintervalls umfasst eine Regelung der Druckluftversorgungsanlage auf Basis von z.B. einem gemessenen Druckabfall in dem Luftverteilermodul, einem bekannten Lufttrocknervolumen, einem Luftverteilermodulvolumen und/oder einem Luftfedervolumen der Luftfedern.

In dem Verfahren kann es vorgesehen sein, dass die Druckluftmenge und/oder Zeitdauer für eine oder mehrere Luftfedern in Abhängigkeit von der Fahrgeschwindigkeit vorgegeben bzw. vordefiniert wird. Beispielweise kann es vorteilhaft sein, dass eine vergleichsweise kleine Druckluftmenge und/oder eine vergleichsweise kurze Zeitdauer vorgegeben bzw. vordefiniert wird, wenn sich das Fahrzeug mit einer vergleichsweise hohen Geschwindigkeit fortbewegt, z.B. mit mehr als 80 km/h oder mehr als 100 km/h oder mehr als 130 km/h. Wenn sich das Fahrzeug hingegen mit einer vergleichsweise geringeren Geschwindigkeit, z.B. von weniger als 80 km/h oder weniger als 50 km/h fortbewegt, kann eine vergleichsweise größere Druckluftmenge und/oder eine vergleichsweise längere Zeitdauer vorgegeben bzw. vordefiniert werden.

Es ist auch denkbar, dass die Druckluftmenge und/oder Zeitdauer und/oder der vordefinierte Druckabfall in dem Luftverteilermodul für eine oder mehrere Luftfedern in Abhängigkeit von dem Durchmesser einer Drossel des Lufttrockners vorgegeben bzw. vordefiniert wird. Je größer die Drossel ist desto größer könnte auch die Druckluftmenge und/oder die Zeitdauer gewählt werden.

In dem Verfahren kann es vorgesehen sein, dass die Druckluftmenge und/oder die Zeitdauer für wenigstens zwei der Luftfedern unterschiedlich ist. Beispielsweise kann die Druckluftmenge und/oder die Zeitdauer für die Luftfedern so gewählt werden, dass sich ein Beaufschlagen der Luftfedern mit Druckluft möglichst nicht oder nur kaum spürbar auf die Fahreigenschaften eines Fahrzeugs auswirkt. Die Druckluftmenge und/oder die Zeitdauer für die Luftfedern so zum Beispiel gewählt werden, dass sich die Orientierung des Unterbodens des Fahrzeugs relativ zu dem Untergrund nicht ändert. Insbesondere können wenigstens zwei der Luftfedern derart mit einer unterschiedlichen Druckluftmenge und/oder für eine unterschiedliche Zeitdauer mit Druckluft beaufschlagt werden, dass der des Unterbodens des Fahrzeugs relativ zu dem Untergrund auch während und/oder nach dem beaufschlagen der Luftfedern mit Druckluft parallel zum Untergrund bleibt bzw. ist.

In dem Verfahren kann zusätzlich oder alternativ vorgesehen sein, dass die Druckluftmenge und/oder die Zeitdauer für wenigstens eine der Luftfedern auf Basis eines relativen Druckunterschieds zwischen dem Druck in der wenigstens eine Luftfeder und des Druckes in dem Lufttrockner und/oder Druck in dem Luftverteilermodul festgelegt wird. Grundsätzlich ist es aber bevorzugt, dass jeweils eine geringe Druckluftmenge während eines Befüllvorgangs einer Luftfeder in eine der Luftfedern abgeführt wird, damit sich das Befüllen der Luftfeder nicht negativ auf die Fahreigenschaften des Fahrzeugs auswirkt. Beispielweise kann ein Druckunterschied zwischen einer oder mehrerer der Luftfedern und Lufttrockner und/oder dem Luftverteilermodul erfasst werden. Auf Basis des erfassten Druckunterschieds kann dann eine Regelung zur Beaufschlagung der Luftfedern mit Druckluft aus dem Lufttrockner und/oder dem Luftverteilermodul angepasst werden. Es kann vorteilhaft sein, wenn diejenige der Luftfedern, die den höchsten Druckunterschied zu dem Lufttrockner und/oder dem Luftverteilermodul aufweist, mit einer höheren Druckluftmenge und/oder für eine größere Zeitdauer mit Druckluft beaufschlagt wird, so dass sich der Druck in dieser Luftfeder an die Drücke in den übrigen Luftfedern angleicht. Beispielsweise kann für jede der Luftfedern die Druckluftmenge und/oder die Zeitdauer so gewählt werden, dass der relative Druckunterschied zwischen dem Druck in den jeweiligen Luftfedern und des Druckes in dem Lufttrockner und/oder Druck in dem Luftverteilermodul für jede der Luftfedern im Wesentliche identisch ist. Es kann aber auch vorteilhaft sein, wenn der Druckunterschied zwischen den Luftfedern der Vorderachse eines Fahrzeugs und dem Lufttrockner und/oder dem Luftverteilermodul größer ist als der Druckunterschied zwischen den Luftfedern der Hinterachse eines Fahrzeugs und dem Lufttrockner und/oder dem Luftverteilermodul, oder umgekehrt, der Druckunterschied zwischen den Luftfedern der Hinterachse eines Fahrzeugs und dem Lufttrockner und/oder dem Luftverteilermodul größer ist als der Druckunterschied zwischen den Luftfedern der Vorderachse eines Fahrzeugs und dem Lufttrockner und/oder dem Luftverteilermodul. Die Druckluftmenge mit der und/oder die Zeitdauer für die wenigstens eine der Luftfedern auf Basis eines relativen Druckunterschieds zwischen dem Druck in der wenigstens eine Luftfeder und des Druckes in dem Lufttrockner und/oder Druck in dem Luftverteilermodul mit Druckluftbeaufschlagt wird, kann beispielsweise von einem Steuergerät entsprechend dieser Vorgaben festgelegt werden.

In dem Verfahren kann es optional vorgesehen sein, dass zusätzlich zu den Luftfedern ein Volumen des Verdichters, z.B. ein Kolbenvolumen, mit einer vorgegebenen Druckluftmenge und/oder für eine vordefinierte Zeitdauer und/oder für einen vordefinierten Druckabfall in dem Überdruckvolumen mit Druckluft aus dem Lufttrockner und/oder dem Luftverteilermodul beaufschlagt wird. Wenn zusätzlich zu den Luftfedern ein Volumen des Verdichters mit einer vorgegebenen Druckluftmenge und/oder für eine vordefinierte Zeitdauer mit Druckluft aus dem Lufttrockner und/oder dem Luftverteilermodul beaufschlagt wird, kann der Druck in dem Lufttrockner und/oder dem Luftverteilermodul zusätzlich verringert werden. Wenn anschließend die Druckluftversorgungsanlage entlüftet wird, kann somit auch der beim Entlüften entstehende Geräuschpegel weiter reduziert werden. Wenn zusätzlich zu den Luftfedern ein Volumen des Verdichters mit einer vorgegebenen Druckluftmenge und/oder für eine vordefinierte Zeitdauer mit Druckluft aus dem Lufttrockner und/oder dem Luftverteilermodul beaufschlagt werden, führt zu dem weiteren Vorteil, dass nicht die gesamte überschüssige Druckluft allein in die Luftfedern abgeführt werden muss, so dass das Fahrzeug vergleichsweis weniger angehoben werden muss, um den Druck in dem Lufttrockner und/oder dem Luftverteilermodul um einen bestimmten Betrag zu reduzieren.

Weiterhin zusätzlich oder alternativ kann in dem Verfahren vorgesehen sein, dass die Druckluftversorgungsanlage einen Zusatzspeicher umfasst, und zusätzlich zu den Luftfedern der Zusatzspeicher mit einer vorgegebenen Druckluftmenge und/oder für eine vordefinierte Zeitdauer mit Druckluft aus dem Lufttrockner und/oder dem Luftverteilermodul beaufschlagt wird.

Der Zusatzspeicher ist insbesondere Teil des Verbindungsvolumens und ist bevorzugt mit der Rückflussleitung pneumatisch verbunden. Der Zusatzspeicher kann insbesondere eine eigenständige Komponente der Druckluftversorgungsanlage sein, die als zusätzlich Komponente über Pneumatik-Anschlüsse mit den übrigen Komponenten der Druckluftversorgungsanlage verbunden ist. Ein Zusatzspeicher ermöglicht grundsätzlich mehr Flexibilität bei der Aufteilung überschüssiger Druckluft auf die Komponenten der Druckluftversorgungsanlage. Durch einen Zusatzspeicher ist es insbesondere möglich, dass nicht die komplette überschüssige Druckluft auf die Luftfedern verteilt wird, sondern, dass ein Teil dieser überschüssigen Druckluft in den Zusatzspeicher abgeführt wird. Die Druckluftmenge, die die Luftfedern aufnehmen, kann dann vergleichsweise geringer sein. Ein Reduzieren der Druckluft in dem Lufttrockner und/oder dem Luftverteilermodul kann dadurch einen vergleichsweise geringeren Einfluss auf die Fahreigenschaften eines Fahrzeugs haben, z.B., weil das Fahrzeug vergleichsweise geringer angehoben wird.

Vorzugsweise wird in dem Verfahren Druckluft aus dem Lufttrockner und/oder dem Luftverteilermodul zuerst in diejenige der Luftfedern geleitet, deren Druck im Vergleich zu den Drücken in den übrigen Luftfedern die geringste Druckdifferenz zu dem Druck in dem Luftverteilermodul aufweist. Die Luftfeder mit der geringsten Druckdifferenz zu dem Druck in dem Luftverteilermodul ist insbesondere die erste Luftfeder.

Beispielweise kann der Druck in den Luftfedern durch entsprechend angeordnete weitere Drucksensoren erfasst werden und die erfassten Drücke einem Steuergerät zur Verfügung gestellt werden.

Wenn zuerst Druckluft aus dem Lufttrockner und/oder dem Luftverteilermodul in diejenige der Luftfedern geleitet wird, deren Druck im Vergleich zu den Drücken in den übrigen Luftfedern die geringste Druckdifferenz zu dem Druck in dem Luftverteilermodul aufweist, kann erreicht insbesondere werden, dass die Luftfedern mit nur vergleichsweise geringen Druckluftmengen mit Druckluft beaufschlagt werden. Dies hat den Vorteil, dass das Fahrzeug um eine vergleichsweise geringe Höhe angehoben wird. Ein Anheben des Fahrzeugs wirkt sich daher nicht oder wenigstens nur kaum auf die Fahreigenschaften eines Fahrzeugs auf. Dass das Fahrzeug, deren Druck im Vergleich zu den Drücken in den übrigen Luftfedern die geringste Druckdifferenz zu dem Druck in dem Luftverteilermodul aufweist, zuerst mit Druckluft beaufschlagt wird, hat den weiteren Vorteil, dass das Fahrzeug nicht oder wenigstens kaum in eine Schieflage in Bezug auf den Untergrund gebracht wird.

Wenn zuerst Druckluft aus dem Lufttrockner und/oder dem Luftverteilermodul in diejenige der Luftfedern geleitet wird, deren Druck im Vergleich zu den Drücken in den übrigen Luftfedern die geringste Druckdifferenz zu dem Druck in dem Luftverteilermodul aufweist, kann in einem darauffolgenden Schritt die nächste der übrigen Luftfedern, die im Vergleich zu den zwei verbleibenden Luftfedern die geringste Druckdifferenz zu dem Druck in dem Luftverteilermodul aufweist, mit Druckluft beaufschlagt werden. Wenn danach immer noch überschüssige Druckluft aus dem Lufttrockner und/oder dem Luftverteilermodul auf die Luftfedern verteilt werden soll, kann dieses Verfahren Luftfeder für Luftfeder fortgesetzt werden, bis der Druck in dem Lufttrockner und/oder dem Luftverteilermodul um den gewünschten Betrag bzw. Druckabfall gesenkt wurde.

Wenn zuerst Druckluft aus dem Lufttrockner und/oder dem Luftverteilermodul in diejenige der Luftfedern geleitet wird, deren Druck Vergleich zu den Drücken in den übrigen Luftfedern am größten ist, kann der Druck in dieser Luftfeder an die Drücke in den übrigen Luftfedern angeglichen werden. Ein mögliches Ungleichgewicht zwischen den Drücken in den Luftfedern wird dann nicht weiter vergrößert, sondern, kann verringert werden. Es kann auch vorgesehen sein, dass nacheinander die Luftfedern beginnend mit derjenigen Luftfeder, deren Druck Vergleich zu den Drücken in den übrigen Luftfedern am größten ist, solange fortgesetzt wird, bis eine bestimmte Druckluftmenge von dem Lufttrockner und/oder dem Luftverteilermodul in die Luftfedern abgeführt wird. Wenn dabei mit derjenigen Luftfeder begonnen wird, deren Druck Vergleich zu den Drücken in den übrigen Luftfedern am größten ist, kann erreicht werden, dass nach Abführen einer bestimmten Druckluftmenge in die Luftfedern, die maximale Druckdifferenz zwischen einer der Luftfedern und dem Lufttrockner und/oder dem Luftverteilermodul verringert wurde.

Insbesondere dann, wenn in dem Verfahren Druckluft aus dem Lufttrockner und/oder dem Luftverteilermodul zuerst in diejenige der Luftfedern geleitet, deren Druck im Vergleich zu den Drücken in den übrigen Luftfedern die geringste Druckdifferenz zu dem Druck in dem Luftverteilermodul aufweist, kann die Druckluft aus dem Lufttrockner und/oder dem Luftverteilermodul zeitlich nacheinander einzeln beginnend mit derjenigen der Luftfedern, deren Druck im Vergleich zu den Drücken in den übrigen Luftfedern die geringste Druckdifferenz zu dem Druck in dem Luftverteilermodul aufweist oder deren Druck Vergleich zu den Drücken in den übrigen Luftfedern am größten ist, jeweils in die Luftfedern abgeführt werden.

Beispielsweise kann Druckluft aus dem Lufttrockner und/oder dem Luftverteilermodul zuerst in diejenige der Luftfedern abgeführt werden, deren Druck im Vergleich zu den Drücken in den übrigen Luftfedern die geringste Druckdifferenz zu dem Druck in dem Luftverteilermodul aufweist, und anschließend in diejenige der übrigen Luftfedern abgeführt wird, deren Druck im Vergleich zu den Drücken der beiden verbleibenden Luftfedern die geringste Druckdifferenz zu dem Druck in dem Luftverteilermoduls aufweist oder deren Druck im Vergleich zu den Drücken in den übrigen Luftfedern am zweitgrößten ist, und Druckluft aus dem Lufttrockner und/oder dem Luftverteilermodul anschießend in diejenige der beiden verbleibenden Luftfedern abgeführt werden, deren Druck im Vergleich zu dem Druck der anderen verbleibenden Luftfeder die geringste Druckdifferenz zu dem Druck in dem Luftverteilermodul aufweist, und Druckluft aus dem Lufttrockner und/oder dem Luftverteilermodul zuletzt in diejenige verbleibende Luftfeder abgeführt wird, die noch nicht mit Druckluft beaufschlagt wurde.

In dem Verfahren wird somit anhand der geringsten Druckdifferenz eine Reihenfolge festgelegt, in der die Luftfedern zeitlich nacheinander einzeln mit Druckluft beaufschlagt werden. Die Reihenfolge anhand der geringsten Druckdifferenz festzulegen hat den Vorteil, dass ein Fahrzeug mit vergleichsweise geringer Beschleunigung angehoben wird. Dadurch können die Fahreigenschaften eines Fahrzeugs nicht oder wenigsten nur gering durch das Anheben des Fahrzeugs beeinflusst werden. Auch wird verhindert, dass das Fahrzeug in eine vergleichsweise große Schieflage relativ zu dem Untergrund gebracht wird, was sich ebenfalls negativ auf die Fahreigenschaften des Fahrzeugs auswirken kann.

In dem Verfahren kann es vorteilhaft sein, wenn die Luftfedern gemäß der anhand des geringsten Druckunterschieds zu dem Druck in dem Luftverteilermodul ermittelten Reihenfolge der Luftfedern in derselben Reihenfolge erneut zeitlich nacheinander mit einer oder der vorgegebenen Druckluftmenge und/oder jeweils für eine oder die vordefinierte Zeitdauer mit Druckluft aus dem Lufttrockner und/oder dem Luftverteilermodul beaufschlagt werden. Insbesondere können die Luftfedern in der festgelegten Reihenfolge zeitlich nacheinander einzeln solange mit Druckluft beaufschlagt werden, bis der Druck in dem Lufttrockner und/oder dem Luftverteilermodul um einen bestimmten Betrag gesenkt wurde. Der Betrag um den der Druck in dem Lufttrockner und/oder dem Luftverteilermodul gesenkt werden soll, kann beispielweise so bestimmt werden, dass in dem Lufttrockner und/oder dem Luftverteilermodul nach dem Beaufschlagen der Luftfedern ein Druck herrscht, der unterhalb eines vordefinierten Grenzwertes liegt. Beispielsweise kann ein Grenzwert so festgelegt sein, dass dieser angibt, ab welchem Druck mit einer Beschädigung des Lufttrockners und/oder des Luftverteilermoduls und/oder weiteren Komponenten oder Pneumatik-Leitungen der Druckluftversorgungsanlage zu rechnen ist. Der Grenzwert kann auch so festgelegt sein, dass dieser angibt, bei welchem Druck die Druckluftversorgungsanlage entlüftet werden kann, ohne dass dabei ein Geräuschpegel entsteht, der einen vorgegebenen Schallpegel übersteigt.

In dem Verfahren kann weiterhin vorgesehen sein, dass für die erste Luftfeder und/oder den Zwischenspeicher, beispielsweise für jede der Luftfedern, eine Druckluftmenge individuell vorgegeben und die Druckluftversorgungsanlage von dem Steuergerät so angesteuert wird, dass Druckluft in der jeweils vorgegebenen Druckluftmenge in die entsprechende der Luftfedern abgeführt wird. Für jede der Luftfedern kann entsprechend individuell eine Druckluftmenge festgelegt werden. Die Druckluftmenge der jeweiligen Luftfedern kann auf Basis des in der jeweiligen Luftfeder vorliegenden Druckes festgelegt werden. Es kann beispielsweise in jeder der Luftfedern der Druck erfasst und auf Basis der erfassten Drücke für jede der Luftfedern individuell eine Druckluftmenge vorgegeben werden. Nach Verstreichen einer bestimmten Zeitdauer oder nach einer bestimmten Aktion, z.B. dem Öffnen oder Schließen eines Luftfederventils, kann die Druckluftmenge für eine oder mehrere der Luftfedern individuell erneut festgelegt werden. Die Druckluftmenge kann dadurch situationsabhängig passend für jede der Luftfedern einzeln festgelegt und das Verfahren dadurch besonders effizient durchgeführt werden.

Zusätzlich oder alternativ zu dem individuellen Vorgegeben einer Druckluftmenge kann in dem Verfahren vorgesehen sein, dass für die erste Luftfeder und/oder den Zwischenspeicher, beispielsweise jede der Luftfedern, individuell eine Zeitdauer vorgegeben und die Druckluftversorgungsanlage von dem Steuergerät so angesteuert wird, dass Druckluft für die jeweils vorgegebene Zeitdauer in die entsprechende der Luftfedern abgeführt wird. Die vorgegeben individuell eine Zeitdauer kann insbesondere so gewählt werden, dass die Luftfedern jeweils mit einer bestimmten Druckluftmenge befüllt werden. Beispielweise kann die Luftfedern die jeweils individuell vorgegebene Zeitdauer so festgelegt sein, dass die Luftfedern nach dem Befüllen mit Druckluft alle einen ähnlichen Druck aufweisen. Die Zeitdauer kann auch für die Luftfedern so individuell vorgegeben werden, dass die beiden Luftfedern der Vorderachse eines Fahrzeugs einen zu den beiden Luftfedern der Hinterachse des Fahrzeugs unterschiedlichen, z.B. höheren oder niedrigeren, Druck aufweisen.

Wenn in dem Verfahren die Luftfedern zeitlich nacheinander in wenigstens zwei Gruppen von mindestens zwei Luftfedern mit Druckluft aus dem Lufttrockner und/oder dem Luftverteilermodul beaufschlagt werden ist es insbesondere bevorzugt, dass die Gruppe von zwei der Luftfedern die beiden Luftfedern einer Vorderachse oder die beiden Luftfedern einer Hinterachse des Fahrzeugs umfasst.

In dem Verfahren ist es weiterhin bevorzugt, dass das Pneumatiksystem von dem Steuergerät so angesteuert wird, dass der Verdichter während eines Entlüftens von Druckluft durch den Auslass einen Teil der Druckluft speichert, so dass die tatsächlich an die Umgebung abgegebene Druckluftmenge vergleichsweise geringer ist.

Beispielsweise kann der Verdichter während eines Entlüftens von Druckluft einen Teil der Druckluft in einem Volumen des Verdichters speichern. Wenn der Verdichter zum Beispiel ein Kolbenverdichter ist, könnte dieser einen Teil der Druckluft in einem Volumen eines oder mehrerer Kolben speichern, so dass die tatsächlich an die Umgebung abgegebene Druckluftmenge vergleichsweise geringer ist. Insbesondere wird Druckluft dann bei einer vergleichsweise geringeren Druckdifferenz zwischen einem Druck am Auslass und einem Druck in der Umgebung an die Umgebung abgegeben. Da die tatsächlich an die Umgebung abgegebene Druckluftmenge vergleichsweise geringer ist, kann auch der Geräuschpegel, der beim Entlüften entsteht, weiter reduziert werden.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung sowie anhand der Zeichnung; diese zeigt in:
- Fig. 1A:: schematisch eine mit einer Luftfederanlage pneumatisch verbundene Druckluftversorgungsanlage, bei der Einlass und Auslass voneinander getrennt realisiert sind;
- Fig. 1B:: schematisch eine mit einer Luftfederanlage pneumatisch verbundene Druckluftversorgungsanlage, bei der Einlass und Auslass mittels eines gemeinsamen Anschlusses realisiert sind;
- Fig. 1C:: schematisch ein Pneumatiksystem aufweisend eine Druckluftversorgungsanlage und eine Luftfederanlage, wobei die Luftfedern der Luftfederanlage als Ausgleichsvolumen verwendet werden;
- Fig. 1D:: schematisch ein Pneumatiksystem aufweisend eine Druckluftversorgungsanlage und eine Luftfederanlage, wobei die Rückflussleitung mit Zusatzspeicher und der Verdichter als Ausgleichsvolumen verwendet werden;
- Fig. 1E:: schematisch ein Pneumatiksystem aufweisend eine Druckluftversorgungsanlage und eine Luftfederanlage, wobei eine erste Luftfeder und die Rückflussleitung mit Zusatzspeicher als Ausgleichsvolumen verwendet werden;
- Fig. 2:: schematisch ein Ablaufdiagramm für ein Verfahren zum Betreiben einer Druckluftversorgungsanlage;
- Fig. 3:: ein Diagramm, in dem für unterschiedliche Drosseldurchmesser des Lufttrockners die an die umgebende Atmosphäre abgegebene Druckluftmenge über dem Druck am Auslass angegeben wird;
- Fig. 4:: schematisch ein Ablaufdiagramm für ein Verfahren zum Betreiben einer Druckluftversorgungsanlage, in dem Druckluft in die Luftfedern abgeführt wird;
- Fig. 5A:: schematisch eine mit einer Luftfederanlage pneumatisch verbundene Druckluftversorgungsanlage, die als offenes System realisiert ist;
- Fig. 5B:: schematisch die in Fig. 5A dargestellte Druckluftversorgungsanlage, in der die Umleitung von Druckluft in die Luftfedern eingezeichnet ist;
- Fig. 5C:: schematisch die in Fig. 5A und Fig. 5B dargestellte Druckluftversorgungsanlage, in der ein Entlüften der Druckluftversorgungsanlage in die umgebende Atmosphäre eingezeichnet ist;
- Fig. 5D:: schematisch die in Fig. 5A bis Fig. 5C dargestellte Druckluftversorgungsanlage, in der ein Entlüften in die umgebende Atmosphäre eingezeichnet ist, wobei während des Entlüftens ein Teil der Druckluft in dem Verdichter gespeichert wird;
- Fig. 6A:: eine durch Schaltsymbole dargestellte Druckluftversorgungsanlage, die über Luftfederventile mit Luftfedern einer Luftfederanlage pneumatisch verbunden ist;
- Fig. 6B:: die in Fig. 6A dargestellte Druckluftversorgungsanlage, wobei das Ventil des Reservoirs geöffnet ist, um Druckluft in die übrige Druckluftversorgungsanlage umzuleiten;
- Fig. 6C:: die in Fig. 6A und Fig. 6B dargestellte Druckluftversorgungsanlage, wobei das Luftfederventil einer ersten Luftfeder geöffnet ist, um Druckluft in die erste Luftfeder umzuleiten;
- Fig. 6D:: die in Fig. 6A bis Fig. 6C dargestellte Druckluftversorgungsanlage, wobei das Luftfederventil einer zweiten Luftfeder geöffnet ist, um Druckluft in die zweite Luftfeder umzuleiten;
- Fig. 6E:: die in Fig. 6A bis Fig. 6D dargestellte Druckluftversorgungsanlage, wobei das Luftfederventil einer dritten Luftfeder geöffnet ist, um Druckluft in die dritte Luftfeder umzuleiten;
- Fig. 6F:: die in Fig. 6A bis Fig. 6E dargestellte Druckluftversorgungsanlage, wobei das Luftfederventil einer vierten Luftfeder geöffnet ist, um Druckluft in die vierte Luftfeder umzuleiten;
- Fig. 6G:: die in Fig. 6A bis Fig. 6F dargestellte Druckluftversorgungsanlage, wobei alle Luftfederventile geschlossen und ein Relaisventil und ein Ventil zum Befüllen des Zusatzspeichers geöffnet sind;
- Fig. 7:: ein Logikschaltbild, das eine Abfolge beim Befüllen des Druckluftreservoirs mit Druckluft aus der umgebenden Atmosphäre repräsentiert;
- Fig. 8:: schematisch eine mit einer Luftfederanlage pneumatisch verbundene Druckluftversorgungsanlage, die als geschlossenes System realisiert ist und einen Zusatzspeicher aufweist;
- Fig. 9A:: schematisch eine mit einer Luftfederanlage pneumatisch verbundene Druckluftversorgungsanlage, die als geschlossenes System realisiert ist und bei der der Verdichter einen Zusatzspeicher aufweist;
- Fig. 9B:: schematisch die in Fig. 9A dargestellte Druckluftversorgungsanlage, bei der die Umleitung von Druckluft aus der umgebenden Atmosphäre in das Druckluftreservoir eingezeichnet ist;
- Fig. 9C:: schematisch die in Fig. 9A und Fig. 9B dargestellte Druckluftversorgungsanlage, bei der die Umleitung von Druckluft in den Zusatzspeicher eingezeichnet ist;
- Fig. 9D:: schematisch die in Fig. 9A bis Fig. 9C dargestellte Druckluftversorgungsanlage, bei der ein Entlüften des Lufttrockners eingezeichnet ist.

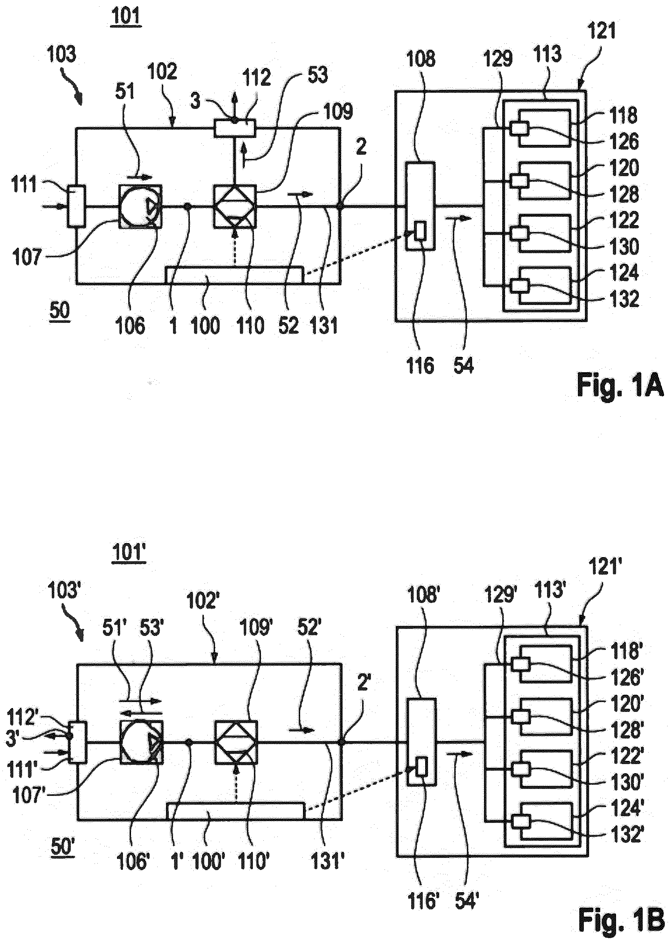

Fig. 1A zeigt schematisch eine mit einer Luftfederanlage 121 pneumatisch verbundene Druckluftversorgungsanlage 102, bei ein Verdichteranschluss 1 und ein Auslass 3 voneinander getrennt realisiert sind.

Die Druckluftversorgung 102 und die Luftfederanlage 121 sind Komponenten eines Fahrzeugs 101 und können beispielsweise dazu verwendet werden das Fahrzeug 101 relativ zum Untergrund anzuheben oder abzusenken. Druckluftversorgungsanlage 102 und Luftfederanlage 121 bilden zusammen ein Pneumatiksystem 103.

Die Druckluftversorgungsanlage 102 umfasst den Verdichteranschluss 1 und einen Druckluftversorgungsanschluss 2. Zwischen Verdichteranschluss 1 und Druckluftversorgungsanschluss 2 erstreckt sich eine Pneumatikhauptleitung 131 mit einem Lufttrockner 110. Die Druckluftversorgungsanlage 102 umfasst weiterhin einen pneumatisch mit dem Verdichteranschluss 1 verbundenen Verdichter 106, der dazu dient, Luft 51 aus der umgebenden Atmosphäre 50 anzusaugen und zu komprimieren und die komprimierte Luft als Druckluft 52 über den Verdichteranschluss 1 an den Lufttrockner 110 weiterzuleiten. In diesem Ausführungsbeispiel ist der Verdichter 106 als Kompressor ausgeführt. Der Lufttrockner 110, ist ausgebildet, aus der umgebenden Atmosphäre 50 angesaugte Luft 51 zu trocknen und über den Druckluftversorgungsanschluss 2 an ein Luftverteilermodul 108 weiterzuleiten. Der Lufttrockner 110 ist auch pneumatisch mit einem Auslass 3 verbunden, durch den die Druckluftversorgungsanlage 102 entlüftet werden kann.

Das Luftverteilermodul 108 ist Bestandteil der Luftfederanlage 121. Das Luftverteilermodul 108 umfasst einen Drucksensor 116 zum Erfassen einer Höhe des Druckes in dem Luftverteilermodul 108. Das Luftverteilermodul 108 dient dazu, Druckluft 54 an die Gallerie 129 weiterzuleiten.

Die Druckluftversorgungsanlage 102 umfasst weiterhin eine Steuergerät 100 zum Steuern der Druckluftversorgungsanlage 102. Die Steuergerät 100 ist über eine Datenverbindung 55 mit dem Drucksensor 116 des Luftverteilermoduls 108 verbunden. Über die Datenverbindung 55 kann ein Drucksensorsignal, das die Höhe eines erfassten Druckes repräsentiert, von dem Drucksensor 116 an das Steuergerät 100 übertragen werden. Das Steuergerät 100 ist weiterhin über eine Steuerleitung 56 mit dem Verdichter 106 verbunden, um den Verdichter 106 zu steuern. Beispielsweise kann das Steuergerät 100 den Verdichter 106 auf Basis einer von dem Drucksensor 116 erfassten Höhe des Druckes steuern, die über die Datenverbindung 55 mittels eines Drucksensorsignals von dem Drucksensor 116 an das Steuergerät 100 übertragen worden ist.

Die Luftfederanlage 121 umfasst vier Luftfedern 118, 120, 122, 124, die über die Gallerie 129 mit Druckluft 54 befüllt werden können, um das Fahrzeug 101 relativ zum Untergrund anzuheben. Wenn Druckluft 54 aus den Luftfedern 118, 120, 122, 124 in die Druckluftversorgungsanlage 102 abgeführt wird, wird das Fahrzeug 101 relativ zum Untergrund abgesenkt. Die vier Luftfedern 118, 120, 122, 124 können als Ausgleichsvolumen 113 genutzt werden, um einen Überdruck in dem Lufttrockner 110 zu reduzieren. Es kann also Druckluft 52 aus dem Lufttrockner 110, der ein Überdruckvolumen 109 darstellt, in das Ausgleichsvolumen 113 abgeführt werden, um den Druck im Überdruckvolumen 109 zu reduzieren. Es ist bevorzugt, wenn die Luftfedern 118, 120, 122, 124 zeitlich nacheinander einzeln oder in Gruppen von zwei Luftfedern 118, 120, 122, 124 mit Druckluft aus dem Überdruckvolumen 109 befüllt werden. Es ist insbesondere bevorzugt, wenn die Luftfedern 118, 120, 122, 124 in einem Befüllschritt jeweils mit einer vergleichsweise kleinen Druckluftmenge beaufschlagt werden. Es kann vorteilhaft sein, wenn jede der Luftfedern 118, 120, 122, 124 in mehreren Befüllschritten jeweils mit einer vergleichsweise kleinen Druckluftmenge beaufschlagt wird. Die Luftfedern 118, 120, 122, 124 können also in einer bestimmten Reihenfolge mehrmals zeitlich nacheinander einzeln oder in Gruppen von zwei Luftfedern 118, 120, 122, 124 mit Druckluft beaufschlagt werden. Dadurch kann ein abruptes Anheben des Fahrzeugs verhindert werden. Sollte die Druckreduzierung in dem Überdruckvolumen 109 nicht ausreichen, kann Druckluft aus dem Überdruckvolumen 109 zusätzlich in einen Zwischenspeicher 107 abgeführt werden. Im vorliegen Fall wird der Zwischenspeicher 107 durch den Verdichter gebildet. Es können aber auch andere Komponenten der Druckluftversorgungsanlage 102 als Zwischenspeicher 107 verwendet werden. Der Zwischenspeicher 107 bildet dann zusammen mit den Luftfedern 118, 120, 122, 124 das Ausgleichsvolumen 113.

Es ist möglich, dass im Betrieb der Druckluftversorgungsanlage 102 zunächst die Luftfedern 118, 120, 122, 124 mit Druckluft beaufschlagt werden und anschließend der Zwischenspeicher 107 in einem letzten Schritt unmittelbar vor einem Entlüften der Druckluftversorgungsanlage 102 mit Druckluft aus dem Überdruckvolumen 109 befüllt wird. Dadurch kann in dem Überdruckvolumen 107 und insbesondere am Auslass der Druckluftversorgungsanlage 102 ein Druckniveau erreicht werden, dass unterhalb des Druckniveaus der Luftfedern 118, 120, 122, 124 liegt. Ein Entlüften der Druckluftversorgungsanlage 102 in die Umgebung kann dann bei einem noch weiter reduzierten Druck am Auslass erfolgen. Das Entlüften der Druckluftversorgungsanlage 102 führt dann zu einem vergleichsweise noch geringeren Geräuschpegel.

Die Luftfedern 118, 120, 122, 124 sind jeweils über die Luftfederventile 126, 128, 130, 132 und über die Gallerie 129 mit dem Luftverteilermodul 108 pneumatisch verbunden. Bei geöffneten Luftfederventilen 126, 128, 130, 132 können die Luftfedern 118, 120, 122, 124 entsprechend mit Druckluft 54 befüllt oder entleert werden.

Fig. 1B zeigt schematisch eine mit einer Luftfederanlage 121' pneumatisch verbundene Druckluftversorgungsanlage 102', bei der für den Auslass 3' keine separate Pneumatikleitung vorgesehen ist. Die Druckluftversorgungsanlage 102' und die Luftfederanlage 121' bilden zusammen ein Pneumatiksystem 103'.

Die in Bezug auf Fig. 1A beschriebene Druckluftversorgungsanlage 102 unterscheidet sich insbesondere dadurch von der Druckluftversorgungsanlage 102', dass bei der Druckluftversorgungsanlage 102 für den Auslass 3' keine separate Pneumatikleitung vorgesehen ist.

Entsprechend ist der Lufttrockner 110' der Druckluftversorgungsanlage 102' pneumatisch mit dem Verdichter 106' und dem Luftverteilermodul 108' verbunden. Der Verdichter 106' ist wiederum pneumatisch mit dem Verdichteranschluss 1' und dem Auslass 3' über eine Pneumatikleitung verbunden. Von dem Verdichter 106' aus der umgebenden Atmosphäre 50' angesaugte Luft 51' wird über einen Verdichteranschluss 1' zu dem Lufttrockner 110' geleitet und von diesem getrocknet. Die komprimierte Luft wird von dem Lufttrockner 110' als trockene Druckluft 52' über den Druckluftversorgungsanschluss 2' an das Luftverteilermodul 108' der Luftfederanlage 121 'weitergeleitet.

Die Luftfederanlage 121' umfasst die Luftfedern 118', 120', 122', 124', die durch Öffnen der jeweiligen Luftfederventile 126', 128', 130', 132' mit Druckluft 52' beaufschlagt werden können, um so das Fahrzeug 101' anzuheben. Die Luftfedern 118', 120', 122', 124' können als Ausgleichsvolumen 113' verwendet werden, um einen Druck in dem Lufttrockner 110', der ein Überdruckvolumen 109' darstellt, zu reduzieren. Falls der Druck in dem Lufttrockner 110' noch weiter reduziert werden soll, kann zusätzlich zu den Luftfedern 118', 120', 122', 124' auch ein Zwischenspeicher 107' der Druckluftversorgungsanlage 102' als Ausgleichsvolumen 113' verwendet werden. Als Zwischenspeicher 107' kann zum Beispiel der Verdichter 106' der Druckluftversorgungsanlage 102' verwendet werden.

Die Druckluftversorgungsanlage 102' umfasst ein Steuergerät 100', das über eine Datenverbindung 55' mit einem Drucksensor 116' des Luftverteilermoduls 108' verbunden ist. Der Drucksensor 116' ist ausgebildet, eine Höhe des Druckes in dem Luftverteilermodul 108' zu messen und ein Drucksensorsignal, welches die erfasste Höhe des Druckes in dem Luftverteilermodul 108' repräsentiert, über die Datenverbindung 55' an das Steuergerät 100' zu übertragen. Über eine Steuerleitung 56' ist das Steuergerät 100' mit dem Verdichter 106' zum Steuern des Verdichters 110' verbunden. Die Steuerung des Verdichter 106' durch das Steuergerät 100' kann auf Basis der von dem Drucksensor 116' gemessenen Höhe des Druckes in dem Luftverteilermodul 108' durchgeführt werden.

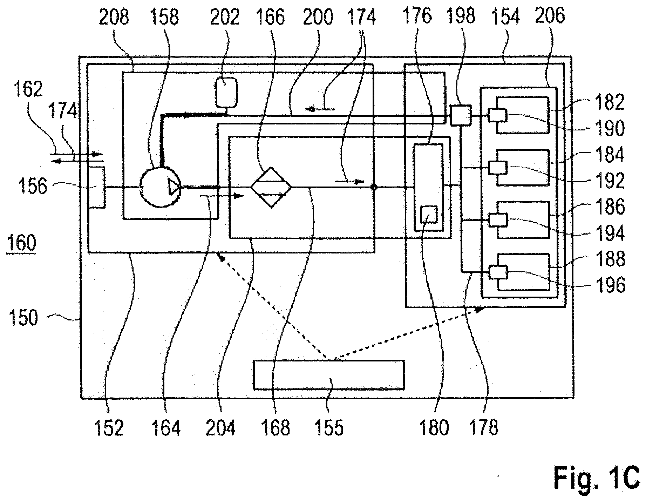

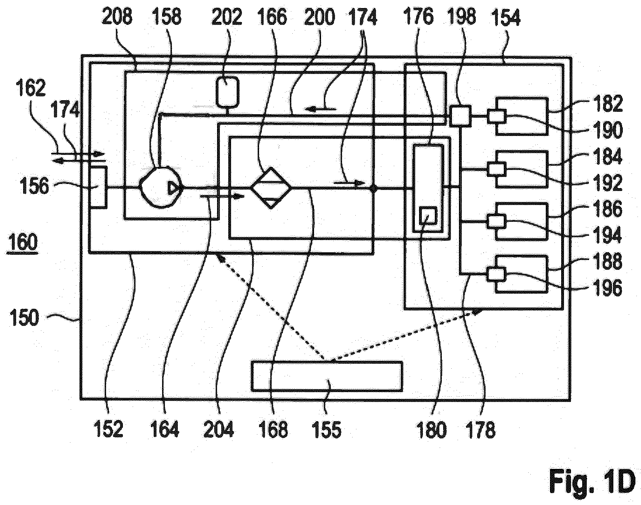

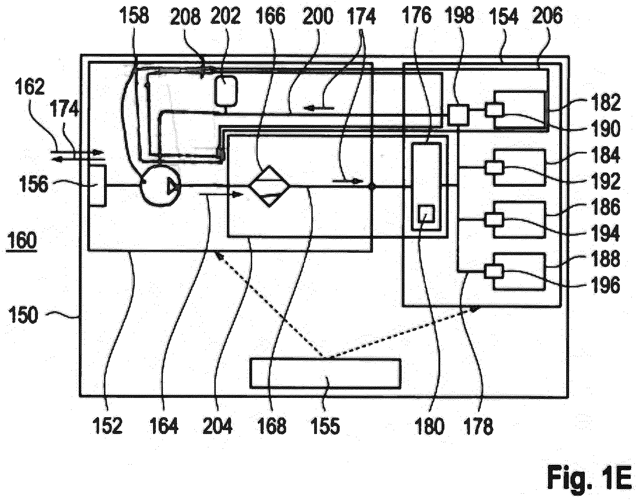

Fig. 1C, Fig. 1D und Fig. 1E zeigen schematisch ein Pneumatiksystem 150 in unterschiedlichen Betriebssituationen. Das Pneumatiksystem 150 weist eine Druckluftversorgungsanlage 152 und eine Luftfederanlage 154 auf. Die Druckluftversorgungsanlage 152 und die Luftfederanlage 154 werden mittels eines Steuergeräts 155 gesteuert.

Die Druckluftversorgungsanlage 152 weist einen Einlass und einen Auslass auf, die durch ein gemeinsames Druckluftventil 156 realisiert sind. Aus der Umgebung 160 wird Luft 162 mit einem Verdichter 158 angesaugt, komprimiert und als Druckluft 164 zu einem Lufttrockner 166 weitergeleitet. Der Lufttrockner 166 trocknet die komprimierte Luft. Der Lufttrockner 166 ist in einer Pneumatikhauptleitung 168 angeordnet, die sich zwischen einem Verdichteranschluss 170 und einem Druckluftversorgungsanschluss 172 erstreckt. Über den Verdichteranschluss 170 ist der Lufttrockner 166 mit dem Verdichter 158 verbunden. Über den Druckluftversorgungsanschluss 172 ist der Lufttrockner 166 mit der Luftfederanlage 154 verbunden. Von dem Lufttrockner 166 getrocknete Druckluft 174 wird über den Druckluftversorgungsanschluss 172 an die Luftfederanlage 154 weitergeleitet.

An die Luftfederanlage 154 weitergeleitete Druckluft 174 wird über ein Luftverteilermodul 176 an eine Gallerie 178 weitergeleitet. In dem Luftverteilermodul 176 ist en Drucksensor 180 angeordnet, der den Druck in dem Luftverteilermodul 176 misst.

Über die Gallerie 178 wird die Druckluft 174 auf die Luftfedern 182, 184, 186, 188 der Luftfederanlage 154 verteilt. Dafür werden die Luftfederventile 190, 192, 194, 196 der Luftfedern 182, 184, 186, 188 geöffnet.

Zum Befüllen der Luftfedern 182, 184, 186, 188 mit Druckluft 174 wird das Druckluftventil 156 geschlossen und Verdichter 158 in den Leerlauf gesetzt.

Zum Entlüften der Luftfedern 182, 184, 186, 188 werden die entsprechenden Luftfederventile 190, 192, 194, 196 sowie ein Rückflussventil 198 geöffnet. Druckluft 174 gelangt dann über eine Rückflussleitung 200 zurück zu dem Verdichter 158. Die Rückflussleitung 200 ist eine zusätzlich zu der Pneumatikhauptleitung 168 vorgesehene Pneumatikleitung. An die Rückflussleitung 200 pneumatisch angeschlossen ist ein Zusatzspeicher 202, in dem Druckluft 174 zur Druckreduzierung in der übrigen Druckluftversorgungsanlage 152 gespeichert werden kann.

Zum Entlüften der Druckluftversorgungsanlage 152 wird das Druckluftventil 156 geöffnet, so dass Druckluft 174 in die Umgebung 160 abgeführt werden kann.

In Fig. 1C ist eine Betriebssituation gezeigt, in der Lufttrockner 164 und Luftverteilermodul 180 ein Überdruckvolumen 204 bilden. In diesem Überdruckvolumen 204 können im Betrieb des Pneumatiksystems 150 Drücke von bis zu 18 bar auftreten. Um einen Überdruck in dem Überdruckvolumen 204 zu reduzieren ohne dabei in die Umgebung 160 entlüften zu müssen, soll der Überdruck in ein Ausgleichsvolumen 206 abgeführt werden. In der Betriebssituation der Fig. 1C wird das Ausgleichsvolumen 206 durch die Luftfedern 182, 184, 186, 188 gebildet. Zur Druckreduzierung in dem Überdruckvolumen 204 wird Druckluft 174 zeitlich nacheinander einzeln oder in Gruppen von zwei Luftfedern 182, 184, 186, 188 auf die Luftfedern 182, 184, 186, 188 verteilt. Hierbei ist es bevorzugt, wenn Druckluft 174 zunächst in diejenige der Luftfedern 182, 184, 186, 188 abgeführt wird, die die geringste Druckdifferenz zu dem Druck 174 in dem Luftverteilermodul 176 aufweist.

Druckluft 174 kann vorteilhaft zusätzlich in einen Zwischenspeicher 208 abgeführt werden. Dies ist insbesondere dann von Vorteil, wenn die Druckreduzierung in die Luftfedern 182, 184, 186, 188 nicht ausreichend oder nicht schnell genug durchgeführt werden kann. Der Zwischenspeicher 208 umfasst vorliegend ein Verbindungsvolumen. Das Verbindungsvolumen kann durch die Rückflussleitung 200 allein oder durch die Rückflussleitung 200 und einen optional vorteilhaft zudem verfügbaren Zusatzspeicher 202 gebildet werden. Der Zusatzspeicher 202 kann dazu vorhanden sein und zuschaltbar mit der Rückflussleitung 200 pneumatisch verbunden sein; beispielsweise über ein hier nicht explizit gezeigtes pneumatisches Schaltventil oder ein Rückschlagventil oder einen anderen geeigneten pneumatischen Aktor. Der Zusatzspeicher 202 kann auch frei pneumatisch zugänglich vorgesehen sein und beispielsweise über eine geeignete Drossel mit der Rückflussleitung 200 pneumatisch verbunden sein. Der Zwischenspeicher 208 kann zusätzlich zum Verbindungsvolumen zudem mit dem Volumen des Verdichters 158 gebildet werden, also zusätzlich zu der Rückflussleitung 200 und zusätzlich zu dem optionalen Zusatzspeicher 202; also die Rückflussleitung 200, den optional verfügbaren Zusatzspeicher 202 und den Verdichter 158 umfassen. Grundsätzlich kann man insofern das Verbindungsvolumen als pneumatische Verbindung (ggfs. mit zudem verfügbarem Zusatzvolumen) zwischen Rückflussventil 198 und Verdichter 158 auffassen; insbesondere umfasst das Verbindungsvolumen die Rückflussleitung 200 und den optional verfügbaren Zusatzspeicher 202. Der Zwischenspeicher 208 kann durch das Verbindungsvolumen allein oder allein durch das Volumen oder ein Teil des Volumens des Verdichters 158 oder in Kombination derselben gebildet werden. Diese Varianten des Zwischenspeichers 208, insbesondere des Verbindungsvolumens, können unabhängig von der hier beispielhaft erläuterten Ausführungsform zur Weiterbildung des Konzepts der Erfindung vorgesehen sein, insbesondere auch bei den anderen in dieser Anmeldung erläuterten Ausführungsformen vorgesehen sein.

Das Ausgleichsvolumen 206 kann auch, wie in Fig. 1D gezeigt, nur den Zwischenspeicher 208 und nicht die Luftfedern 182, 184, 186, 188 umfassen. Wiederum alternativ kann das Ausgleichsvolumen 206 nicht alle der Luftfedern 182, 184, 186, 188 umfassen, zum Beispiel nur eine oder zwei der Luftfedern 182, 184, 186, 188. Beispielsweise zeigt Fig. 1E eine Betriebssituation, in der das Ausgleichsvolumen 206 durch einen Zwischenspeicher 208 und nur eine Luftfeder 182 gebildet wird, wobei der Zwischenspeicher 208 nur ein durch die Rückflussleitung 200 und den Zusatzspeicher 202 gebildetes Verbindungsvolumen umfasst. Diese Varianten des Ausgleichsvolumens 206 können unabhängig von der hier beispielhaft erläuterten Ausführungsform zur Weiterbildung des Konzepts der Erfindung vorgesehen sein, insbesondere auch bei den anderen in dieser Anmeldung erläuterten Ausführungsformen vorgesehen sein.

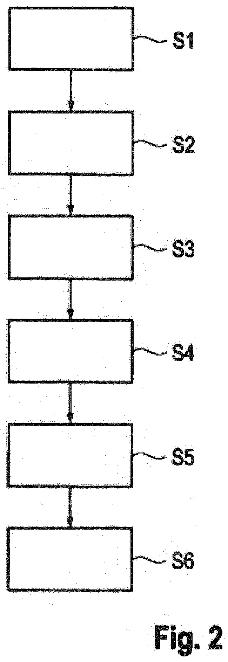

Fig. 2 zeigt schematisch ein Ablaufdiagramm für ein an sich bekanntes Verfahren zum Betreiben einer Druckluftversorgungsanlage. Mit dem Verfahren kann insbesondere der Druck am Auslass der Druckluftversorgungsanlage reduziert werden, so dass ein Entlüften der Druckluftversorgungsanlage bei einem vergleichsweise geringeren Druck erfolgen kann. Aufgrund des Entlüftens bei einem vergleichsweise geringeren Druck, ist auch der Geräuschpegel, der beim Entlüften der Druckluftversorgungsanlage entsteht, vergleichsweise geringer.

In dem Verfahren wird zunächst ein Verdichter der Druckluftversorgungsanlage in den Leerlauf gebracht (Schritt S1) und das Auslassventil eines Auslasses der Druckluftversorgungsanlage geschlossen (Schritt S2). Wenn sich der Verdichter im Leerlauf befindet und das Auslassventil geschlossen ist, werden die Luftfederventile geöffnet (Schritt S3). Durch öffnen der Luftfederventile strömt Druckluft aus der Druckluftversorgungsanlage in die Luftfedern einer pneumatische mit der Druckluftversorgungsanlage verbundenen Luftfederanlage. Es stellt sich dann ein Gleichgewichtsdruck in der Druckluftversorgungsanlage ein, der vergleichsweise geringer ist als der Druck, der vor dem Öffnen der Luftfederventile in der Druckluftversorgungsanlage vorgeherrscht hat (Schritt S4). Nachdem sich ein Gleichgewichtsdruck in der Druckluftversorgungsanlage und der Luftfederanlage eingestellt hat, werden die Luftfederventile wieder geschlossen (Schritt S5). Die Luftfederventile werden in dem Verfahren alle gemeinsam geöffnet und geschlossen. Dadurch wird das Fahrzeug durch Beaufschlagen der Luftfedern mit Druckluft in einem Schritt angehoben, was sich negativ auf die Fahreigenschaften des Fahrzeugs auswirken kann.

Nachdem die Luftfederventile wieder geschlossen wurden, wird das Auslassventil geöffnet (Schritt S6), um die Druckluftversorgungsanlage bei einem vergleichsweise geringeren Druck am Auslass zu entlüften.

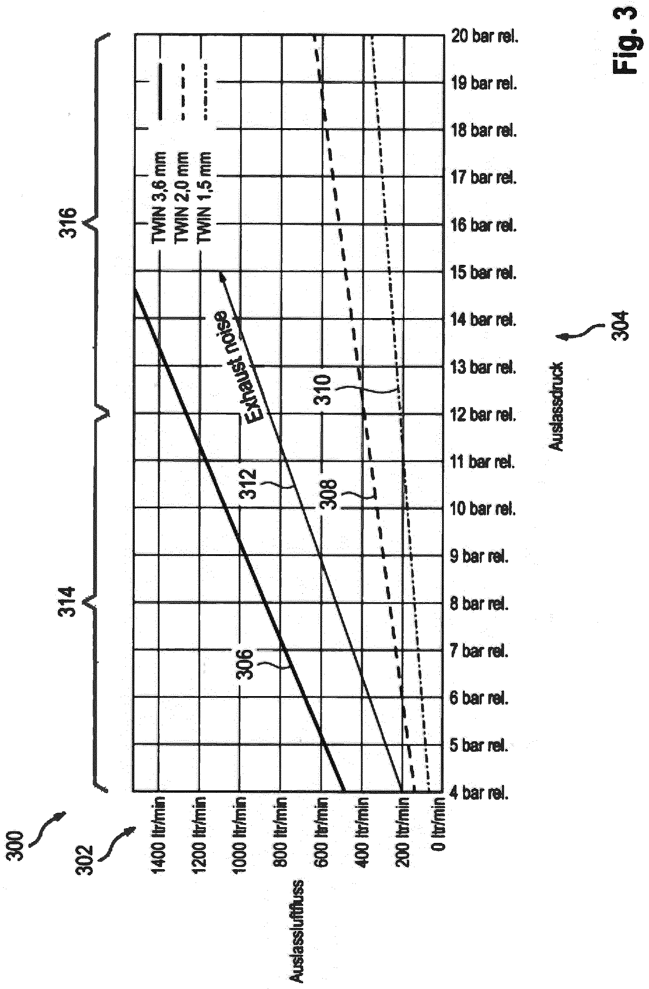

Fig. 3 zeigt ein Diagramm 300, in dem für unterschiedliche Drosseldurchmesser eines Lufttrockners die an die umgebende Atmosphäre abgegebene Druckluftmenge 302 über dem Druck am Auslass 304 angegeben wird.

**In** dem Diagramm 300 sind drei Kurven 306, 308, 310 gezeigt, die für jeweils unterschiedliche Drosseldurchmesser eines Lufttrockners die Zunahme der Druckluftmenge 302 in Relation zu dem am Auslass anliegenden Druck 304 setzen.

Alle drei Kurven 306, 308, 310 zeigen einen linearen Zusammenhang zwischen der Höhe der abgegebenen Druckluftmenge 302 als Funktion der Höhe des Druckes am Auslass 304.

Die Kurve 306 repräsentiert dabei den linearen Zusammenhang zwischen der Höhe der abgegebenen Druckluftmenge 302 als Funktion der Höhe des Druckes am Auslass 304 für einen Drosseldurchmesser von 3,6 mm.

Die Kurve 308 repräsentiert den linearen Zusammenhang zwischen der Höhe der abgegebenen Druckluftmenge 302 als Funktion der Höhe des Druckes am Auslass 304 für einen Drosseldurchmesser von 2,0 mm.

Die Kurve 310 repräsentiert den linearen Zusammenhang zwischen der Höhe der abgegebenen Druckluftmenge 302 als Funktion der Höhe des Druckes am Auslass 304 für einen Drosseldurchmesser von 1,5 mm.

**In** dem Diagramm ist weiterhin symbolisch die Zunahme des Geräuschpegels am Auslass durch einen Pfeil 312 dargestellt. Der Pfeil 312 zeigt an, dass entsprechend mit zunehmender Höhe der abgegebenen Druckluftmenge 302 bei entsprechend hohem Druck am Auslass 304 auch der Geräuschpegel am Auslass beim Entlüften einer Druckluftversorgungsanlage und insbesondere des Lufttrockners und/oder des Luftverteilermoduls der Druckluftversorgungsanlage zunimmt.

Dabei kann der dargestellte Druckbereich von 4 bar bis 20 bar in zwei Teildruckbereiche unterteilt werden, wobei der erste Teildruckbereich 314 den Bereich von 4 bar bis 12 bar repräsentiert und der zweite Teildruckbereich 316 den Bereich von 12 bar bis 20 bar repräsentiert. Insbesondere in dem Teildruckbereich zwischen 12 bar und 20 bar führt ein Entlüften der Druckluftversorgungsanlage zu einem Geräuschpegel der vergleichsweise hoch ist. Es ist daher bevorzugt die Druckluftversorgungsanlage nicht zu Entlüften, wenn der Druck am Auslass innerhalb dieses zweiten Teildruckbereichs 316 liegt. Sollte der Druck am Auslass innerhalb des zweiten Teildruckbereichs 316 liegen und trotzdem die Notwendigkeit bestehen, des Lufttrockner und/oder das Luftverteilermodul zu Entlüften, um den dort vorherrschenden Druck zu reduzieren, ist es daher bevorzugt, Druckluft aus dem Lufttrockner und/oder dem Luftverteilermodul in die Luftfedern einer Luftfederanlage umzuleiten, um so den Druck im Lufttrockner und/oder dem Luftverteilermodul soweit zu senken, dass der Druck am Auslass in dem ersten Teildruckbereich 314 liegt. Sobald der Druck am Auslass in dem ersten Teildruckbereich 314 liegt, kann die Druckluftversorgungsanlage entlüftet werden, ohne dass dabei ein Geräuschpegel entsteht der oberhalb eines kritischen, z.B. vordefinierten Grenzwertes liegt.

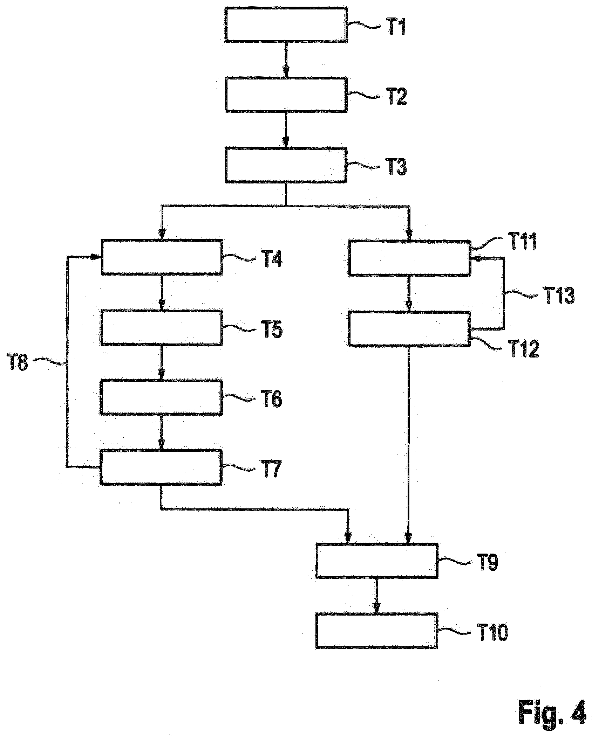

Fig. 4 zeigt schematisch ein Ablaufdiagramm für ein Verfahren zum Betreiben einer Druckluftversorgungsanlage, in dem Druckluft zeitlich nacheinander einzeln in Luftfedern oder zeitlich nacheinander in Gruppen von zwei Luftfedern abgeführt wird.

In dem Verfahren wird zunächst der Verdichter der Druckluftversorgungsanlage in den Leerlauf gebracht (Schritt T1) und das Auslassventil des Auslasses Druckluftversorgungsanlage geschlossen (Schritt T2).

Mittels eines Steuergeräts, z.B. dem Steuergerät der Druckluftversorgungsanlage, wird eine Druckluftmenge und/oder eine Zeitdauer vorgegeben bzw. definiert (Schritt T3) mit der bzw. für die die Luftfedern einer Luftfederanlage mit Druckluft aus dem Lufttrockner und/oder dem Luftverteilermodul der Druckluftversorgungsanlage beaufschlagt werden sollen.

In einer ersten Alternative des Verfahrens werden zeitlich nacheinander die Luftfedern der Luftfedernanlage mit Druckluft aus dem Lufttrockner und/oder dem Luftverteilermodul mit Druckluft beaufschlagt.

Entsprechend wird zunächst das Luftfederventil einer ersten Luftfeder geöffnet und die erste Luftfeder mit einer für diese erste Luftfeder vorgegebenen Druckluftmenge und/oder für eine für diese erste Luftfeder vordefinierte Zeitdauer mit Druckluft beaufschlagt (Schritt T4). Das Luftfederventil der ersten Luftfeder wird nach dem Befüllen mit Druckluft wieder geschlossen und das Luftfederventil einer zweiten Luftfeder geöffnet (Schritt T5), um diese zweite Luftfeder mit Druckluft zu Befüllen. Auch für die zweite Luftfeder kann individuell eine Druckluftmenge und/oder Zeitdauer vorgegeben bzw. vordefiniert werden, mit der bzw. für die die zweite Luftfeder mit Druckluft befüllt wird. Bei geschlossenem Luftfederventil der zweiten Luftfeder wird eine dritte Luftfeder der Luftfederanlage durch Öffnen des Luftfederventils dieser dritten Luftfeder mit Druckluft beaufschlagt (Schritt T6). Auch für die dritte Luftfeder kann entsprechend eine Druckluftmenge oder eine Zeitdauer vorgegeben bzw. vordefiniert werden. Das Luftfederventil der dritten Luftfeder wird anschließend wieder geschlossen und das Luftfederventil der vierten Luftfeder des Fahrzeugs geöffnet, um diese mit Druckluft zu Befüllen (Schritt T7), z.B. mit einer vorgegebenen Druckluftmenge und/oder für eine vordefinierte Zeitdauer.

Sollte die Druckluftmenge, die aus dem Lufttrockner und/oder dem Luftverteilermodul in die Luftfedern abgeführt wurde, nicht ausreichen, um den Druck in dem Lufttrockner und/oder dem Luftverteilermodul um den gewünschten Betrag zu senken, können die Luftfedern erneut mit einer vorgegebenen Druckluftmenge und/oder für eine vordefinierte Zeitdauer mit Druckluft befüllt werden, so lange, bis der Druck am Auslass der Druckluftversorgungsanlage einen bestimmten Wert erreicht hat (Schritt T8). Dadurch kann der Druck am Auslass sukzessive in einer Vielzahl von Schritten reduziert werden, bis der Druck am Auslass der Druckluftversorgungsanlage unterhalb eines bestimmten, z.B. vorgegebenen Grenzwertes liegt. Der Grenzwert ist insbesondere so vorgegeben, dass beim Entlüften der Druckluftversorgungsanlage lediglich ein geringer Geräuschpegel entsteht.

Nachdem die Luftfedern mit Druckluft befüllt wurden und alle Luftfederventile geschlossen sind, kann der Verdichter der Druckluftversorgungsanlage wieder aktiviert (Schritt T9) und das Auslassventil geöffnet werden (Schritt T10). Die Druckluftversorgungsanlage wird dann entlüftet. Dabei wird ein Teil der an die umgebende Atmosphäre abgegebenen Druckluft in dem aktivierten Verdichter gespeichert, so dass die tatsächlich an die umgebende Atmosphäre abgegebene Druckluftmenge zusätzlich reduziert wird.

Zusätzlich kann in dem Verfahren vorgesehen sein, dass das Auslassventil der Druckluftversorgungsanlage während des Entlüften mehrmals geöffnet und geschlossen wird, z.B. mit einer vorgegebenen Frequenz, sodass die Druckluft in mehreren Schritten an die umgebene Atmosphäre abgegeben wird. Dadurch kann der beim Entlüften entstehende Geräuschpegel weiter gesenkt werden.

In einer zweiten Alternative des Verfahrens werden die Luftfedern der Luftfederanlage in Gruppen von zwei Luftfedern gemeinsam mit Druckluft befüllt. Entsprechend werden von zwei Luftfedern gleichzeitig die Luftfederventile geöffnet (Schritt T11), wobei die beiden Luftfederventile der beiden übrigen Luftfedern geschlossen sind. Anschließend werden dann die beiden übrigen Luftfedern mit Druckluft beaufschlagt, wobei währenddessen die beiden Luftfederventile der bereits befüllten Luftfedern geschlossen sind (Schritt T12).

Es ist bevorzugt, dass eine Gruppe von zwei Luftfedern die beiden Luftfedern eine Vorderachse oder eine Hinterachse eines Fahrzeugs umfasst. Gemäß dieser zweiten Alternative des Verfahrens können z.B. zunächst die beiden Luftfedern der Vorderachse des Fahrzeugs mit Druckluft beaufschlagt werden und zeitlich anschließend die beiden Luftfedern der Hinterachse oder umgekehrt.

Auch wenn die Luftfedern in Gruppen von zwei Luftfedern mit Druckluft beaufschlagt werden ist es bevorzugt, wenn die Luftfedern mit einer vorgegebenen Druckluftmenge und/oder für eine vordefinierte Zeitdauer mit Druckluft beaufschlagt werden.

Nachdem die Luftfedern in Gruppen von zwei Luftfedern jeweils einmal mit Druckluft befüllt wurden, können diese erneut mit Druckluft befüllt werden, z.B. mit einer vorgegebenen Druckluftmenge und/oder für eine vordefinierte Zeitdauer (Schritt T13). Die Luftfedern können entsprechend so lange wiederholt mit Druckluft beaufschlagt werden, bis der Druck am Auslass einen bestimmten, insbesondere kritischen Grenzwert unterschritten hat.

Nachdem der Druck am Auslass den Grenzwert unterschritten hat, kann die Druckluftversorgungsanlage wie vorstehend beschrieben durch Ausführen der Schritte T9 und T10 entlüftet werden.

Alternativ oder zusätzlich zu einem sequentiellen Befüllen der Luftfedern einzeln nacheinander oder in Gruppen von zwei Luftfedern kann in dem Verfahren vorgesehen sein, dass Druckluft in den Verdichter und/oder in ein Verbindungsvolumen abgeführt wird. Wenn Druckluft zusätzlich in den Verdichter und/oder in das Verbindungsvolumen abgeführt wird, kann der Druck in dem Lufttrockner noch weiter reduziert und die Druckluftversorgungsanlage mit einem noch geringeren Geräuschpegel entlüftet werden.

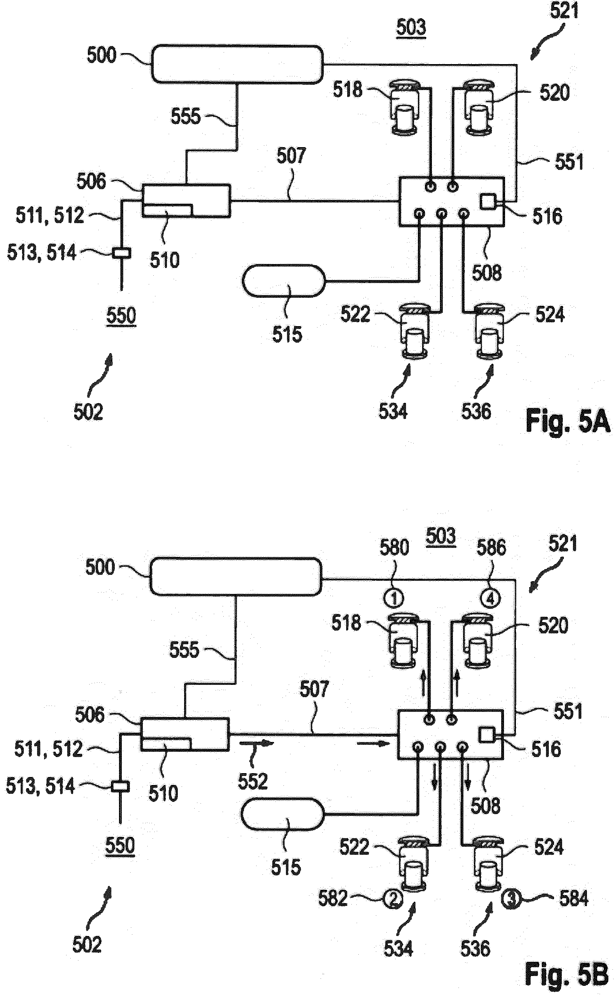

Fig. 5A zeigt schematisch eine mit einer Luftfederanlage 521 pneumatisch verbundene Druckluftversorgungsanlage 502, die als offenes System realisiert ist.

Die Druckluftversorgungsanlage 502 umfasst einen Einlass 511 und einen Auslass, die über einen gemeinsamen Anschluss realisiert sind. Weiterhin umfasst die Druckluftversorgungsanlage 502 einen Lufttrockner 510 und einen Verdichter 506. Wenn der Verdichter 506 Luft aus der umgebenden Atmosphäre 550 ansaugt, strömt diese durch den Einlass 511 und durch das Lufttrockner 510. Die von dem Lufttrockner 510 getrocknete Luft wird von dem Verdichter 506 komprimiert und als Druckluft über eine Pneumatikhauptleitung 507 zu dem Luftverteilermodul 508 der Luftfederanlage 521 geleitet.

Das Luftverteilermodul 508 umfasst einen Drucksensor 516, der eine Höhe des Druckes in dem Luftverteilermodul 508 erfasst. Über eine Datenverbindung 551 ist der Drucksensor 516 mit dem Steuergerät 500 der Druckluftversorgungsanlage 502 verbunden. Mittels der Datenverbindung 551 kann ein Drucksensorsignal von dem Drucksensor 516 an das Steuergerät 500 übertragen werden. Das Drucksensorsignal repräsentiert insbesondere die Höhe des von dem Drucksensor 516 erfassten Druckes. Das Steuergerät 500 ist weiterhin über Steuerleitungen 555 mit dem Verdichter 506 verbunden, so dass das Steuergerät 500 mittels übertragener Steuerbefehle den Verdichter 506 steuern kann. Insbesondere kann das Steuergerät 500 den Verdichter 506 auf Basis der von dem Drucksensor 516 erfassten Höhe des Druckes in dem Luftverteilermodul 508 steuern.

Das Luftverteilermodul 508 umfasst fünf 2/2-Wege-Magnetventile. Eines dieser 2/2-Wege-Magnetventile ist mit einem Druckluftreservoir 515 der Druckluftversorgungsanlage 502. In dem Druckluftreservoir 515 kann Druckluft zwischengespeichert und bei Bedarf z.B. zum Befüllen von Luftfedern verwendet werden.

Die übrigen vier 2/2-Wege-Magnetventile sind als Luftfederventile jeweils den vier Luftfedern 518, 520, 522, 524 der Luftfederanlage 521 zugeordnet.

Mittels dem Luftverteilermodul 508 kann somit durch Öffnen der Luftfederventile Druckluft von dem Verdichter 506 über die Pneumatikhauptleitung 507 in die Luftfedern 518, 520, 522, 524 abgeführt werden.

Dabei befinden sich zwei der Luftfedern 518, 522 an der Vorderachse 534 des Fahrzeugs 503 und die anderen beiden Luftfedern 522, 524 an der Hinterachse 536 des Fahrzeugs 503.

Fig. 5B zeigt schematisch die in Bezug auf Fig. 5A beschriebene Druckluftversorgungsanlage 502. Zusätzlich ist in Fig. 5B durch Pfeile die Umleitung von Druckluft 552 in die Luftfedern 518, 520, 522, 524 eingezeichnet ist.

Wie in dem mit Bezug auf Fig. 4 beschriebenen Verfahren, wird die Druckluft nicht gleichzeitig auf die Luftfedern 518, 520, 522, 524 verteilt. Stattdessen wird die Druckluft 552 zeitlich nacheinander einzeln auf die Luftfedern 518, 520, 522, 524 verteilt. Insbesondere wird jede der Luftfedern 518, 520, 522, 524 zeitlich nacheinander mit einer vorgegebenen Druckluftmenge und/oder für eine vordefinierte Zeitdauer mit Druckluft 552 beaufschlagt.

Gemäß der hier gezeigten Fig. 5B wird zunächst die Luftfeder 518, die sich in Fahrtrichtung des Fahrzeugs 503 rechts an der Vorderachse 534 befindet, mit Druckluft beaufschlagt. Anschließend wird die in Fahrtrichtung des Fahrzeugs 503 links an der Vorderachse 534 angeordnete Luftfeder 522 mit Druckluft 552 beaufschlagt. Alternativ könnten die beiden Luftfedern der Vorderachse 518, 522 auch gemeinsam, d.h. zeitgleich als Gruppe von zwei Luftfedern, mit Druckluft 552 beaufschlagt werden.

Nachdem die Luftfedern 518, 522 der Vorderachse 534 mit Druckluft 552 beaufschlagt wurden, werden die Luftfedern 520, 524 der Hinterachse 536 mit Druckluft 552 beaufschlagt. Beispielweise kann, wie in der Fig. 5B gezeigt, zunächst die Luftfeder 524 mit Druckluft 552 beaufschlagt werden, die sich in Fahrtrichtung des Fahrzeugs 503 links an der Hinterachse 536 befindet. Anschließend wird dann die Luftfeder 520 mit Druckluft 552 beaufschlagt, die sich in Fahrtrichtung des Fahrzeugs 503 rechts an der Hinterachse 536 befindet.

Alternativ können die beiden Luftfedern 520, 524 der Hinterachse 536 auch zeitgleich als Gruppe von zwei Luftfedern 520, 524 mit Druckluft 552 beaufschlagt werden.

Falls die Luftfedern 518, 520, 522, 524 in Gruppen von zwei Luftfedern 518, 520, 522, 524 mit Druckluft 552 beaufschlagt werden, erfolgt dies zeitlich nacheinander. Beispielsweise könnten zunächst die beiden Luftfedern der Vorderachse 518, 522 mit Druckluft 552 beaufschlagt werden und anschließend die beiden Luftfedern 522, 524 der Hinterachse 536, oder umgekehrt. Auch wenn die Luftfedern 518, 520, 522, 524 in Gruppen von zwei Luftfedern 518, 520, 522, 524 mit Druckluft 552 beaufschlagt werden, wird vorzugsweise eine Druckluftmenge vorgegeben und/oder eine Zeitdauer definiert, mit der bzw. für die die Luftfedern 518, 520, 522, 524 mit Druckluft beaufschlagt werden.

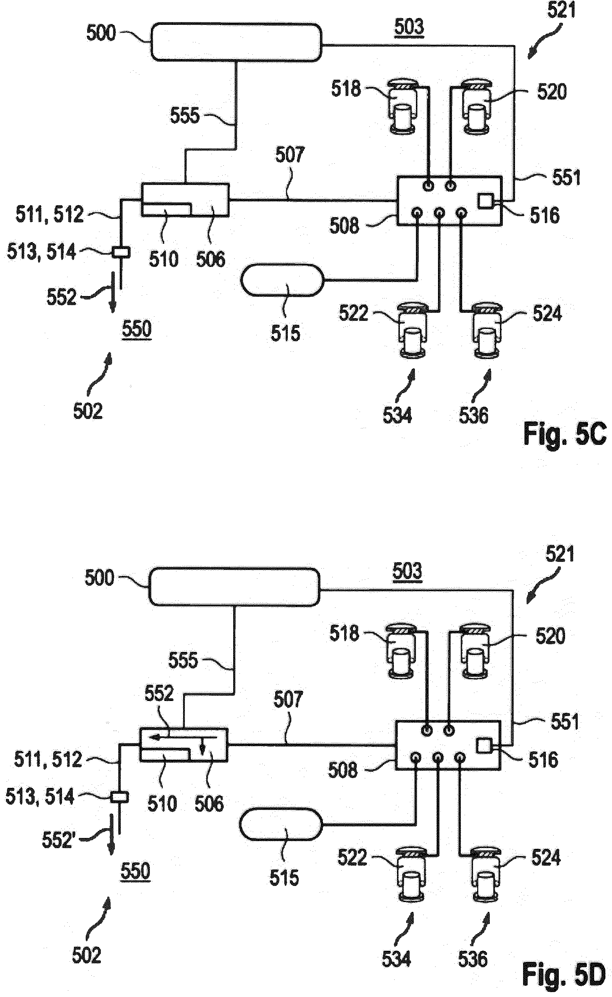

Fig. 5C zeigt schematisch die mit Bezug auf Fig. 5A und Fig. 5B beschriebene Druckluftversorgungsanlage 502 mit dem Unterschied, dass in der Fig. 5C durch Pfeile ein Entlüften der Druckluftversorgungsanlage 502 in die umgebende Atmosphäre 550 eingezeichnet ist.

Zum Entlüften der Druckluftversorgungsanlage 502 werden insbesondere die Luftfederventile geschlossen. Anschließend wird das Auslassventil des Auslasses 512 geöffnet, um die Druckluftversorgungsanlage 502 zu entlüften.

Dabei kann der Verdichter 506 aktiviert werden, um einen Teil der Druckluft zu speichern, so dass effektiv weniger Druckluft 552 an die umgebende Atmosphäre 550 abgegeben wird.

Eine entsprechende Betriebssituation ist in Fig. 5D gezeigt. Fig. 5D zeigt schematisch die in Bezug auf die Fig. 5A bis Fig. 5C beschriebene Druckluftversorgungsanlage 500.

Während des Entlüftens der Druckluftversorgungsanlage 500 ist der Verdichter 506 aktiviert, um einen Teil der Druckluft 552 zu speichern. **In** die umgebende Atmosphäre 550 wird dann eine entsprechend geringere Druckluftmenge 552' abgegeben, so dass der beim Entlüften der Druckluftversorgungsanlage 500 entstehende Geräuschpegel weiter reduziert werden kann.

Wiederum optional kann das Auslassventil des Auslasses 512 mehrfach hintereinander geöffnet und wieder geschlossen werden, so dass die Druckluft 552 jeweils in vergleichsweise kleineren Druckluftmengen an die umgebende Atmosphäre 550 abgegeben wird.

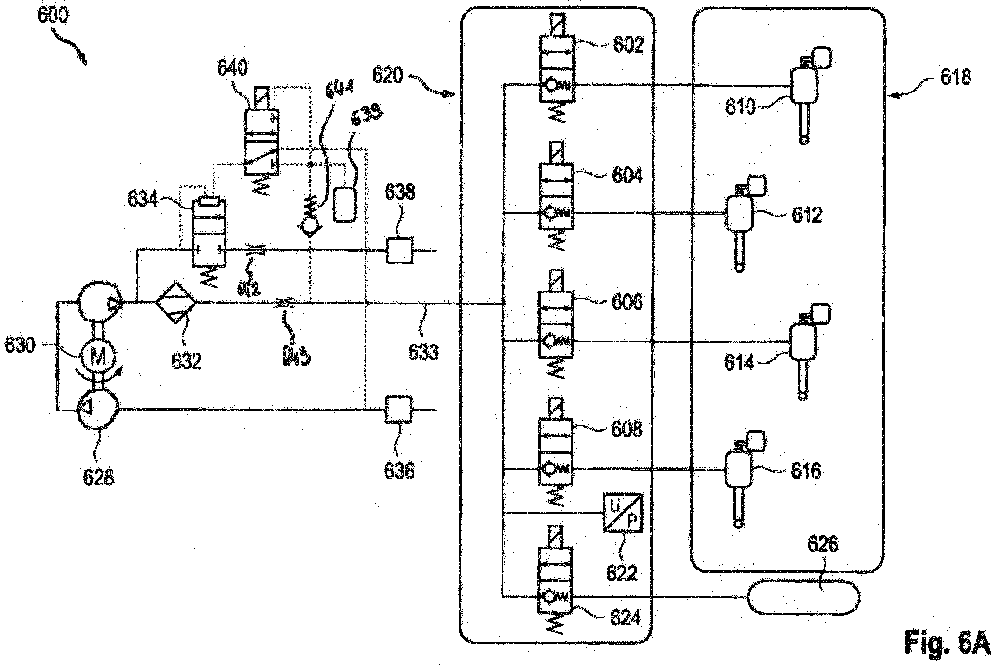

Fig. 6A zeigt eine schematisch dargestellte Druckluftversorgungsanlage 600, die über Luftfederventile 602, 604, 606, 608 mit Luftfedern 610, 612, 614, 616 einer Luftfederanlage 618 pneumatisch verbunden ist. Die Luftfederventile 602, 604, 606, 608 sind als 2/2-Wege-Magnetventile ausgebildet und Bestandteil eines Luftverteilermoduls 620.

Das Luftverteilermodul 620 umfasst weiterhin einen Drucksensor 622 zum Erfassen einer Höhe eines Druckes in dem Luftverteilermodul 620 und eine Gallerie 627 zum Verteilen der Druckluft auf die Luftfederventile 610, 612, 614, 616.

Das Luftverteilermodul 620 umfasst ein weiteres 2/2-Wege-Magnetventil, das ein Reservoirventil 624 ist. An das Reservoirventil 624 ist ein Druckluftreservoir 626 angeschlossen und kann darüber mit Druckluft befüllt werden. Ebenso kann Druckluft aus dem Druckluftreservoir 626 entnommen und z.B. in die Luftfedern 610, 612, 614, 616 abgeführt werden. Durch Befüllen der Luftfedern 610, 612, 614, 616 mit Druckluft kann das Fahrzeug relativ zu einem Untergrund angehoben werden.

Die Druckluftversorgungsanlage 600 umfasst weiterhin einen Verdichter 628, der einen Elektromotor 630 umfasst, mit dem z.B. Kolben zum Komprimieren von angesaugter Luft angetrieben werden können. Druckluft wird dann im Betrieb von dem Verdichter 628 über einen Lufttrockner 632 über eine Pneumatikhauptleitung 633 an das Luftverteilermodul 620 abgeführt. Über das Luftverteilermodul 620 wird also von dem Lufttrockner 632 getrocknete Druckluft auf die Luftfedern 610, 612, 614, 616 und das Druckluftreservoir 626 verteilt. Der Verdichter 628 saugt Luft aus der umgebenden Atmosphäre über einen mit einem Filter versehenen Einlass 636 ein. Durch den Filter wird verhindert, dass der Verdichter 628 durch Partikel verunreinigt wird.

Die Druckluftversorgungsanlage 600 umfasst weiterhin ein pneumatisch mit dem Verdichter 618 und dem Lufttrockner 632 verbundenes Relaisventil 634. Das Relaisventil 634 ist wiederum pneumatisch mit einem Auslass 638 verbunden, der mit Schalldämpfern ausgestattet ist. Durch die Schalldämpfer kann verhindert werden, dass der Geräuschpegel beim Entlüften der Druckluftversorgungsanlage 600 oberhalb eines vorgegebenen Grenzwertes liegt.

Die Druckluftversorgungsanlage 600 umfasst weiterhin einen Zusatzspeicher 639, der über ein Ventil 640 mit Druckluft beaufschlagt werden kann, um den Druck in dem Lufttrockner 632 weiter zu senken. Weiterhin ist ein Rückschlagventil 641 vorgesehen. Die Druckluftversorgungsanlage 600 weist weiterhin Drosseln 642, 643 auf.

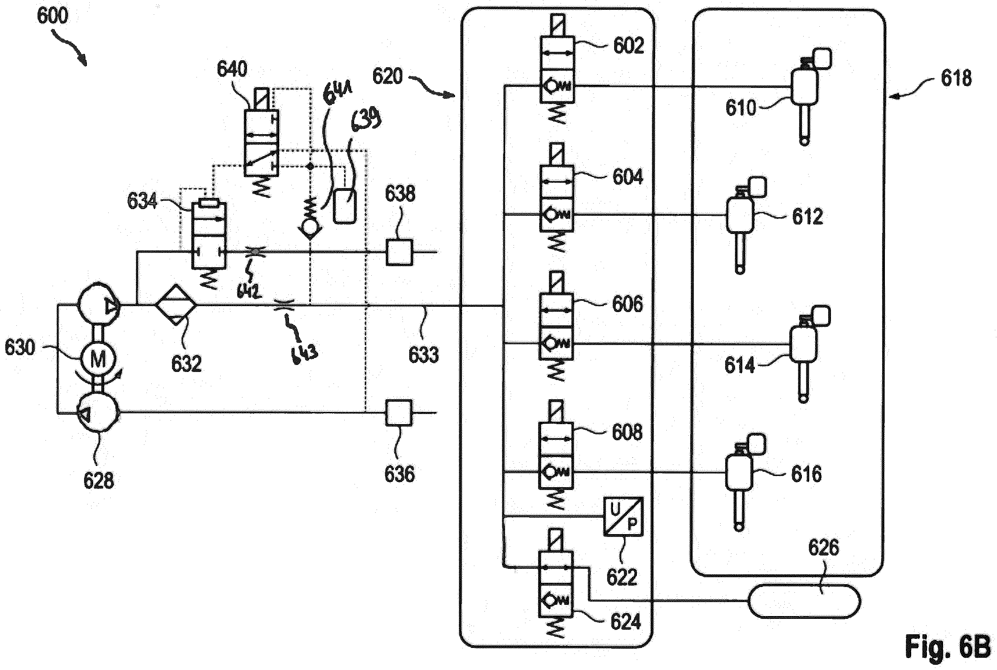

Fig. 6B bis Fig. 6G zeigen die in Bezug auf Fig. 6A beschriebene Druckluftversorgungsanlage 600 in jeweils unterschiedlichen Betriebssituationen.

In Fig. 6B ist die in Bezug auf Fig. 6A dargestellte Druckluftversorgungsanlage 600 gezeigt, wobei das Reservoirventil 624 des Druckluftreservoirs 626 geöffnet ist, um Druckluft in die übrige Druckluftversorgungsanlage 600 umzuleiten. Durch Öffnen des Reservoirventils 624 kann es vorkommen, dass der Druck in der übrigen Druckluftversorgungsanlage 600 ansteigt. Es dann wünschenswert den Druck in der übrigen Druckluftversorgungsanlage 600 wieder zu reduzieren, z.B. durch Entlüften der Druckluftversorgungsanlage 600 durch den Auslass 638. Wenn jedoch der Druck in der Druckluftversorgungsanlage 600 vergleichsweise hoch ist, und z.B. zwischen 12 bar und 20 bar beträgt, ist es bevorzugt, dass der Druck am Auslass 638 vor dem Entlüften reduziert wird, um einen vergleichsweise hohen Geräuschpegel beim Entlüften zu verhindern.

Eine Möglichkeit den Druck am Auslass 638 zu reduzieren besteht darin, zeitlich nacheinander die Luftfedern 610, 612, 614, 616 der Luftfederanlage 618 mit Druckluft aus dem Lufttrockner 632 und/oder dem Luftverteilermodul 620 zu Befüllen.

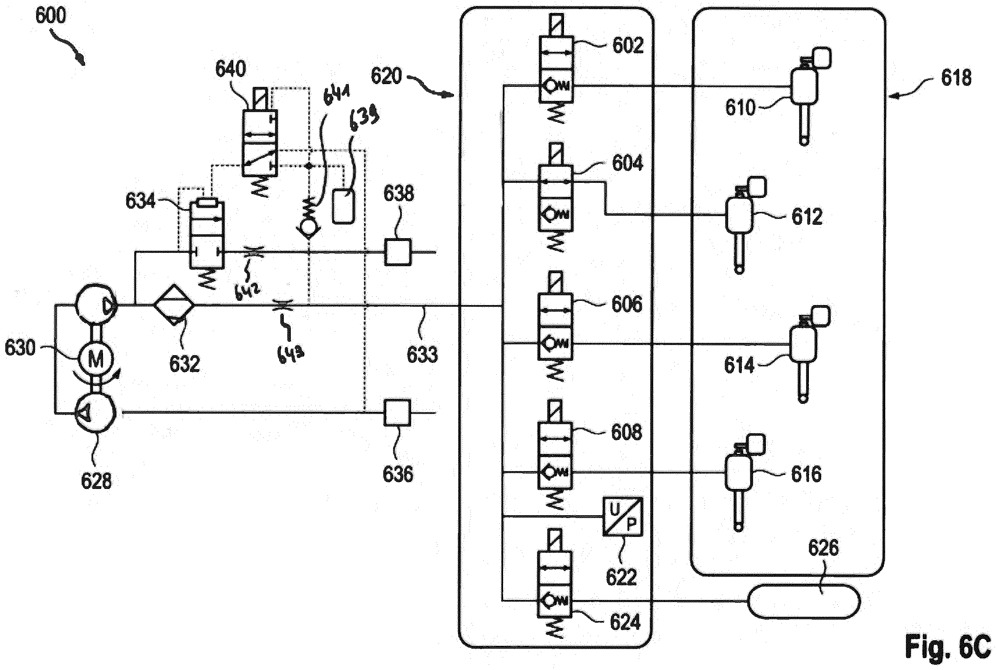

Das zeitlich aufeinanderfolgende Befüllen der Luftfedern 610, 612, 614, 616 der Luftfederanlage 618 ist in den Fig. 6C bis Fig. 6F gezeigt.

In Fig. 6C ist die in Bezug auf die Fig. 6A und Fig. 6B beschriebene Druckluftversorgungsanlage 600 gezeigt, wobei das Luftfederventil 604 einer ersten Luftfeder 612 geöffnet ist, um Druckluft in die erste Luftfeder 612 umzuleiten. Die erste Luftfeder 612 befindet sich in einem Fahrzeug in Fahrtrichtung rechts an der Vorderachse.

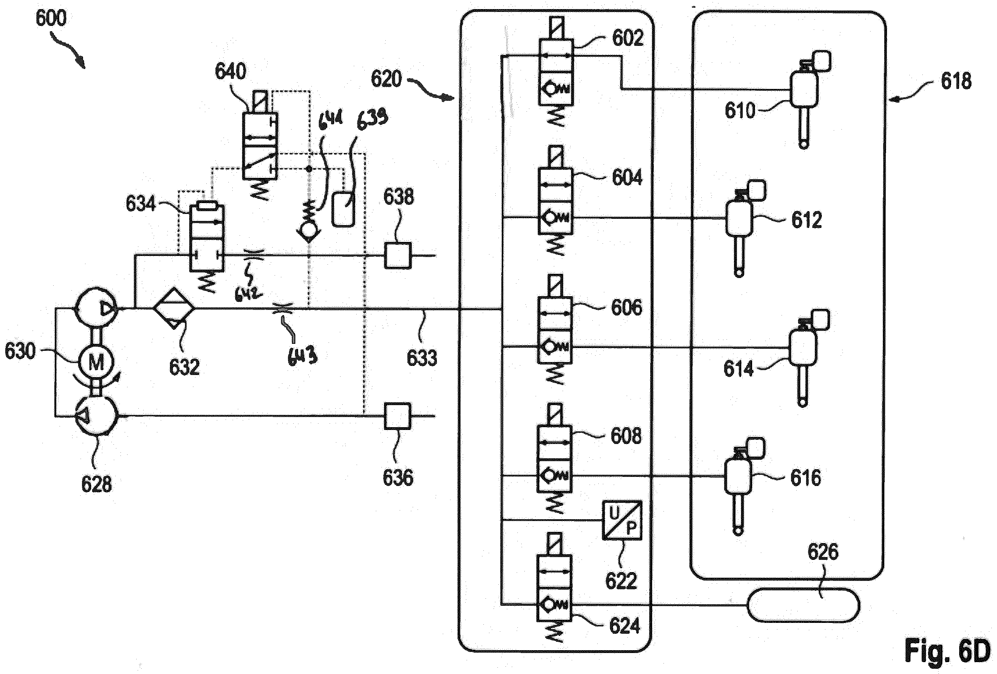

Fig. 6D zeigt die in Bezug auf die Fig. 6A bis Fig. 6C beschriebene Druckluftversorgungsanlage 600 in einer Betriebssituation, in der das Luftfederventil 602 einer zweiten Luftfeder 610 geöffnet ist, um Druckluft in die zweite Luftfeder 610 umzuleiten. Die zweite Luftfeder 610 befindet sich in einem Fahrzeug in Fahrtrichtung links an der Vorderachse.

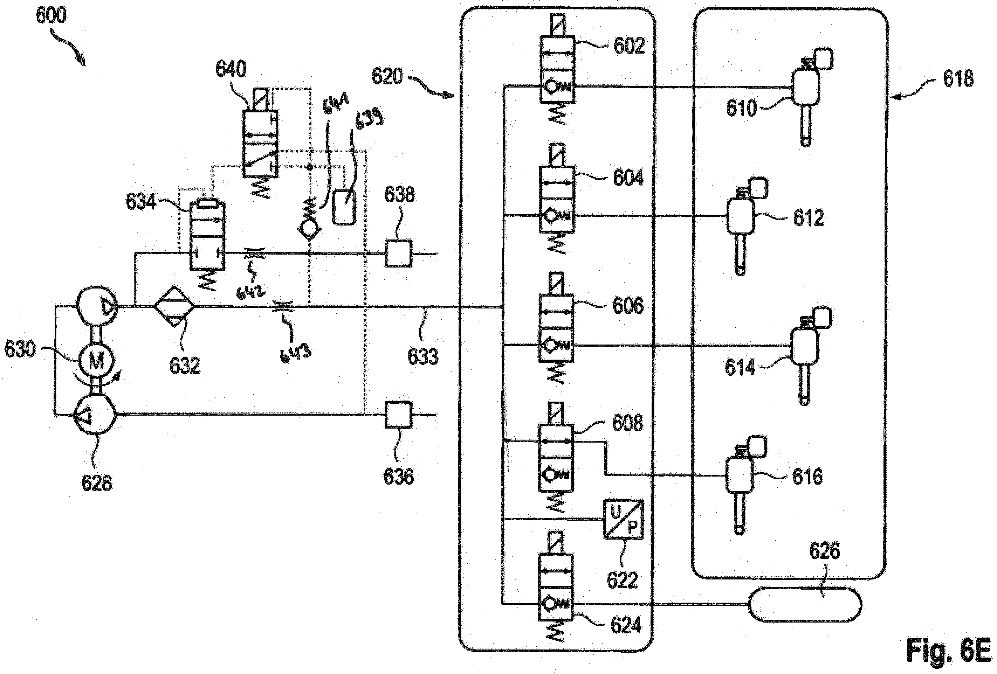

Fig. 6E zeigt die in Bezug auf die Fig. 6A bis Fig. 6D beschriebene Druckluftversorgungsanlage 600 in einer weiteren Betriebssituation, in der das Luftfederventil 608 einer dritten Luftfeder 616 geöffnet ist, um Druckluft in die dritte Luftfeder 616 umzuleiten. Die dritte Luftfeder 616 befindet sich in einem Fahrzeug in Fahrtrichtung rechts an der Hinterachse.

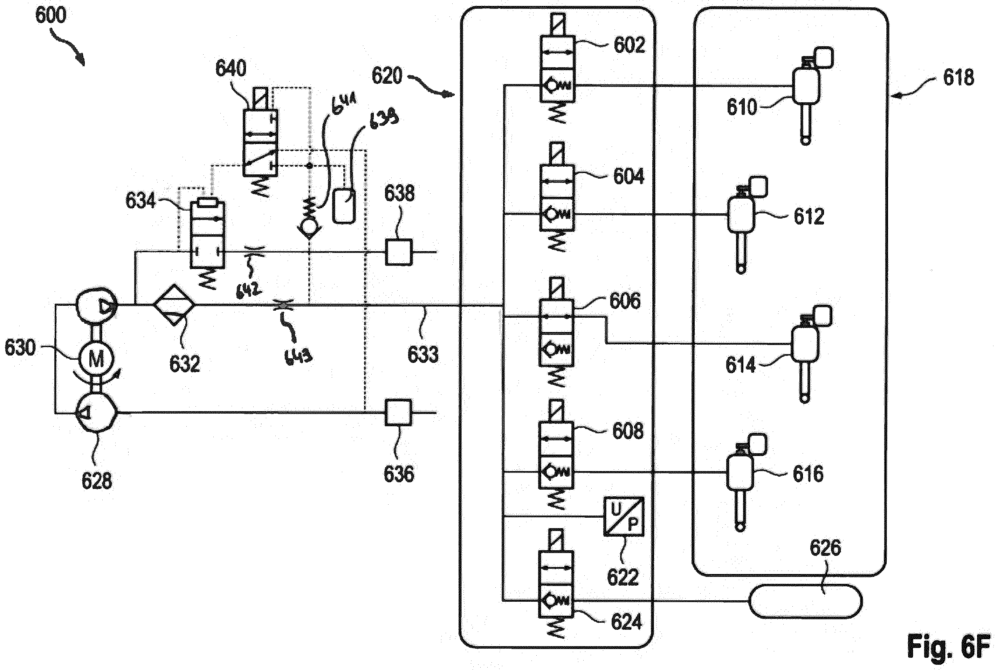

In Fig. 6F ist die in Bezug auf die Fig. 6A bis Fig. 6E beschriebene Druckluftversorgungsanlage 600 in einer wiederum weiteren Betriebssituation gezeigt, in der das Luftfederventil 606 einer vierten Luftfeder 614 geöffnet ist, um Druckluft in die vierte Luftfeder 614 umzuleiten. Die vierte Luftfeder 614 befindet sich in einem Fahrzeug in Fahrtrichtung links an der Hinterachse.

Wie aus den Fig. 6C bis Fig. 6F hervorgeht, ist in der jeweiligen Betriebssituation immer nur ein einziges der Luftfederventile 602, 604, 606, 608 geöffnet und die übrigen Luftfederventile 602, 604, 606, 608 sind geschlossen. Die Luftfedern 610, 612, 614, 616 werden also zeitlich nacheinander einzeln mit Druckluft aus dem Lufttrockner 632 und/oder dem Luftverteilermodul 620 beaufschlagt.

Dabei wird jede der Luftfedern 610, 612, 614, 616 jeweils mit einer vorgegebenen Druckluftmenge und/oder für eine vordefinierte Zeitdauer mit Druckluft befüllt.

Die überschüssige Druckluft aus dem Lufttrockner 632 und/oder dem Luftverteilermodul 620 wird somit portionsweise auf die Luftfedern 610, 612, 614, 616 verteilt. Die Luftfedern 610, 612, 614, 616 werden insbesondere solange zeitlich nacheinander mit Druckluft beaufschlagt, bis die überschüssige Druckluft aus dem Lufttrockner 632 und/oder dem Luftverteilermodul 620 auf die Luftfedern verteilt ist. Die Druckluftmenge der überschüssigen Druckluft bemisst sich insbesondere daran, um welchen Betrag der Druck in dem Lufttrockner 632 und/oder dem Luftverteilermodul 620 reduziert werden muss, damit am Auslass 638 ein Druck vorherrscht, der beim Entlüften der Druckluftversorgungsanlage 600 in die umgebende Atmosphäre nicht zu einem Geräuschpegel oberhalb eines vorgegebenen Grenzwertes führt.

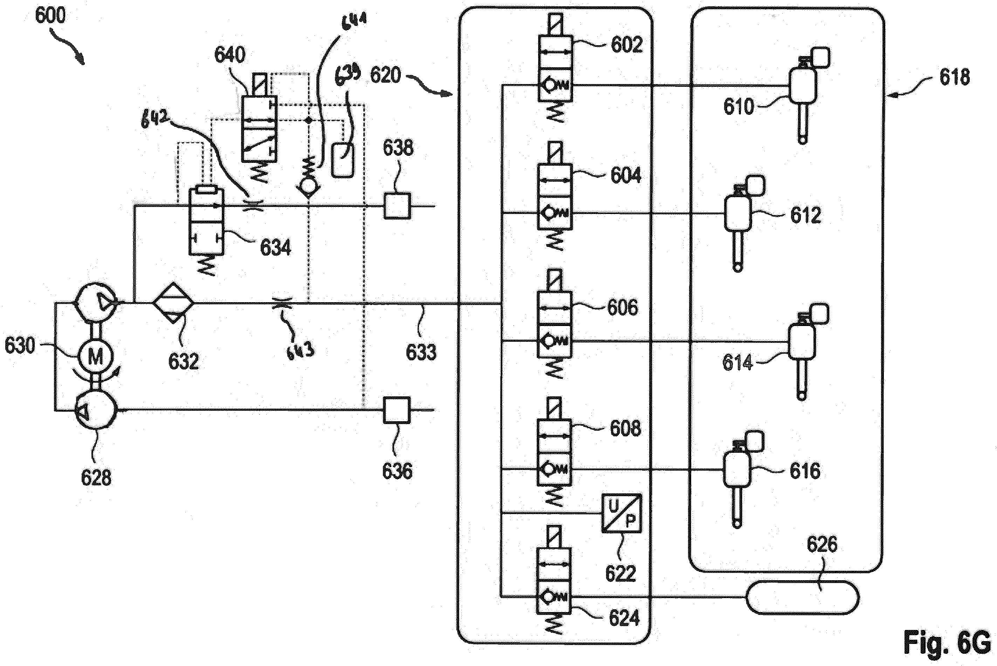

Fig. 6G zeigt die in Bezug auf die Fig. 6A bis Fig. 6F beschriebene Druckluftversorgungsanlage 600 in einer Betriebssituation, in der alle Luftfederventile 602, 604, 606, 608 geschlossen und das Relaisventil 634 und das Ventil 640 zum Befüllen des Zusatzspeichers 639 geöffnet sind. Da vor dem Entlüften die überschüssige Druckluft auf die Luftfedern 610, 612, 614, 616 und den Zusatzspeicher 639 verteilt wurde, liegt an dem Auslass 638 ein vergleichsweise geringer Druck an, so dass das Entlüften der Druckluftversorgungsanlage 600 nicht zu einem Geräuschpegel oberhalb eines vorgegebenen Grenzwertes führt.

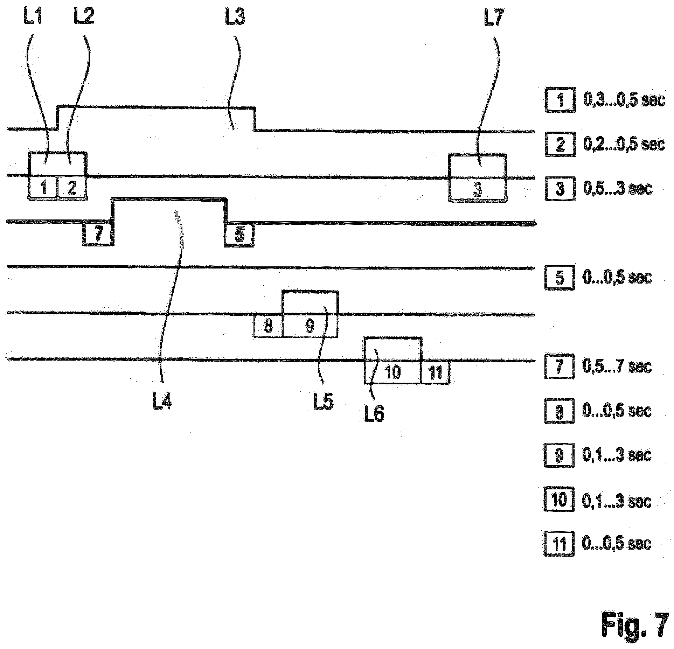

Fig. 7 zeigt ein Logikschaltbild, dass die zeitliche Reihenfolge der Schritte zum Befüllen eines Druckluftreservoirs mittels eines Verdichters angibt. Das Befüllen des Druckluftreservoirs umfasst, das Druckluft aus einem Lufttrockner teilweise in Luftfedern eine Luftfederanlage abgeführt wird. Zunächst wird das Einlassventil für eine Zeitdauer von 0,3 Sekunden bis 0,5 Sekunden geöffnet (Schritt L1), sodass Luft aus der umgebenden Atmosphäre in die Druckluftversorgungsanlage einströmen kann. Das Einlassventil bleibt dann für weitere 0,2 Sekunden bis 0,5 Sekunden geöffnet (Schritt L2). Während dieser Zeitdauer wird der Verdichter aktiviert (Schritt L3), um Luft aus der umgebenden Atmosphäre anzusaugen. Die Schritte L2 und L3 beginnen zeitgleich. Allerdings bleibt der Verdichter aktiviert, auch wenn das Einlassventil wieder geschlossen ist.

Nach dem das Einlassventil für eine Zeitdauer von 0,5 Sekunden bis 7 Sekunden geschlossen ist, wird ein Booster-Ventil aktiviert (Schritt L4), zur Verstärkung der Luftmenge in der Druckluftversorgungsanlage. Während das Booster-Ventil aktiviert ist, bleibt der Verdichter ebenfalls aktiviert. Darüber hinaus bleibt der Verdichter auch noch für ungefähr 0 Sekunden bis 0,5 Sekunden weiterhin aktiviert, nachdem das Booster-Ventil geschlossen wurde. Anschließend wird der Verdichter in den Leerlauf gesetzt. Wenn sich der Verdichter im Leerlauf befindet, wird nach einer Zeitdauer von 0 Sekunden bis 0,5 Sekunden das Luftfederventil derjenigen Luftfeder geöffnet, die sich in Fahrtrichtung des Fahrzeugs links an der Vorderachse befindet (Schritt L5). Das Luftfederventil dieser Luftfeder wird für eine Zeitdauer von 0,1 Sekunden bis 3 Sekunden geöffnet. Die Zeitdauer, für die die Luftfeder mit Druckluft beaufschlagt wird, kann insbesondere eine vordefinierte Zeitdauer sein. Nachdem das Luftfederventil dieser Luftfeder geschlossen wurde, wird zeitlich danach das Luftfederventil derjenigen Luftfeder geöffnet, die sich in Fahrtrichtung des Fahrzeugs rechts an der Vorderachse befindet (Schritt L6). Die an der Vorderachse rechts angeordnete Luftfeder wird für eine Zeitdauer von 0,1 Sekunden bis 3 Sekunden mit Druckluft beaufschlagt.

Die Zeitdauer, für die die beiden Luftfedern der Vorderachse jeweils mit Druckluft beaufschlagt werden, kann unterschiedlich sein.

Gemäß dem hier gezeigten Logikschaltbild werden also lediglich die Luftfedern der Vorderachse des Fahrzeugs mit Druckluft beaufschlagt. Alternativ oder zusätzlich könnten auch die beiden Luftfedern der Hinterachse mit Druckluft beaufschlagt werden. Wiederum alternativ könnten die Luftfedern der Vorderachse und/oder die Luftfedern der Hinterachse zeitgleich, d.h., in Gruppen von zwei Luftfedern, mit Druckluft beaufschlagt werden.

Nachdem das Luftfederventil der an der Vorderachse rechts angeordneten Luftfeder wieder geschlossen wurde, wird nach einer Zeitdauer von 0 Sekunden bis 0,5 Sekunden das Auslassventil der Druckluftversorgungsanlage geöffnet (Schritt L7).

Dadurch, dass Druckluft in die beiden Luftfedern der Vorderachse des Fahrzeugs abgeführt wird, kann die Höhe des Druckes am Auslassventil entsprechend reduziert werden. Ein Entlüften der Druckluftversorgungsanlage ist dann bei einem vergleichsweise geringeren Druck möglich, sodass entsprechend auch der beim Entlüften entstehende Geräuschpegel vergleichsweise geringer ist.

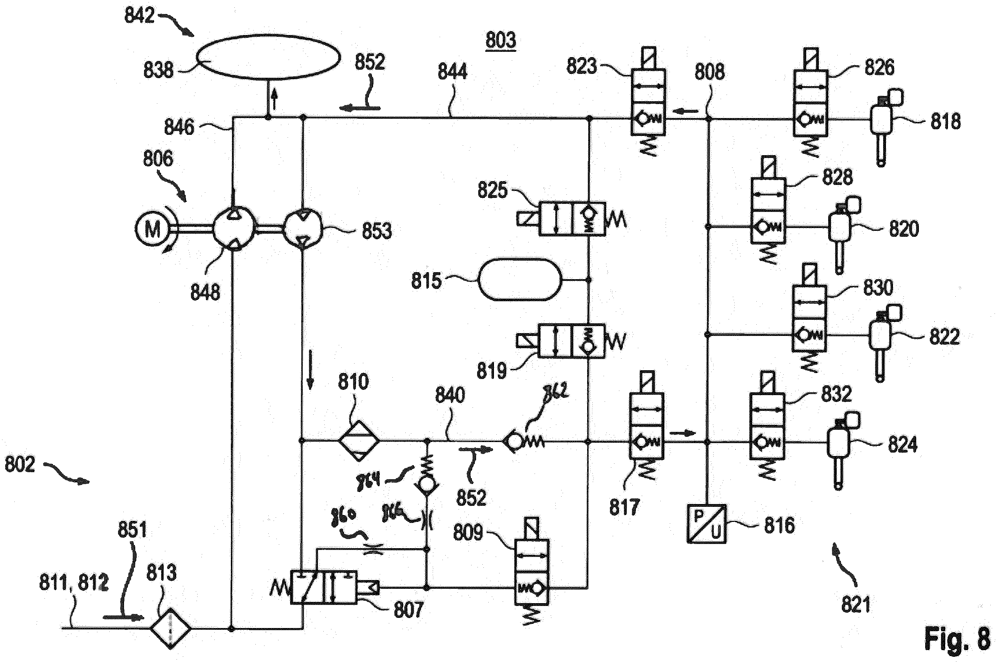

Fig. 8 zeigt schematisch eine mit einer Luftfederanlage 821 pneumatische verbundene Druckluftversorgungsanlage 802, die als geschlossenes System realisiert ist und einen Zusatzspeicher 838 aufweist.

Die Druckluftversorgungsanlage ist Bestandteil eines Fahrzeugs 803.

Die Druckluftversorgungsanlage 802 umfasst einen Einlass 811 und einen Auslass 812 mit einem Filter 813 zum Filtern von angesaugter Luft 850. Zum Ansaugen von Luft 850 umfasst die Druckluftversorgungsanlage 802 einen Verdichter 806. Die Luft 850 wird von dem Verdichter 806 komprimiert und als Druckluft 851 an das Lufttrockner 810 der Druckluftversorgungsanlage 802 weitergeleitet.

Von dem Lufttrockner 810 wird die trockene Druckluft 852 über eine Pneumatikhauptleitung 840 an das Luftverteilermodul 808 weitergeleitet. In der Pneumatikhauptleitung 840 ist ein Rückschlagventil 862 vorgesehen. Die Pneumatikhauptleitung 840 ist weiterhin pneumatisch über ein Rückschlagventil 864 und Drosseln 860, 866 mit einem Relaisventil 807 verbunden. Das Luftverteilermodul 808 umfasst vier Luftfederventile 826, 828, 830, 832. Außerdem umfasst das Luftverteilermodul 808 einen Drucksensor 816 zum Messen einer Höhe des Druckes in dem Luftverteilermodul 808. Über die Luftfederventile 826, 828, 830, 832 ist das Luftverteilermodul 808 jeweils mit den Luftfedern 818, 820, 822, 824 verbunden. Durch Öffnen der Luftfederventile 826, 828, 830, 832 können so die Luftfedern 818, 820, 822, 824 der Luftfederanlage 821 mit Druckluft aus der Druckluftversorgungsanlage 802 beaufschlagt werden, z.B., um das Fahrzeug 803 relativ zum Untergrund anzuheben.

Um Druckluft 852 in das Luftverteilermodul 808 umzuleiten, wird ein vorgeschaltetes Separationsventil 817, das als 2/2-Wege Magnetventil ausgebildet ist, geöffnet.

Zusätzlich oder alternativ könnte die Druckluft 852 auch durch Öffnen eines Reservoirventils 819 in ein Druckluftreservoir 815 der Druckluftversorgungsanlage 802 abgeführt werden.

Druckluft 852, die von dem Luftverteilermodul 808 zurück in Richtung des Auslasses 812 befördert werden soll, durchströmt ein Rückflussventil 823, das ebenfalls als 2/2-Wege Magnetventil ausgebildet ist. Das Rückflussventil 823 durchströmende Druckluft 852 kann über ein Booster-Ventil 825 in das Druckluftreservoir 815 abgeführt werden. Das Rückflussventil 823 durchströmende Druckluft 852 gelangt in ein Verbindungsvolumen 842, das eine pneumatische Rückflüssleitung 844 aufweist, die über das Rückflussventil 823 das Luftverteilermodul 808 und insbesondere dessen Gallerie mit dem Verdichter 806 verbindet. Das Verbindungsvolumen 842 weist weiterhin eine Verdichterleitung 846 auf, die eine erste Verdichtungsstufe 848 des Verdichters 808 mit einer zweiten Verdichtungsstufe 853 des Verdichters 808 pneumatisch verbindet. Das Verbindungsvolumen 840 hat im Betrieb insbesondere den Druck der ersten Verdichterstufe 848, der niedriger ist als der Druck in der übrigen Druckluftversorgungsanlage 802, der nämlich den Druck der zweiten Verdichterstufe 850 hat. Der Druck in dem Lufttrockner 810 kann daher effektiv reduziert werden, indem Druckluft mit dem Druck der zweiten Verdichterstufe 853 in das Verbindungsvolumen 840 abgeführt wird. Das Verbindungsvolumen 840 kann zusätzlich oder alternativ zu einem Abführen von Druckluft in die Luftfedern und/oder in den Verdichter selbst, z.B. in ein Kolbenvolumen des Verdichters, dazu verwendet werden, den Druck im Lufttrockner zu reduzieren.

Das Verbindungsvolumen 842 weist zusätzlich einen Zusatzspeicher 838 auf, in den Druckluft abgeführt werden kann. Durch Abführen der Druckluft 852 in den Zusatzspeicher 838, kann die Höhe des Druckes am Auslass 812 zusätzlich reduziert werden. Zum Entlüften der Druckluftversorgungsanlage 802 umfasst diese weiterhin ein Auslassventil 809 und ein Relaisventil 807, die beide als ein 2/2-Wege Magnetventil ausgebildet sind. Ein Entlüften der Druckluftversorgungsanlage 802 kann dann bei einem vergleichsweise geringeren Druck erfolgen.

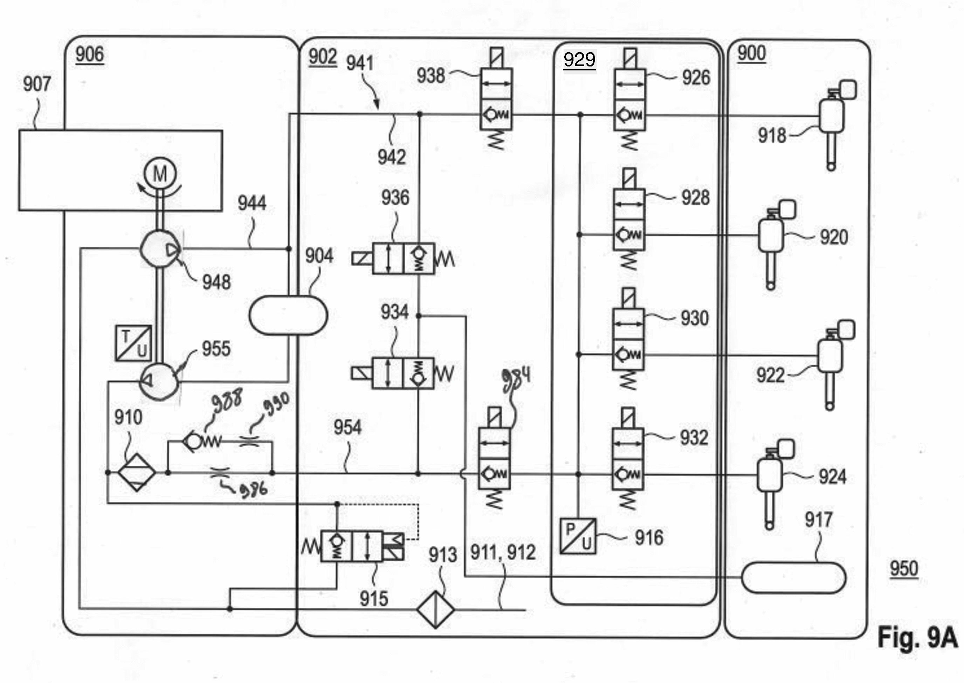

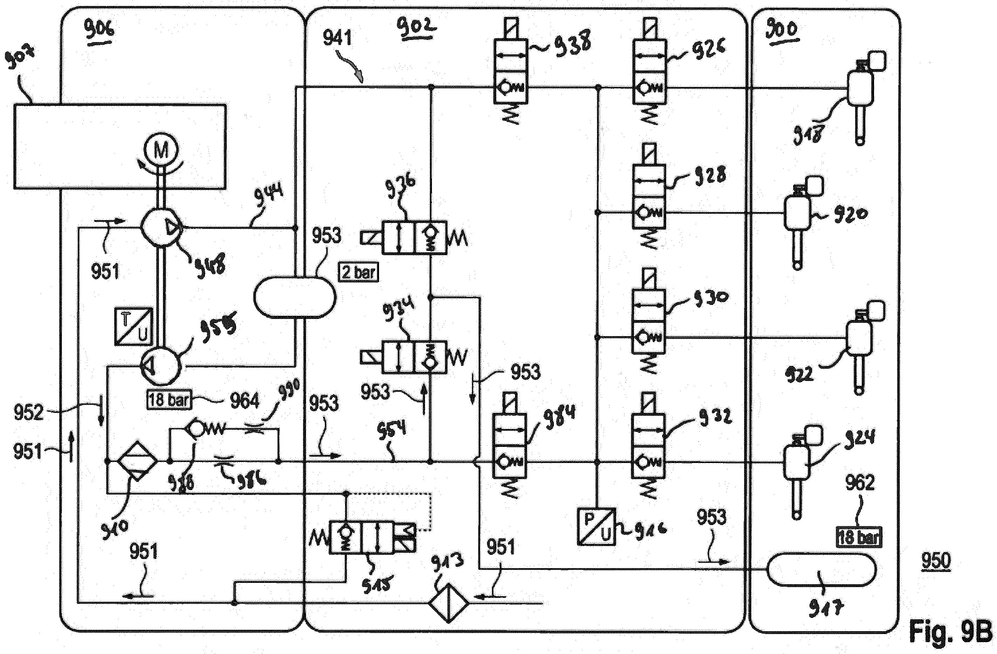

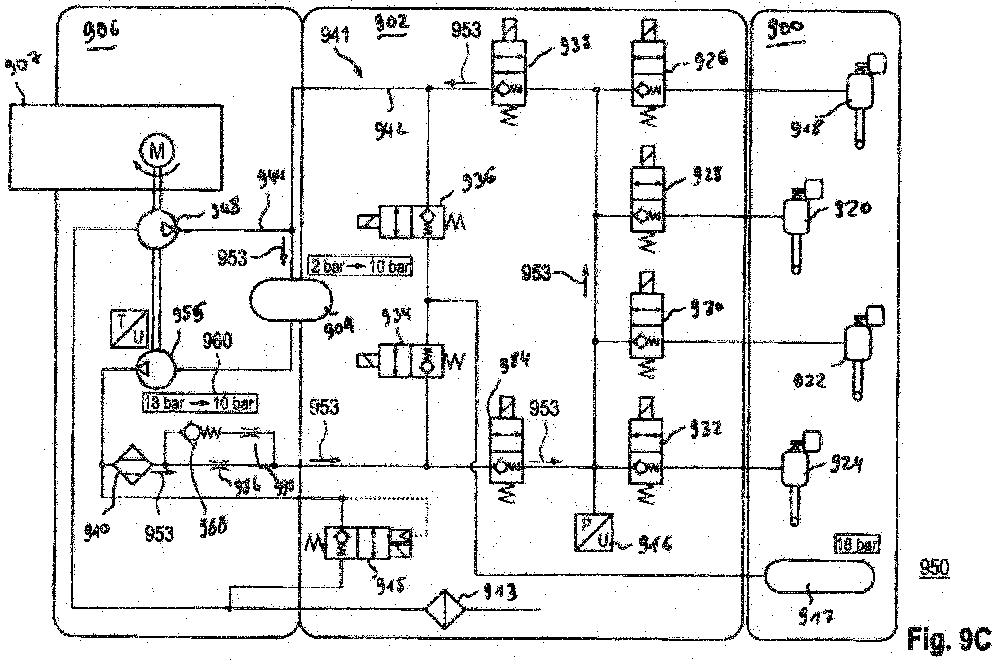

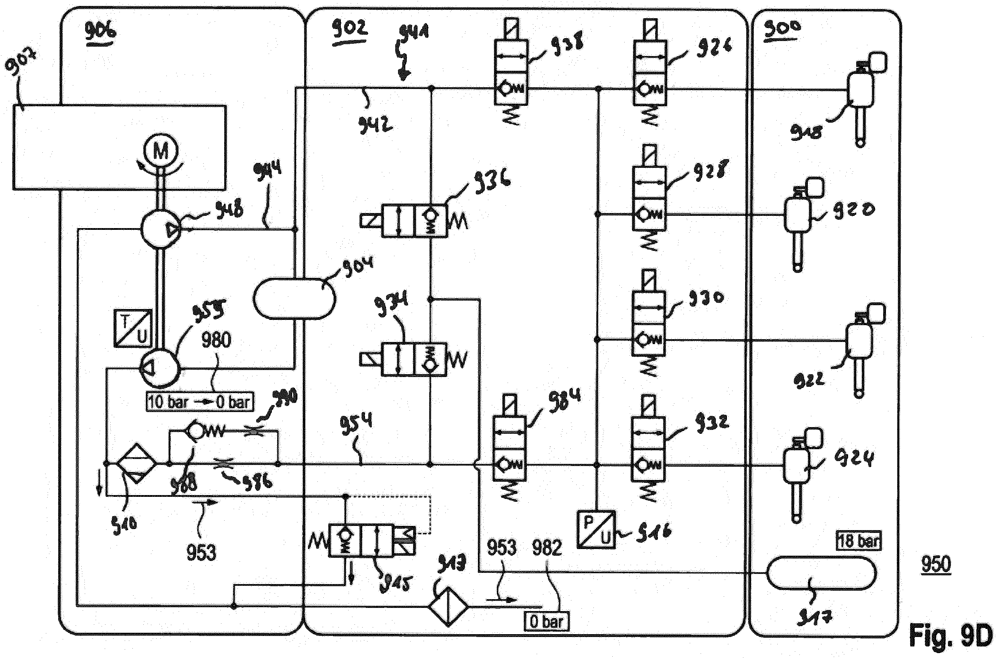

Fig. 9 zeigt schematisch eine mit einer Luftfederanlage 900 pneumatisch verbundene Druckluftversorgungsanlage 902, die als geschlossenes System realisiert ist, und ein Verbindungsvolumen 941 umfassend eine Rückflussleitung 942, einen Zusatzspeicher 904 und eine Verdichterleitung 944 zwischen einer ersten Verdichterstufe 948 und einer zweiten Verdichterstufe 955 eines zweistufigen Verdichters 906 aufweist. Die Rückflussleitung 942 erstreckt sich von einem Rückflussventil 938 bis zu dem Verdichter 906.

Die Druckluftversorgungsanlage 902 umfasst einen Einlass 911 und einen Auslass 912. Weiterhin umfasst die Druckluftversorgungsanlage 902 einen Verdichter 906 mit einem bürstenlosen Gleichstrommotor 907, dem Zusatzspeicher 904, und einem Lufttrockner 910. Über eine Drossel 914 mit einem Durchmesser von 1,2 mm ist das Lufttrockner 910 über eine Pneumatikhauptleitung 954 und einem Separationsventil 984 mit einem Luftverteilermodul 929 verbunden. Die Pneumatikhauptleitung 954 weist zudem eine Drossel 886 auf. Weiterhin ist in die Pneumatikhauptleitung 954 ein Rückschlagventil 988 und eine weitere Drossel 990 integriert. Die Druckluftversorgungsanlage 902 umfasst ein Auslassventil 915, das als 2/2-Wege Magnetventil ausgebildet ist. Die Druckluftversorgungsanlage 902 umfasst weiterhin ein Reservoirventil 934, über das ein Druckluftreservoir 917 mit Druckluft befüllt werden kann. Das Druckluftreservoir 917 kann auch über ein Boost-Ventil 936 mit Druckluft befüllt werden. Die Druckluftversorgungsanlage 902 umfasst weiterhin ein Separationsventil 940, über das trockene Druckluft in ein Luftverteilermodul 929 der Druckluftversorgungsanlage 902 abgeführt werden kann. Um das Luftverteilermodul 902 zu entleeren, wird das Auslassventil 915 der Druckluftversorgungsanlage 902 geöffnet.

Das Luftverteilermodul 929 umfasst vier Luftfederventile 926, 928, 930, 932 über die Druckluft aus der Druckluftversorgungsanlage 902 in die Luftfedern 918, 920, 922, 924 der Luftfederanlage 900 eines Fahrzeugs abgeführt werden kann. Das Luftfedermodul 929 umfasst weiterhin einen Drucksensor 916, mit dem eine Höhe eines Druckes in dem Luftverteilermodul 929 erfasst werden kann.

Um den Druck am Auslass 911 weiter zu reduzieren, kann Druckluft in die Luftfedern 918, 920, 922, 924 und/oder in das Verbindungsvolumen 940abgeführt werden. Das Verbindungsvolumen 940 umfasst weiterhin ein Kolbenvolumen des Verdichters 906, der entsprechend als Kolbenverdichter ausgebildet ist.

Zum Entlüften der Druckluftversorgungsanlage 902 und insbesondere des Lufttrockners 910 und/oder des Luftverteilermoduls 929, werden die Luftfederventile 926, 928, 930, 932 geschlossen und der Verdichter 906 in den Leerlauf gesetzt. Anschließend wird das Auslassventil 915, das als 2/2- Wege Magnetventil ausgebildet ist, geöffnet.

Fig. 9B zeigt schematisch die mit Bezug auf Fig. 9A beschriebene Druckluftversorgungsanlage 902, wobei in der Fig. 9B die Strömungsrichtung von Druckluft durch Pfeile eingezeichnet ist.

Im Betrieb der Druckluftversorgungsanlage 902 wird zunächst durch den Verdichter 906 Luft 951 aus der umgebenden Atmosphäre 950 angesaugt und von dem Verdichter 906 komprimiert. Ein Teil der komprimierten Druckluft wird in das Verbindungsvolumen 940 abgeführt, sodass der Druck in dem Verbindungsvolumen 940 zwei bar beträgt. Die übrige komprimierte Luft wird als Druckluft 952 in das Lufttrockner 910 weitergeleitet. Die von dem Lufttrockner getrocknete Luft wird als trockene Druckluft 953 in das Druckluftreservoir 917 abgeführt. Dafür wird das Reservoirventil 934 geöffnet.

Da der Druck in dem Lufttrockner 910 18 bar beträgt, kann die Druckluftversorgungsanlage 902 nicht entlüftet werden, ohne dass ein Geräuschpegel oberhalb eines kritischen Grenzwertes entsteht.

In Fig. 9C ist schematisch die in Bezug auf Fig. 9A und 9B beschriebene Druckluftversorgungsanlage 902 gezeigt, wobei in der Fig. 9C durch Pfeile die Strömungsrichtung von Druckluft eingezeichnet ist, wenn Druckluft in dem Verbindungsvolumen 940 zwischengespeichert wird, um den Druck am Auslass 911 zu reduzieren.

Da beim Entlüften der Druckluftversorgungsanlage 902 insbesondere der Druck in dem Lufttrockner 910 kritisch ist, wird bevorzugt der Druck in dem Lufttrockner 910 reduziert. Hingegen ist die Höhe des Druckes in dem Druckluftreservoir 917 beim Entlüften in der Regel weniger kritisch.

Entsprechend wird zum Reduzieren des Druckes in dem Lufttrockner 910 das Reservoirventil 934 geschlossen und stattdessen das Separationsventil 940 geöffnet. Trockene Druckluft 953 strömt dann in das Luftverteilermodul 929. Da die Luftfederventile 926, 928, 930, 932 geschlossen sind, werden die Luftfedern 918, 920, 922, 924 nicht mit Druckluft befüllt. Stattdessen wird das Rückflussventil 938 geöffnet, sodass die Druckluft das Luftverteilermodul durchströmt und in das Verbindungsvolumen 940 abgeführt wird.

Das Verbindungsvolumen 940 wird dann mit Druckluft beaufschlagt, sodass in dem hier gezeigten Beispiel die Höhe des Druckes in dem Verbindungsvolumen 940 von 2 bar auf 10 bar steigt. Dadurch sinkt entsprechend der Druck in dem Lufttrockner 910 von 18 bar auf 10 bar und liegt damit unterhalb eines kritischen Grenzwertes, der z.B. 11 bar oder 12 bar betragen kann.

Fig. 9D zeigt schematisch die mit Bezug auf Fig. 9A bis Fig. 9C beschriebene Druckluftversorgungsanlage 900, wobei in der Fig. 9D durch Pfeile die Strömungsrichtung der Druckluft beim Entlüften der Druckluftversorgungsanlage 902 und insbesondere des Lufttrockner 910 eingezeichnet ist. Nach dem Reduzieren der Höhe des Druckes in dem Lufttrockner 910 auf 10 bar durch Beaufschlagen des Verbindungsvolumens 940 mit Druckluft, kann nun die Druckluftversorgungsanlage 902 bei einem vergleichsweise geringeren Druck entlüftet werden.

Zum Entlüften wird das Auslassventil 915 geöffnet, sodass dieses von Druckluft 953 durchströmt werden kann. Durch Entlüften der Druckluftversorgungsanlage 902 sinkt der Druck in dem Lufttrockner 910 entsprechend von 10 bar auf 0 bar, d.h., auf den Druck der umgebenden Atmosphäre 950.

### Bezugszeichenliste [Teil der Beschreibung]

- 1, 1': Verdichteranschluss
- 2, 2': Druckluftversorgungsanschluss
- 3, 3': Auslass
- 50, 50': umgebende Atmosphäre
- 51, 51': angesaugte Luft
- 52, 52': Druckluft
- 53, 53': Druckluft
- 54, 54': Druckluft
- 55, 55': Datenverbindung
- 56, 56': Steuerleitung
- 100, 100': Steuergerät
- 101, 100': Fahrzeug
- 102, 102': Druckluftversorgungsanlage
- 103, 103': Pneumatiksystem
- 106, 106': Verdichter
- 107, 107': Zwischenspeicher108, 108' Luftverteilermodul
- 109, 109': Überdruckvolumen
- 110, 110': Lufttrockner
- 111, 111': Einlassventil
- 112, 112': Auslassventil
- 113, 113': Ausgleichsvolumen
- 116, 116': Drucksensor
- 118, 120, 122, 124, 118', 120', 122', 124': Luftfedern
- 121, 121': Luftfederanlage
- 126, 128, 130, 132, 126', 128', 130', 132': Luftfederventile
- 129: Gallerie
- 131: Pneumatikhauptleitung
- 150: Pneumatiksystem
- 152: Druckluftversorgungsanlage
- 154: Luftfederanlage
- 155: Steuergerät
- 156: Druckluftventil
- 158: Verdichter
- 160: Umgebung
- 162: Luft
- 164: Druckluft
- 166: Lufttrockner
- 168: Pneumatikhauptleitung
- 170: Verdichteranschluss
- 172: Druckluftversorgungsanschluss
- 174: getrocknete Druckluft
- 176: Luftverteilermodul
- 178: Gallerie
- 180: Drucksensor
- 182, 184, 186, 188: Luftfedern
- 190, 192, 194, 196: Luftfederventile
- 198: Rückflussventil
- 200: Rückflussleitung
- 202: Zusatzspeicher
- 204: Überdruckvolumen
- 206: Ausgleichsvolumen
- 208: Zwischenspeicher
- 300: Diagramm
- 302: an die umgebende Atmosphäre abgegebene Druckluft menge
- 304: Druck am Auslass
- 306, 308, 310: Kurven
- 312: Pfeil
- 314: erster Teildruckbereich
- 316: zweiter Teildruckbereich
- 500: Steuergerät
- 502: Druckluftversorgungsanlage
- 503: Fahrzeugs
- 506: Verdichter
- 507: Pneumatikhauptleitung
- 508: Luftverteilermodul
- 510: Lufttrockner
- 511: Einlass
- 512: Auslasses
- 515: Druckluftreservoir
- 516: Drucksensor
- 518, 520, 522, 524: Luftfedern
- 521: Luftfederanlage
- 534: Vorderachse
- 536: Hinterachse
- 550: umgebenden Atmosphäre
- 551: Datenverbindung
- 552: Druckluft
- 552': geringere Druckluftmenge
- 555: Steuerleitung
- 580: Druck derjenigen Luftfeder, die im Vergleich zu den Drücken in den übrigen Luftfedern die geringste Druckdifferenz zu dem Druck in dem Luftverteilermodul aufweist
- 582, 584, 586: übrige Luftfedern
- 600: Druckluftversorgungsanlage
- 602, 604, 606, 608: Luftfederventile
- 610, 612, 614, 616: Luftfedern
- 618: Luftfederanlage
- 620: Luftverteilermodul
- 622: Drucksensor
- 624: Reservoirventil
- 626: Druckluftreservoir
- 627: Gallerie
- 628: Verdichter
- 630: Elektromotor
- 632: Lufttrockner
- 633: Pneumatikhauptleitung
- 634: Relaisventil
- 636: Einlass
- 638: Auslass
- 639: Zusatzspeicher
- 640: Ventil
- 641: Rückschlagventil
- 642, 643: Drossel
- 802: Druckluftversorgungsanlage
- 803: Fahrzeug
- 806: Verdichter
- 808: Luftverteilermodul
- 810: Lufttrockner
- 811: Einlass
- 812: Auslass
- 813: Filter
- 815: Druckluftreservoir
- 816: Drucksensor
- 817: Separationsventil
- 818, 820, 822, 824: Luftfedern
- 819: Reservoirventil
- 821: Luftfederanlage
- 823: Rückflussventil
- 825: Booster-Ventil
- 826, 828, 830, 832: Luftfederventile
- 838: Zusatzspeicher
- 840: Pneumatikhauptleitung
- 842: Verbindungsvolumen
- 844: Rückflüssleitung
- 846: Verdichterleitung
- 848: erste Verdichtungsstufe
- 850: angesaugte Luft
- 851: Druckluft
- 852: Druckluft
- 853: zweite Verdichtungsstufe
- 860: Drossel
- 862: Rückschlagventil
- 864: Rückschlagventil
- 866: Drossel
- 900: Luftfederanlage
- 902: Druckluftversorgungsanlage
- 904: Zusatzspeicher
- 906: Verdichter
- 907: Gleichstrommotor
- 910: Lufttrockner
- 911: Einlass
- 912: Auslass
- 914: Drossel
- 915: Auslassventil
- 916: Drucksensor
- 917: Druckluftreservoir
- 918, 920, 922, 924: Luftfedern
- 929: Luftverteilermodul
- 926, 928, 930, 932: Luftfederventile
- 934: Reservoirventil
- 936: Boost-Ventil
- 938: Rückflussventil
- 940: Separationsventil
- 941: Verbindungsvolumen
- 942: Rückflussleitung
- 944: Verdichterleitung
- 948: ersten Verdichterstufe
- 950: umgebenden Atmosphäre
- 951: Luft
- 952: Druckluft
- 953: trockene Druckluft
- 954: Pneumatikhaupleitung
- 955: zweite Verdichterstufe
- 960: vordefinierter Druckabfall
- 962: Druck in der wenigstens einen Luftfeder
- 964: Höhe des Druckes in dem Luftverteilermodul
- 980: Druck am Auslass
- 982: Druck in der umgebenden Atmosphäre
- 984: Separationsventil
- 886: Drossel
- 988: Rückschlagventil
- 990: Drossel
- S1: Verdichter in den Leerlauf bringen
- S2: Auslassventil schließen
- S3: öffnen der Luftfederventile
- S4: einstellen eines Gleichgewichtsdrucks
- S5: schließen der Luftfederventile
- S6: öffnen des Auslassventils
- T1: Verdichter in den Leerlauf bringen
- T2: Auslassventil schließen
- T3: Druckluftmenge und/oder eine Zeitdauer vorgeben
- T4: erste Luftfeder mit Druckluft beaufschlagen
- T5: zweite Luftfeder mit Druckluft beaufschlagen
- T6: dritte Luftfeder mit Druckluft beaufschlagen
- T7: vierte Luftfeder mit Druckluft beaufschlagen
- T8: erneutes Befüllen der Luftfedern
- T9: aktivieren des Verdichters
- T10: öffnen des Auslassventils
- T11: zwei Luftfedern mit Druckluft befüllen
- T12: die anderen zwei Luftfedern mit Druckluft befüllen
- T13: erneutes Befüllen der Luftfedern
- L1: öffnen des Einlassventils
- L2: offenhalten des Einlassventils
- L3: aktivieren des Verdichters
- L4: aktivieren des Booster-Ventils
- L5: Befüllen einer Luftfeder für eine vordefinierte Zeitdauer
- L6: Befüllen einer Luftfeder für eine vordefinierte Zeitdauer
- L7: öffnen des Auslassventils

## Patentansprüche

1. Verfahren zum Betreiben eines Pneumatiksystems (103, 103', 150) aufweisend eine Druckluftversorgungsanlage (102, 102', 152, 502, 600, 802, 902) und eine mit der Druckluftversorgungsanlage (102, ..., 902) pneumatisch verbundene Luftfederanlage (121, 121', 154, 521, 618, 821, 900) eines Fahrzeuges (101, 101', 503, 803), wobei
- die Druckluftversorgungsanlage (102, ..., 902) eine Pneumatikhauptleitung (168) und einen Lufttrockner (110, 110', 166, 510, 632, 810, 910) in der Pneumatikhauptleitung (168) aufweist, und die Pneumatikhauptleitung (168) einen Verdichteranschluss (1, 170) zu einem Verdichter (106, 106', 158, 506, 628, 806, 906), und einen Druckluftversorgungsanschluss (2, 172) zu einem Luftverteilermodul (108, 108', 176, 508, 808, 929) aufweist, wobei das Luftverteilermodul (108, 108', 176, 508, 808, 929) Bestandteil der Druckluftversorgungsanlage (102, 102', 152, 502, 600, 802, 902) oder der Luftfederanlage (121, 121', 154, 521, 618, 821, 900) ist, und wobei
- die Luftfederanlage eine Anzahl Luftfedern (118, 120, 122, 124, 118', 120', 122', 124',182, 184, 186, 188, 518, 520, 522, 524, 610, 612, 614, 616, 818, 820, 822, 824, 918, 920, 922, 924) aufweist, die über eine Gallerie (129, 178) der Luftfederanlage (121, ..., 900), pneumatisch verbunden sind, und wobei
- das Pneumatiksystem (103, 103, 150') ein Steuergerät (100, 100', 155, 500) zum Steuern der Druckluftversorgungsanlage (102, ..., 902) und der Luftfederanlage (121, ..., 900) aufweist, und wobei in dem Verfahren der Lufttrockner (110, ..., 910) und das Luftverteilermodul (108, ..., 929) ein Überdruckvolumen (109, 109', 204) darstellt, wobei
- das Überdruckvolumen (109, 109', 204) zunächst einen Druck (174) aufweist, der größer ist, als ein Druck in einem übrigen Teil der Druckluftversorgungsanlage (152), nämlich in einem Ausgleichsvolumen (113, 133', 206), aufweisend wenigstens eine erste Luftfeder (118, ..., 924) und einen Zwischenspeicher (107, 107', 208), wobei in dem Verfahren Druckluft (52, 52', 53, 53', 54, 54', 174, 552, 851, 852, 952, 953) aus dem Überdruckvolumen (109, 109', 204) in das Ausgleichsvolumen (113, 133', 206) abgeführt wird unter Druckreduzierung in dem Überdruckvolumen (109, 109', 204), nämlich unter Druckreduzierung in dem Lufttrockner (110, ..., 910) und unter Druckreduzierung in dem Luftverteilermodul (108, ..., 929),
- wobei Druckluft (52, ..., 953) abgeführt wird,
a) in die erste Luftfeder (118, ..., 924) der Luftfederanlage (121, ..., 900) und in den Zwischenspeicher (107, 107', 208),
**dadurch gekennzeichnet, dass** der Zwischenspeicher (107, 107', 208) den Verdichter (106, ..., 906) und ein Verbindungsvolumen (842, 941) umfasst, wobei das Verbindungsvolumen (842, 941) eine pneumatische Rückflussleitung (844, 942) aufweist, die über ein Rückflussventil (823, 938) die Gallerie (129, 627) mit dem Verdichter (106, ..., 906) verbindet.

2. Verfahren nach Anspruch 1, **dadurch gekennzeichnet, dass** das Ausgleichsvolumen (113, 133', 206) die erste Luftfeder (118, ..., 924) und der Zwischenspeicher (107, 107', 208) eine zweite Luftfeder umfasst, und Druckluft zeitlich nacheinander einzeln in die erste Luftfeder (118, ..., 924) und anschließend in die zweite Luftfeder (118, ..., 924) abgeführt wird.

3. Verfahren nach Anspruch 1, **dadurch gekennzeichnet, dass** Druckluft (52, ..., 953) aus dem Überdruckvolumen (109, 109', 204) zeitlich nacheinander in die erste Luftfeder (118, ..., 924) und den Zwischenspeicher (107, 107', 208) beginnend mit dem Zwischenspeicher (107, 107', 208) abgeführt wird.

4. Verfahren nach wenigstens einem der Ansprüche 1 bis 2, **dadurch gekennzeichnet, dass** zunächst die Luftfedern (118, ..., 924) der Luftfederanlage mit Druckluft (52, ..., 953) aus dem Überdruckvolumen (109, 109', 204) beaufschlagt werden und erst nach dem Befüllen der Luftfedern (118, ..., 924) mit Druckluft die restliche Druckluft aus dem Überdruckvolumen (109, 109', 204) in den Zwischenspeicher (107, 107', 208) abgeführt wird.

5. Verfahren nach wenigstens einem der vorstehenden Ansprüche, **dadurch gekennzeichnet, dass** nach der Druckreduzierung in dem Überdruckvolumen (109, 109', 204), die verbliebene Druckluft (52, ..., 953) aus dem Überdruckvolumen (109, 109', 204) wenigstens teilweise durch einen Auslass (112, ..., 912) an die umgebende Atmosphäre (50, ..., 950) abgegeben wird.

6. Verfahren nach wenigstens einem der vorstehenden Ansprüche, **dadurch gekennzeichnet, dass** das Verbindungsvolumen (842, 941) einen Zusatzspeicher (202, 838, 904) umfasst, der pneumatisch mit der Rückflussleitung (844, 942) verbunden ist.

7. Verfahren nach einem der vorstehenden Ansprüche, **dadurch gekennzeichnet, dass** das Ausgleichsvolumen (113, 133', 206) mit Druckluft (52, ..., 953) aus dem Überdruckvolumen (109, 109', 204) beaufschlagt wird, falls mit einem Drucksensor (116, ..., 916) vor der Druckreduzierung im Überdruckvolumen (109, 109', 204) in dem Luftverteilermodul (108, ..., 929) ein Druck (964) gemessen wird, der mehr als 10 bar beträgt, insbesondere mehr als 11 bar beträgt, bevorzugt mehr als 12 bar beträgt, und besonders bevorzugt zwischen 12 bar und 18 bar beträgt.

8. Verfahren nach Anspruch 2, **dadurch gekennzeichnet, dass** die erste und die zweite Luftfeder (118, ..., 924) zeitlich nacheinander einzeln jeweils mit einer vorgegebenen Druckluftmenge (52, ..., 953) und/oder jeweils für eine vordefinierte Zeitdauer (L5, L6) und/oder um einen vordefinierten Druckabfall (960) in dem Luftverteilermodul (108, ..., 929) mit Druckluft (52, ..., 953) aus dem Überdruckvolumen (109, 109', 204) beaufschlagt werden.

9. Verfahren nach Anspruch 8, **dadurch gekennzeichnet, dass** die für die erste und die zweite Luftfeder (118, ..., 924) festgelegte Druckluftmenge (52, ..., 953) und/oder die Zeitdauer (L5, L6) unterschiedlich ist.

10. Verfahren nach wenigstens einem der Ansprüche 8 oder 9, **dadurch gekennzeichnet, dass** die Druckluftmenge (52, ..., 953) und/oder die Zeitdauer (L5, L6) für wenigstens eine der ersten und zweiten Luftfedern (118, ..., 924) auf Basis eines relativen Druckunterschieds (962, 964) zwischen dem Druck (962) der wenigstens ersten und/oder zweiten Luftfeder (118, 120, 122, 124) und des Druckes (964) in dem Lufttrockner (110, ..., 910) und/oder Druck (964) in dem Luftverteilermodul (108, ..., 929) festgelegt wird.

11. Verfahren nach Anspruch 2, **dadurch gekennzeichnet, dass** die erste und zweite Luftfeder (118, ..., 924) zeitlich nacheinander einzeln jeweils auf Basis eines gemessenen Druckabfalls in dem Luftverteilermodul (108, ..., 929), eines bekannten Lufttrocknervolumens, Luftverteilermodulvolumens sowie eines Luftfedervolumens der Luftfedern (118, ..., 924) und/oder eines adaptiv festgelegten Zeitintervalls mit Druckluft (52, ..., 953) aus dem Überdruckvolumen (109, 109', 204) beaufschlagt werden.

12. Verfahren nach wenigstens einem der vorstehenden Ansprüche, **dadurch gekennzeichnet**, die erste Luftfeder (118, ..., 924) einen Druck (580) hat, der im Vergleich zu den Drücken (582, 584, 586) in den übrigen Luftfedern (118, ..., 924) die geringste Druckdifferenz (580, 552) zu dem Druck (552) in dem Luftverteilermodul (108, ..., 929) aufweist.

13. Verfahren nach wenigstens einem der vorstehenden Ansprüche, **dadurch gekennzeichnet, dass** Druckluft (52, ..., 953) aus dem Überdruckvolumen (109, 109', 204) zeitlich nacheinander beginnend mit derjenigen der Luftfedern (118, ..., 924), deren Druck (580) im Vergleich zu den Drücken (582, ... 586) in den übrigen Luftfedern (118, ..., 924) die geringste Druckdifferenz (580, 582) zu dem Druck in dem Luftverteilermodul (108, ..., 929) aufweist, jeweils einzeln in die Luftfedern (118, ..., 924) abgeführt.

14. Verfahren nach Anspruch 13, **dadurch gekennzeichnet, dass** gemäß der anhand der geringsten Druckdifferenz (552, 580, ..., 586) zu dem Druck (552) in dem Luftverteilermodul (108, ..., 929) ermittelten Reihenfolge der Luftfedern (118, ..., 924), die Luftfedern (118, ..., 924) in derselben Reihenfolge erneut zeitlich nacheinander mit einer oder der vorgegebenen Druckluftmenge (52, ..., 953) und/oder jeweils für eine oder die vordefinierte Zeitdauer (L5, L6) und/oder um einen vordefinierten Druckabfall (960) in dem Luftverteilermodul (108, ..., 929) mit Druckluft (52, ..., 953) aus dem Überdruckvolumen (109, 109', 204) beaufschlagt werden.

15. Verfahren nach einem der vorstehenden Ansprüche, **dadurch gekennzeichnet, dass** für die erste Luftfeder (118, ..., 924) und/oder den Zwischenspeicher (107, 107', 208) eine Druckluftmenge (52, ..., 953) individuell vorgegeben und die Druckluftversorgungsanlage (102, ..., 902) von dem Steuergerät (100, 100', 500) so angesteuert wird, dass Druckluft (52, ..., 953) in der jeweils vorgegebenen Druckluftmenge (52, ..., 953) in die erste Luftfeder (118, ..., 924) und/oder den Zwischenspeicher (107, 107', 208) abgeführt wird.

16. Verfahren nach einem der vorstehenden Ansprüche, **dadurch gekennzeichnet, dass** für die erste Luftfeder (118, ..., 924) und/oder den Zwischenspeicher (107, 107', 208) individuell eine Zeitdauer (L5, L6) vorgegeben und die Druckluftversorgungsanlage (102, ..., 902) von dem Steuergerät (100, 100', 500) so angesteuert wird, dass Druckluft (52, ..., 953) für die jeweils vorgegebene Zeitdauer (L5, L6) in die erste Luftfeder (118, ..., 924) und/oder den Zwischenspeicher (107, 107', 208) abgeführt wird.

17. Verfahren nach wenigstens einem der vorstehenden Ansprüche, **dadurch gekennzeichnet, dass** die Druckluftversorgungsanlage (102, ..., 902) von dem Steuergerät (100, 100', 500) so angesteuert wird, dass der Verdichter (106, ..., 906) während eines Entlüftens von Druckluft (52, ..., 953) durch den Auslass (112, ..., 912) einen Teil der Druckluft speichert, so dass Druckluft (52, ..., 953) bei einer vergleichsweise geringeren Druckdifferenz (980, 982) zwischen einem Druck (980) an einem Auslass (112, ..., 912) und einem Druck (982) in der umgebenden Atmosphäre (50, ..., 950) an die umgebende Atmosphäre (50, ..., 950) abgegeben wird.

## Claims

1. Method for operating a pneumatic system (103, 103', 150) having a compressed-air supply system (102, 102', 152, 502, 600, 802, 902) and, pneumatically connected to the compressed-air supply system (102, ..., 902), an air spring system (121, 121', 154, 521, 618, 821, 900) of a vehicle (101, 101', 503, 803), wherein
- the compressed-air supply system (102, ..., 902) has a pneumatic main line (168) and an air dryer (110, 110', 166, 510, 632, 810, 910) in the pneumatic main line (168), and the pneumatic main line (168) has a compressor port (1, 170) to a compressor (106, 106', 158, 506, 628, 806, 906) and has a compressed-air supply port (2, 172) to an air distributor module (108, 108', 176, 508, 808, 929), wherein the air distributor module (108, 108', 176, 508, 808, 929) is part of the compressed-air supply system (102, 102', 152, 502, 600, 802, 902) or the air spring system (121, 121', 154, 521, 618, 821, 900), and wherein
- the air spring system has a number of air springs (118, 120, 122, 124, 118', 120', 122', 124',182, 184, 186, 188, 518, 520, 522, 524, 610, 612, 614, 616, 818, 820, 822, 824, 918, 920, 922, 924) which are pneumatically connected via a gallery (129, 178) of the air spring system (121, ..., 900), and wherein
- the pneumatic system (103, 103, 150') has a control unit (100, 100', 155, 500) for controlling the compressed-air supply system (102, ..., 902) and the air spring system (121, ..., 900), and wherein in the method the air dryer (110, ..., 910) and the air distributor module (108, ..., 929) represent an overpressure volume (109, 109', 204), wherein
- the overpressure volume (109, 109', 204) initially has a pressure (174) greater than a pressure in another part of the compressed-air supply system (152), namely in an equalization volume (113, 133', 206), having at least a first air spring (118, ..., 924) and an intermediate storage (107, 107', 208),
wherein in the method compressed air (52, 52', 53, 53', 54, 54', 174, 552, 851, 852, 952, 953) from the overpressure volume (109, 109', 204) is discharged into the equalization volume (113, 133', 206), reducing pressure in the overpressure volume (109, 109', 204), namely reducing pressure in the air dryer (110, ..., 910) and reducing pressure in the air distributor module (108, ..., 929),
- wherein compressed air (52, ..., 953) is discharged,
a) into the first air spring (118, ..., 924) of the air spring system (121, ..., 900) and into the intermediate storage (107, 107', 208),
**characterized in that** the intermediate storage (107, 107', 208) comprises the compressor (106, ..., 906) and a connecting volume (842, 941), wherein the connecting volume (842, 941) has a pneumatic return line (844, 942) which connects the gallery (129, 627) to the compressor (106, ..., 906) via a check valve (823, 938).

2. Method according to claim 1, **characterized in that** the equalization volume (113, 133', 206) comprises the first air spring (118, ..., 924) and the intermediate storage (107, 107', 208) comprises a second air spring, and compressed air is discharged temporally successively individually into the first air spring (118, ..., 924) and subsequently into the second air spring (118, ..., 924).

3. Method according to claim 1, **characterized in that** compressed air (52, ..., 953) from the overpressure volume (109, 109', 204) is discharged temporally successively into the first air spring (118, ..., 924) and the intermediate storage (107, 107', 208) starting with the intermediate storage (107, 107', 208).

4. Method according to at least one of claims 1 to 2, **characterized in that** compressed air (52, ..., 953) from the overpressure volume (109, 109', 204) is admitted initially to the air springs (118, ..., 924) of the air spring system and, only after the air springs (118, ..., 924) have been filled with compressed air, the remaining compressed air from the overpressure volume (109, 109', 204) is discharged into the intermediate storage (107, 107', 208).

5. Method according to at least one of the preceding claims, **characterized in that** after pressure has been reduced in the overpressure volume (109, 109', 204), the remaining compressed air (52, ..., 953) from the overpressure volume (109, 109', 204) is released at least partially through an outlet (112, ..., 912) to the surrounding atmosphere (50, ..., 950).

6. Method according to at least one of the preceding claims,
**characterized in that** the connecting volume (842, 941) comprises an additional storage (202, 838, 904) which is pneumatically connected to the return line (844, 942).

7. Method according to any of the preceding claims, **characterized in that** compressed air (52, ..., 953) from the overpressure volume (109, 109', 204) is admitted to the equalization volume (113, 133', 206) if before pressure has been reduced in the overpressure volume (109, 109', 204) a pressure sensor (116, ..., 916) measures a pressure (964) in the air distributor module (108, ..., 929) which is more than 10 bar, in particular more than 11 bar, preferably more than 12 bar, and particularly preferably between 12 bar and 18 bar.

8. Method according to claim 2, **characterized in that** a specified compressed-air quantity (52, ..., 953) is admitted temporally successively individually to each of the first and the second air spring (118, ..., 924) and/or compressed air (52, ..., 953) from the overpressure volume (109, 109', 204) is admitted to each thereof for a predefined time period (L5, L6) and/or at a predefined pressure drop (960) in the air distributor module (108, ..., 929).

9. Method according to claim 8, **characterized in that** the time period (L5, L6) and/or the compressed-air quantity (52, ..., 953) established for the first and the second air spring (118, ..., 924) is different.

10. Method according to at least one of claims 8 or 9, **characterized in that** the compressed-air quantity (52, ..., 953) and/or the time period (L5, L6) for at least one of the first and second air springs (118, ..., 924) is established on the basis of a relative pressure difference (962, 964) between the pressure (962) of the at least first and/or second air spring (118, 120, 122, 124) and the pressure (964) in the air dryer (110, ..., 910) and/or pressure (964) in the air distributor module (108, ..., 929).

11. Method according to claim 2, **characterized in that** compressed air (52, ..., 953) from the overpressure volume (109, 109', 204) is admitted temporally successively individually to each of the first and the second air spring (118, ..., 924) on the basis of a measured pressure drop in the air distributor module (108, ..., 929), of a known air dryer volume, of an air distributor module volume, and of an air spring volume of the air springs (118, ..., 924) and/or of an adaptively established time interval.

12. Method according to at least one of the preceding claims,
**characterized in that** the first air spring (118, ..., 924) has a pressure (580) which in comparison with the pressures (582, 584, 586) in the other air springs (118, ..., 924) has the smallest pressure difference (580, 552) from the pressure (552) in the air distributor module (108, ..., 929).

13. Method according to at least one of the preceding claims,
**characterized in that** compressed air (52, ..., 953) from the overpressure volume (109, 109', 204) is discharged temporally successively individually into each of the air springs (118, ..., 924) beginning with the air spring (118, ..., 924) the pressure (580) of which in comparison with the pressures (582, ... 586) in the other air springs (118, ..., 924) has the smallest pressure difference (580, 582) from the pressure in the air distributor module (108, ..., 929).

14. Method according to claim 13, **characterized in that** according to the sequence of the air springs (118, ..., 924) that was ascertained using the smallest pressure difference (552, 580, ..., 586) from the pressure (552) in the air distributor module (108, ..., 929), compressed air (52, ..., 953) from the overpressure volume (109, 109', 204) is admitted to the air springs (118, ..., 924) again in the same sequence temporally successively in a or the specified compressed-air quantity (52, ..., 953) and/or to each thereof for a or the predefined time period (L5, L6) and/or at a predefined pressure drop (960) in the air distributor module (108, ..., 929).

15. Method according to any of the preceding claims, **characterized in that** for the first air spring (118, ..., 924) and/or the intermediate storage (107, 107', 208) a compressed-air quantity (52, ..., 953) is individually specified and the compressed-air supply system (102, ..., 902) is actuated by the control unit (100, 100', 500) such that compressed air (52, ..., 953) is discharged into the first air spring (118, ..., 924) and/or the intermediate storage (107, 107', 208) at the respectively specified compressed-air quantity (52, ..., 953).

16. Method according to any of the preceding claims, **characterized in that** for the first air spring (118, ..., 924) and/or the intermediate storage (107, 107', 208) a time period (L5, L6) is individually specified and the compressed-air supply system (102, ..., 902) is actuated by the control unit (100, 100', 500) such that compressed air (52, ..., 953) is discharged into the first air spring (118, ..., 924) and/or the intermediate storage (107, 107', 208) for the respectively specified time period (L5, L6).

17. Method according to at least one of the preceding claims,
**characterized in that** the compressed-air supply system (102, ..., 902) is actuated by the control unit (100, 100', 500) such that the compressor (106, ..., 906) stores a portion of the compressed air while compressed air (52, ..., 953) is vented through the outlet (112, ..., 912), such that compressed air (52, ..., 953) is released to the surrounding atmosphere (50, ..., 950) at a comparatively lower pressure difference (980, 982) between a pressure (980) at an outlet (112, ..., 912) and a pressure (982) in the surrounding atmosphere (50, ..., 950).

## Revendications

1. Procédé permettant de faire fonctionner un système pneumatique (103, 103', 150) présentant une installation d'alimentation en air comprimé (102, 102', 152, 502, 600, 802, 902) et une installation de suspension pneumatique (121, 121', 154, 521, 618, 821, 900), reliée pneumatiquement à l'installation d'alimentation en air comprimé (102, ..., 902), d'un véhicule (101, 101', 503, 803), dans lequel
- l'installation d'alimentation en air comprimé (102, ..., 902) présente une conduite pneumatique principale (168) et un dessiccateur d'air (110, 110', 166, 510, 632, 810, 910) dans la conduite pneumatique principale (168), et la conduite pneumatique principale (168) présente un raccord de compresseur (1, 170) vers un compresseur (106, 106', 158, 506, 628, 806, 906), et un raccord d'alimentation en air comprimé (2, 172) vers un module de distribution d'air (108, 108', 176, 508, 808, 929), dans lequel le module de distribution d'air (108, 108', 176, 508, 808, 929) fait partie intégrante de l'installation d'alimentation en air comprimé (102, 102', 152, 502, 600, 802, 902) ou de l'installation de suspension pneumatique (121, 121', 154, 521, 618, 821, 900), et dans lequel
- l'installation de suspension pneumatique présente un certain nombre de ressorts pneumatiques (118, 120, 122, 124, 118', 120', 122', 124',182, 184, 186, 188, 518, 520, 522, 524, 610, 612, 614, 616, 818, 820, 822, 824, 918, 920, 922, 924) qui sont reliés pneumatiquement par l'intermédiaire d'une galerie (129, 178) de l'installation de suspension pneumatique (121, ..., 900), et dans lequel
- le système pneumatique (103, 103, 150') présente un appareil de commande (100, 100', 155, 500) permettant de commander l'installation d'alimentation en air comprimé (102, ..., 902) et l'installation de suspension pneumatique (121, ..., 900), et dans lequel le dessiccateur d'air (110, ..., 910) et le module de distribution d'air (108, ..., 929) constituent un volume de surpression (109, 109', 204) dans le procédé, dans lequel
- le volume de surpression (109, 109', 204) présente tout d'abord une pression (174) qui est supérieure à une pression dans une autre partie de l'installation d'alimentation en air comprimé (152), à savoir dans un volume de compensation (113, 133', 206), présentant au moins un premier ressort pneumatique (118, ..., 924) et un réservoir intermédiaire (107, 107', 208),
dans lequel, dans le procédé, de l'air comprimé (52, 52', 53, 53', 54, 54', 174, 552, 851, 852, 952, 953) est évacué à partir du volume de surpression (109, 109', 204) dans le volume de compensation (113, 133', 206) avec une réduction de pression dans le volume de surpression (109, 109', 204), à savoir avec une réduction de pression dans le dessiccateur d'air (110, ..., 910) et avec une réduction de pression dans le module de distribution d'air (108, ..., 929),
- dans lequel l'air comprimé (52, ..., 953) est évacué,
a) dans le premier ressort pneumatique (118, ..., 924) de l'installation de suspension pneumatique (121, ..., 900) et dans le réservoir intermédiaire (107, 107', 208),
**caractérisé en ce que** le réservoir intermédiaire (107, 107', 208) comprend le compresseur (106, ..., 906) et un volume de liaison (842, 941), dans lequel le volume de liaison (842, 941) présente une conduite de reflux (844, 942) pneumatique qui, par l'intermédiaire d'une soupape de reflux (823, 938), relie la galerie (129, 627) au compresseur (106, ..., 906).

2. Procédé selon la revendication 1, **caractérisé en ce que** le volume de compensation (113, 133', 206) comprend le premier ressort pneumatique (118, ..., 924) et le réservoir intermédiaire (107, 107', 208) comprend un second ressort pneumatique, et l'air comprimé est évacué individuellement de manière successive dans le temps dans le premier ressort pneumatique (118, ..., 924), puis dans le second ressort pneumatique (118, ..., 924).

3. Procédé selon la revendication 1, **caractérisé en ce que** l'air comprimé (52, ..., 953) provenant du volume de surpression (109, 109', 204) est évacué de manière successive dans le temps dans le premier ressort pneumatique (118, ..., 924) et le réservoir intermédiaire (107, 107', 208), en commençant par le réservoir intermédiaire (107, 107', 208).

4. Procédé selon au moins l'une des revendications 1 à 2,
**caractérisé en ce que** les ressorts pneumatiques (118, ..., 924) de l'installation de suspension pneumatique sont tout d'abord alimentés en air comprimé (52, ..., 953) provenant du volume de surpression (109, 109', 204) et ce n'est qu'après le remplissage des ressorts pneumatiques (118, ..., 924) avec de l'air comprimé que l'air comprimé restant provenant du volume de surpression (109, 109', 204) est évacué dans le réservoir intermédiaire (107, 107', 208).

5. Procédé selon au moins l'une des revendications précédentes,
**caractérisé en ce qu'**après la réduction de pression dans le volume de surpression (109, 109', 204), l'air comprimé (52, ..., 953) restant est transmis au moins partiellement, à travers une sortie (112, ..., 912), du volume de surpression (109, 109', 204) à l'atmosphère environnante (50, ..., 950).

6. Procédé selon au moins l'une des revendications précédentes,
**caractérisé en ce que** le volume de liaison (842, 941) comprend un réservoir supplémentaire (202, 838, 904) qui est relié pneumatiquement à la conduite de reflux (844, 942).

7. Procédé selon l'une des revendications précédentes,
**caractérisé en ce que** le volume de compensation (113, 133', 206) est alimenté en air comprimé (52, ..., 953) provenant du volume de surpression (109, 109', 204), dans le cas où un capteur de pression (116, ..., 916) mesure, avant la réduction de pression dans le volume de surpression (109, 109', 204), une pression (964) dans le module de distribution d'air (108, ..., 929) qui est supérieure à 10 bar, en particulier supérieure à 11 bar, de préférence supérieure à 12 bar, et de manière particulièrement préférée comprise entre 12 bar et 18 bar.

8. Procédé selon la revendication 2, **caractérisé en ce que** les premier et second ressorts pneumatiques (118, ..., 924) sont alimentés individuellement, de manière successive dans le temps, en air comprimé (52, ..., 953) provenant du volume de surpression (109, 109', 204) respectivement avec une quantité d'air comprimé (52, ..., 953) prédéfinie et/ou respectivement pendant une durée prédéfinie (L5, L6) et/ou pour obtenir une chute de pression prédéfinie (960) dans le module de distribution d'air (108, ..., 929).

9. Procédé selon la revendication 8, **caractérisé en ce que** la quantité d'air comprimé (52, ..., 953) et/ou la durée (L5, L6) déterminées pour les premier et second ressorts pneumatiques (118, ..., 924) sont différentes.

10. Procédé selon au moins l'une des revendications 8 ou 9,
**caractérisé en ce que** la quantité d'air comprimé (52, ..., 953) et/ou la durée (L5, L6) pour au moins l'un des premier et second ressorts pneumatiques (118, ..., 924) sont déterminées sur la base d'une différence de pression relative (962, 964) entre la pression (962) de l'au moins un premier et/ou second ressort pneumatique (118, 120, 122, 124) et de la pression (964) dans le dessiccateur d'air (110, ..., 910) et/ou de la pression (964) dans le module de distribution d'air (108, ..., 929).

11. Procédé selon la revendication 2, **caractérisé en ce que** les premier et second ressorts pneumatiques (118, ..., 924) sont alimentés individuellement, de manière successive dans le temps, en air comprimé (52, ..., 953) provenant du volume de surpression (109, 109', 204), respectivement sur la base d'une chute de pression mesurée dans le module de distribution d'air (108, ..., 929), d'un volume de dessiccateur d'air connu, d'un volume de module de distribution d'air ainsi que d'un volume de ressort pneumatique des ressorts pneumatiques (118, ..., 924) et/ou d'un intervalle de temps déterminé de manière adaptative.

12. Procédé selon au moins l'une des revendications précédentes, **caractérisé en ce que** le premier ressort pneumatique (118, ..., 924) possède une pression (580) qui, par comparaison avec les pressions (582, 584, 586) dans les autres ressorts pneumatiques (118, ..., 924), présente la différence de pression la plus faible (580, 552) par rapport à la pression (552) dans le module de distribution d'air (108, ..., 929).

13. Procédé selon au moins l'une des revendications précédentes, **caractérisé en ce que** de l'air comprimé (52, ..., 953) provenant du volume de surpression (109, 109', 204) est évacué de manière successive dans le temps, en commençant par celui des ressorts pneumatiques (118, ..., 924) dont la pression (580) présente, par comparaison avec les pressions (582, ..., 586) dans les autres ressorts pneumatiques (118, ..., 924), la différence de pression la plus faible (580, 582) par rapport à la pression dans le module de distribution d'air (108, ..., 929), respectivement individuellement dans les ressorts pneumatiques (118, ..., 924).

14. Procédé selon la revendication 13, **caractérisé en ce que,** conformément à l'ordre des ressorts pneumatiques (118, ..., 924) déterminé à partir de la différence de pression la plus faible (552, 580, ..., 586) par rapport à la pression (552) dans le module de distribution d'air (108, ..., 929), les ressorts pneumatiques (118, ..., 924) sont à nouveau alimentés dans le même ordre, de manière successive dans le temps, en air comprimé (52, ..., 953) provenant du volume de surpression (109, 109', 204) avec une ou la quantité d'air comprimé (52, ..., 953) prédéfinie et/ou respectivement pendant une ou la durée prédéfinie (L5, L6) et/ou pour obtenir une chute de pression prédéfinie (960) dans le module de distribution d'air (108, ..., 929).

15. Procédé selon l'une des revendications précédentes, **caractérisé en ce que,** pour le premier ressort pneumatique (118, ..., 924) et/ou le réservoir intermédiaire (107, 107', 208), une quantité d'air comprimé (52, ..., 953) est prédéfinie individuellement et l'installation d'alimentation en air comprimé (102, ..., 902) est commandée par l'appareil de commande (100, 100', 500) de telle sorte que l'air comprimé (52, ..., 953) est évacué, suivant la quantité d'air comprimé (52, ..., 953) respectivement prédéfinie, dans le premier ressort pneumatique (118, ..., 924) et/ou le réservoir intermédiaire (107, 107', 208).

16. Procédé selon l'une des revendications précédentes,
**caractérisé en ce qu'**une durée (L5, L6) est prédéfinie individuellement pour le premier ressort pneumatique (118, ..., 924) et/ou le réservoir intermédiaire (107, 107', 208) **et en ce que** l'installation d'alimentation en air comprimé (102, ..., 902) est commandée par l'appareil de commande (100, 100', 500) de telle sorte que de l'air comprimé (52, ..., 953) est évacué dans le premier ressort pneumatique (118, ..., 924) et/ou le réservoir intermédiaire (107, 107', 208) pendant la durée respectivement prédéfinie (L5, L6).

17. Procédé selon au moins l'une des revendications précédentes, **caractérisé en ce que** l'installation d'alimentation en air comprimé (102, ..., 902) est commandée par l'appareil de commande (100, 100', 500) de telle sorte que le compresseur (106, ..., 906) stocke une partie de l'air comprimé pendant une purge d'air comprimé (52, ..., 953) à travers la sortie (112, ..., 912), de sorte que l'air comprimé (52, ..., 953) est évacué vers l'atmosphère environnante (50, ..., 950) dans le cas d'une différence de pression (980, 982) relativement faible entre une pression (980) au niveau d'une sortie (112, ..., 912) et une pression (982) dans l'atmosphère environnante (50, ..., 950).
